# EUROPEAN PATENT SPECIFICATION

(11) **EP 0 735 050 B1**
(45) Date of publication and mention of the grant of the patent: **25.09.2002**
(21) Application number: 96302311.4
(22) Date of filing: 01.04.1996
(51) Int. Cl.: C08B 37/10, A61K 31/727

(54) **Compositions for inhibiting thrombogenesis**
Zusammensetzung zur Hemmung der Thromboseentstehung
Compositions pour inhibiter la thrombogénèse

(30) Priority: 31.03.1995 US 412332; 07.06.1995 US 485872; 06.10.1995 US 540324
(43) Date of publication of application: 02.10.1996
(73) Proprietor: HAMILTON CIVIC HOSPITALS RESEARCH DEVELOPMENT, INC., Hamilton, Ontario L8V 1C3 (CA)
(72) Inventor: Weitz, Jeffrey I., Ancaster, L6G 2LI (CA); Hirsh, Jack, Hamilton, Ontario, L8P 4GS (CA); Young, Edward, Oakville, Ontario, L6J 2P1 (CA)
(74) Representative: Williams, Richard Andrew Norman

(56) References cited:
- EP-A- 0 287 477
- EP-A- 0 355 905
- WO-A-90/01501
- WO-A-92/02232
- THROMBOSIS RESEARCH, vol. 35, no. 6, 1984, pages 613-625, XP002017723 J.F. CADE ET AL. : "A comparison of the antithrombotic and haemorrhagic effects of low molecular weight heparin fractions : the influence of the method of preparation."

## Description

### FIELD OF THE INVENTION

The present invention relates generally to compositions and methods for the treatment of cardiovascular disease. More particularly, the present invention relates to modifying thrombus formation and growth by administering an agent capable of selectively inactivating thrombin which is bound either to fibrin in a clot or to some other surface, but which has only minimal inhibitory activity against free thrombin, *i.e.,* fluid-phase thrombin. The invention also relates to products referred to as "HCII-specific catalytic agents", which *inter alia* activate HCII mediated inhibition of thrombin. The activity of the HCII-specific catalytic agents of the present invention allows them to inactivate fibrin-bound thrombin in a patient at concentrations which produce minimal inactivation of free thrombin, thereby diminishing the risk of bleeding. This is a surprising property of the HCII-specific catalytic agents of the present invention since other anticoagulants typically have either a reduced ability to inactivate fibrin-bound thrombin compared to free thrombin (*e.g.,* heparin, dermatan sulphate and low molecular weight heparins), or a substantially equal ability to inactivate fibrin-bound thrombin and free thrombin (*e.g.,* hirudin and its derivatives, and inhibitors of the active site thrombin inhibitors).

### BACKGROUND OF THE INVENTION

Thrombosis is a pathological manifestation of the clotting cascade in blood vessels. The clotting cascade is a complex biological process which results in the formation of a clot or thrombus composed of platelets and fibrin. Thrombin is bound to fibrin in the clot where it is catalytically active and able to amplify its production over 1000-fold by activating clotting factors in the surrounding blood. The ability of blood to generate thrombin is fundamental to the prevention of excessive bleeding at wound sites (hemostasis). Thrombin is important in hemostasis because it stimulates platelet aggregation and fibrin formation when a blood vessel is severed. Therefore, an ideal anti-thrombin would be an agent which can pacify the clot by inactivating fibrin-bound thrombin at concentrations which do not produce abnormal bleeding resulting from inhibition of thrombin production in the general circulation.

Thrombosis, which can complicate atherosclerosis, can cause partial or total occlusion of the affected blood vessel, thereby leading to a number of important cardiovascular complications, including unstable angina, acute myocardial infarction (heart attack), cerebral vascular accidents (stroke), pulmonary embolism, deep vein thrombosis and arterial thrombosis. Such diseases are a major cause of disability and mortality throughout the world, but particularly in Western societies. Moreover, thrombin and, in particular, surface-bound thrombin play a role in thrombus formation in cardiac bypass circuits, after angioplasty and during and after thrombolytic therapy for acute myocardial infarction. Therefore, patients undergoing these procedures must be treated with very high doses of heparin to prevent thrombosis. Although these high doses of heparin may effectively prevent clotting, they can give rise to serious bleeding complications.

The clot or thrombus, which forms as a result of activation of the clotting cascade, contains fibrin, platelets and numerous other blood components. Thrombin bound to fibrin remains active and causes growth of the clot by continued cleavage of fibrinogen and activation of platelets and other coagulation factors, such as factor V and factor VIII. Moreover, unlike free thrombin which is readily inactivated by naturally occurring anti-thrombins (*e.g.*, antithrombin III (ATIII)), clot-bound thrombin is protected from inactivation. As a result, the clot acts as a reservoir for active thrombin which triggers further clot growth. In addition, thrombin also induces smooth cell proliferation and, thus, may be involved in proliferative responses, such as graft-induced atherosclerosis and restenosis after angioplasty or atherectomy.

Because thrombin is critical to thrombus formation, the use of thrombin inhibitors for treating thrombosis and thrombotic complications has long been proposed. A number of partially effective inhibitors have been in use for years. Heparin, for example, can be used as an anticoagulant and antithrombin agent to inhibit fibrin formation, platelet aggregation and thrombus formation. Heparin, however, has a number of limitations. For example, it has biophysical limitations because it acts as an anticoagulant by catalyzing ATIII and, thus, it is relatively ineffective at inactivating fibrin-bound thrombin at safe doses, thereby allowing the continued growth of thrombus mediated by thrombin bound to fibrin in the pre-existing thrombus. In addition, the doses required to produce an anti-thrombotic effect are quite unpredictable and, therefore, the dosage must be monitored closely. Low molecular weight heparins (LMWH) can also be used as anticoagulants and anti-thrombin agents to inhibit fibrin formation, platelet aggregation and thrombus formation. LMWHs act by catalyzing ATIII and, as such, have the same biophysical limitations as heparin. However, LMWHs produce a more predictable anticoagulant effect than heparin. Thus, both heparin and LMWH have the limitation of not readily inactivating surface-bound thrombin. The consequences of this are (a) high concentrations are needed to achieve an anti-thrombin effect which can lead to excessive bleeding, and (b) once the agents are cleared from the circulation, the surface-bound thrombin can reactivate clotting.

Inactivation of clot-bound thrombin may be achieved with another set of compounds known as the direct thrombin inhibitors. Such inhibitors include hirudin and its derivatives, and inhibitors of the active site of thrombin, such as argatroban and PPACK (D-phenylalanyl-L-propyl-L-arginyl chloromethyl ketone). Hirudin is an antithrombin substance extracted from the salivary glands of leeches. Related compounds include hirulog which is a small, synthetic analog of hirudin. While these drugs are able to inhibit clot-bound thrombin, they have the following limitations. First, they do not typically inactivate clot-bound thrombin selectively, but do so at the same concentrations which are required to inhibit free thrombin. Secondly, the inactivation of thrombin is generally stoichiometric and, thus, unless very high concentrations are used, the inhibitory effect can be overcome by the large amounts of thrombin that are generated at sites where surface-bound thrombin accumulates (*e.g.*, on bypass circuits, or at sites of arterial or venous thrombosis). As a result of the above two limitations, high concentrations of direct thrombin inhibitors (*e.g.*, hirudin) must typically be administered to interact with and inhibit the free thrombin generated by clot-bound thrombin. Such high inhibitor concentrations can, however, cause unwanted bleeding. Moreover, direct thrombin inhibitors (*e.g.,* hirudin, its analogs and LMW active site thrombin inhibitors, such as argatroban) are generally reversible and, thus, the inhibitory effect is lost when the drugs are cleared from the blood. Unfortunately, this reversible inhibition can lead to rebound activation of coagulation.

In addition, inactivation of clot-bound thrombin may be achieved with a third class of compounds which bind reversibly or irreversibly to the active, *i.e.,* catalytic, site of thrombin. PPACK is an example of an irreversible active site inhibitor. Such inhibitors, however, generally lack sufficient specificity for thrombin and, thus, have questionable safety. Moreover, such inhibitors have the same limitation as hirudin in that they typically have equal activity against clot-bound and free thrombin. This is problematic because evidence indicates that total inhibition of free thrombin using irreversible active site inhibitors may lead to excessive bleeding.

For the foregoing reasons, there is a need for improved compositions and methods that are useful, for example, for inhibiting thrombogenesis associated with cardiovascular disease. In particular, it would be desirable to provide compositions and methods capable of reducing or eliminating fibrin-bound thrombin activity from existing thrombi within the vascular system. Such elimination or reduction of clot-bound thrombin should be essentially irreversible so that clot accretion will not substantially resume after administration of the treating agent is stopped. As such, compositions and methods are needed which are able to inactivate thrombin within the clot or thrombus with an agent that does not strongly inactivate free thrombin, since such an agent would not adversely affect bleeding control (hemostasis). The present invention fulfills these and other needs.

Hirudin derivatives for blocking the active site of thrombin are described in U.S. Patent Nos. 5,240,913 and 5,196,404. A bifunctional antithrombotic composition which includes both a glycoprotein IIb/IIIa inhibitory domain and a thrombin inhibitory domain is described in WO 92/10575. Peptide analogs of glycoprotein IIIa for thrombogenesis inhibition are described in WO 90/00178. Inhibitors of factor X and/or Xa are described in U.S. Patent Nos. 5,239,058 and 5,189,019, and PCT publications WO 93/09803, WO 92/04378 and WO 92/01464. Inhibitors of factors VII and/or VIII are described in U.S. Patent Nos. 5,223,427 and 5,023,236 and WO 92/06711. Platelet anti-adhesives and related antibodies are described in WO 92/08472. For a review of the structure and function of thrombin, *see*, Stubbs and Bode, *Thrombosis Research* 69:1-58 (1993). For a review of the limitations of heparin and the potential advantages of new anticoagulants as antithrombotics, *see,* Hirsh, *Circ.* 88:I-C (1993).

In addition, numerous modified heparin compositions, as well as other glycosaminoglycans and their derivatives, have been developed. For example, U.S. Patent Nos. 5,296,471, 5,280,016 and 5,314,876 describe the desulphation of heparin, periodate oxidation of heparin/heparan sulphates followed by reduction of resulting aldehyde groups, and high molecular mass *N*,*O*-sulphated heparosans, respectively. Low molecular weight heparin fractions have been used for several years (*see,* Boneu, *et al.*, *Thrombosis Research* 40:81-89 (1985)). More recently, various dermatan sulphates have been developed and their interactions with heparin cofactor II studied (*see,* Mascellani, *et al., Thrombosis Research* 74:605-615 (1994), and Sheehan, *et al., J*. *Biol. Chem.* 289:32747-32751 (1994)).

WO92/02232 (Kabi Pharmacia) discloses LMWH fragments produced by a process not involving periodate oxidation and this results in fragments in which there is no cleavage between carbon atoms 2 and 3 of the non-sulphated uronic acids. Where a periodate oxidation process is used then depolymerization takes place subsequently resulting in LMWH fragments having as their end groups a non-native, non reducing group at one end and a native reducing sugar at the other end.

WO90/01501 (Linhardt & Weiler) discloses LMWH fragments produced by a process substantially the same as disclosed in WO92/02232 above. Such fragments are not disclosed as having the capability of selectively inactivating bound thrombin in preference to free thrombin.

EP-A-0287447 (Sanofi) discloses LMWH fragments produced using a process which as a first step requires oxidation rather than depolymerization. As a result fragments have a non-native non-reducing group at one end and a native reducing sugar at the other end.

EP-A-0355905 (Akzo) discloses antithrombotic heparin fragments and fractions having anti-HIV activity. The processes used to produce the fragments are similar to those described in the three documents referred to above resulting in fragments wherein one end will be a non-native reducing group and the other end will be a native reducing group.

### SUMMARY OF THE INVENTION

The present invention provides a heparin cofactor II-specific (HCII-specific) catalytic agent that inactivates clot-bound thrombin, characterized by:
(i) a specific activity against thrombin (factor IIa) of about 2.0 to about 5.0 units/mg in an anti-factor IIa assay;
(ii) specific activity against factor Xa of about 0.2 to about 1.5 units/mg in an anti-factor Xa assay; and
(iii) a solubility in aqueous media ranging from about 150 to about 1,000 mg/ml.

The agents of the present invention can be used in various methods, for example, to modify thrombus formation in a patient without inducing a clinically unsafe increase in systemic bleeding. Such methods generally comprise administering to a patient a pharmacologically acceptable dose of an agent capable of inactivating clot-bound thrombin with only minimal inactivation of free thrombin. The agents are preferably characterized by a specific anti-factor IIa activity mediated by a heparin cofactor II of about 2 to about 5 units/mg in an anti-factor IIa assay, an antithrombin III catalyst specific activity of about 0.2 to about 1.5 units/mg in an anti-factor Xa assay, and a solubility in aqueous media ranging from about 150 to about 1,000 mg/ml.

The present invention provides compositions and products for the treatment of cardiovascular diseases. The invention relates to, inter alia, agents capable of selectively inactivating clot-bound thrombin. More particularly, the present invention provides heparin cofactor II-specific (HCII) catalytic agents as described herein capable of selectively inactivating thrombin which is bound either to fibrin in a clot or to some other surface, but which has only minimal inhibitory activity against free thrombin. The term "HCII-specific catalytic agent" is used herein for convenience to refer to the agents of this aspect of the invention. As is explained below, these agents are not now considered to act exclusively by an HCII-mediated mechanism and could perhaps aptly be designated by the term "HCII activating agent", meaning an agent which increases the affinity of HCII for thrombin. The selective activity of the HCII-specific catalytic agents of the present invention allows them to inactivate fibrin-bound thrombin in a patient at concentrations which produce minimal inactivation of free thrombin, thereby diminishing the risk of bleeding. Preferably, the inactivation of fibrin- or surface-bound thrombin is essentially irreversible so that clot accretion will not substantially resume after such HCII-specific catalytic agents (agents which activate HCII mediated inactivation of fibrin-bound thrombin) are cleared from the blood.

In a preferred embodiment, the agents of the present invention are low molecular weight heparin (LMWH) preparations that have been modified so that they contain less than about 5% and, more preferably, less than about 3% of the antithrombin III (ATIII) catalyzing activity of unmodified LMWH or standard heparin, but more ATIII catalyzing activity than dermatan sulphate. Moreover, because of their reduced chain length compared to standard heparin, the agents of the present invention have much less activity as catalysts of HCII-mediated inactivation of free thrombin than either standard heparin or dermatan sulphate. As such, the agents of the present invention have very weak activity when assayed against free thrombin in a thrombin clotting time assay and would not have been predicted to be effective antithrombotic agents. Quite surprisingly, however, the agents of the present invention are able to effectively catalyze HCII-mediated inactivation of surface-bound thrombin, *e.g.*, fibrin-bound thrombin or, interchangeably, clot-bound thrombin.

Surface-bound thrombin is typically inactivated through the formation of a covalent, irreversible thrombin-HCII complex. Thus, in contrast to typical anti-thrombins and other anticoagulants (*e.g.*, dermatan sulphate, heparin, low molecular weight heparins (LMWHs), hirudin and other direct thrombin inhibitors), the HCII-specific catalytic agents of the present invention have the ability to selectively and, preferably, irreversibly inactivate fibrin-bound thrombin without having major inhibitory effects against fluid-phase thrombin. Without being bound to a given theory, this ability is explained by the observation that the agents of the present invention produce a conformational change in HCII which enables it to bind thrombin effectively when the enzyme is immobilized on a surface, but which lacks the size to bind thrombin effectively when it is free in the fluid phase.

An agent of the present invention may be characterised by one or both of the following features:
(i) it has an antithrombin III affinity of less than about 3% of that of unfactionated heparin;
(ii) it is a polyanionic carbohydrate of 10 to 28 monosaccharide units.
Such HCII-specific catalytic agents have an anticoagulant effect which is contributed to by both an HCII- and ATIII-mediated mechanism, and by a mechanism which is independent of both HCII and ATIII. Moreover, the agents are preferably polyanionic carbohydrates of up to about 28 monosaccharide units and more usually of no more than about 25 monosaccharide units, and most preferably of no more than 24 monosaccharide units. Preferred agents have at least about 10 monosaccharide units. Typically, the agents may be heparin preparations having a molecular weight of between about 3,000 and about 8,000 Daltons (± 1,000 Daltons).

The present invention includes heparin preparations, which can be prepared from heparin using a variety of techniques. In one embodiment, heparin, *i.e.,* standard, unfractionated heparin, is first reduced in molecular size by chemical depolymerisation and the fractions with molecular weights ranging from 3,000 to 8,000 Daltons (± 1,000 Daltons) are isolated and pooled. In a presently preferred embodiment, heparin is depolymerised using nitrous acid. Thereafter, the resulting low molecular weight heparin is chemically modified to reduce its affinity for antithrombin III. This can be accomplished chemically or, alternatively, through the use of an antithrombin III affinity column. In a presently preferred embodiment, this is accomplished chemically by an oxidation reaction followed by a reduction reaction. In this preferred embodiment the resulting low affinity, low molecular weight heparin is a mixture of heparin molecules having a native sugar (e.g., a uronic acid residue) as a nonreducing terminal and a 2,5-anhydromannitol residue as a nonreducing terminal, and having molecular weights ranging from about 3,000 to about 8,000 Daltons. In this embodiment, it is believed that the reduction in molecular size together with the reduction in ATIII catalyzing activity endows the products with their ability to selectively inactivate clot-bound thrombin with only minimal inactivation of free thrombin.

The heparin preparation preferably:
(i) consists essentially of the lowest third molecular weight fraction isolated from unfractionated heparin; or
(ii) is produced from unfractionated heparin by chemically lowering the molecular weight range to between about 3,000 and about 8,000 Daltons.

Alternatively, the heparin preparation:
(i) has an average molecular weight of about 8,000 Daltons;
(ii) has an average molecular weight of about 5,000 Daltons; or
(iii) has an average molecular weight of about 3,000 Daltons

The heparin preparation of the invention may be produced from unfractioned heparin by chemically lowering the molecular weight range to between about 3,000 and about 8,000 Daltons and had its antithrombin III activity reduced by treating the vicinal alcohol groups present in the heparin preparation with an oxidizing agent followed by a reducing agent and optionally wherein the oxidizing agent is selected from sodium periodate, dimethyl sulphoxide, acid anhydrides, lead tetraacetate and ascorbic acid, and the reducing agent is selected from sodium borohydride, lithium aluminum hydride, metal hydrides and hydrazine.

Furthermore, the heparin preparation as hereinbefore described consists essentially of material without affinity for ATIII, said material having been prepared by affinity purification on a solid phase to which ATIII is immobilized and the effluent retained.

In one embodiment, a preferred heparin cofactor II-specific (HCII-specific) catalytic agent has
(a) the formula: 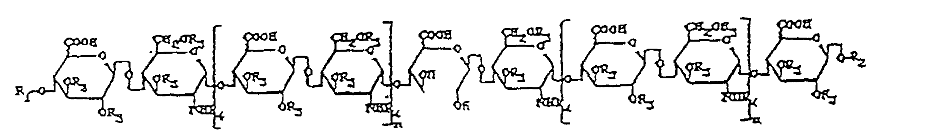 in which:
   each n is independently an integer from 0 to 14, provided that the total number of monosaccharide residues is from 10 to 28;
   R₁ is selected from the group consisting of H, D-glucosamine acid residue, D-glucuronic acid residue and L-iduronic acid residue;
   R₂ is a member selected from the group consisting of H, D-glucosamine acid residue, D-glucuronic acid residue, L-iduronic acid residue and anhydromannitol;
   R₃ is a member selected from the group consisting of H and SO₃⁻; and
   R₄ is a member selected from the group consisting of H, SO₃⁻ and

      CH₃CO⁻;

      wherein:
      the HCII-specific catalytic agent has a molecular weight ranging from about 3,000 Daltons to about 8,000 Daltons; or
(b) the formula: 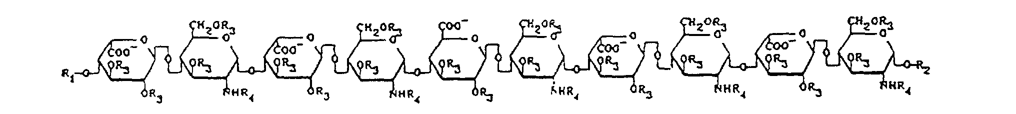 in which:
   R₁ and R₂ are members independently selected from the group consisting of H, D-glucosamine acid residue, D-glucuronic acid residue and L-iduronic acid residue;
   R₃ is a member selected from the group consisting of H and SO₃⁻; and
   R₄ is a member selected from the group consisting of H, SO₃⁻ and

      CH₃CO⁻;

      wherein:
      the HCII-specific catalytic agent has a molecular weight ranging from about 3,000 Daltons to about 8,000 Daltons.

An agent of the present invention may be characterised by one or both of the following features: (i) a specific activity against thrombin (factor IIa) of at least about 3.0 to about 4.0 units/mg in anti-factor IIa activity; (ii) a specific activity of about 1.0 unit/mg in an anti-factor Xa assay.

In a preferred embodiment an agent of the present invention is provided, wherein:
(i) the agent is combined with a heparin additive; or
(ii) the agent is combined with a heparin additive and the weight ratio of the HCII-specific catalytic agent to the heparin additive is greater than 2 to 1, wherein optionally the heparin additive is unfractionated heparin or is the lowest third molecular weight fraction isolated from unfractionated heparin.

In this product, the thrombin inactivating agent and the ATIII catalytic agent can be for administration to the patient simultaneously.

In another embodiment, the invention provides a pharmaceutical composition for inhibiting thrombogenesis in a patient, the composition comprising:
(i) from about 90 to about 99.9 weight percent of an HCII-specific catalytic agent that inactivates fibrin-bound thrombin, the HCII-specific catalytic agent having only minimal affinity for antithrombin III (ATIII);
(ii) from about 0.1 to about 10 weight percent of an ATIII catalytic agent that inactivates fluid phase thrombin,
wherein:
the HCIl catalytic activity of said composition is about 2 to about 5 units/mg.

Preferred compositions of the invention comprise a HCII-specific catalytic agent which is
(i) a polyanionic carbohydrate of 10 to 24 monosaccharide units; or
(ii) polyanionic carbohydrate is of 10 to 24 monosaccharide units and is a heparin preparation having a molecular weight of between about 3,000 and about 8,000 Daltons.

Preferred compositions of the invention comprise a heparin preparation having any of the specific features as hereinbefore described.

The ATIII catalytic agent is preferably unfractionated heparin, or is the lowest third molecular weight fraction isolated from unfractionated heparin.

As desired, and depending on the use, pharmaceutical compositions useful for inhibiting thrombogenesis, desirably without substantially inhibiting normal coagulation in a patient, can be prepared, the compositions comprising:
i) about 90 to about 99.9 weight percent of a product which is capable of selectively inhibiting clot-bound thrombin, especially an HCII-specific catalytic agent (activating agent), that has minimal affinity for, or is essentially devoid of, ATIII binding affinity and capable of displacing and inactivating fibrin-bound thrombin; and
ii) about 0.1 to about 10 weight percent of an ATIII catalytic agent (activating agent), such as heparin or low molecular weight heparin (LMWH), capable of inactivating fluid phase thrombin.
In a presently preferred embodiment, the HCII catalytic activity of the, optionally blended, composition is about 2 to 5 units/mg and, more preferably, about 3 to 4 units/mg.

In another aspect, the present invention provides a product comprising:
(i) an agent that inactivates clot-bound thrombin, said agent having minimal affinity for antithrombin III (ATIII) and a specific activity against thrombin (factor IIa) of about 2.0 to about 5.0 units/mg in an anti-factor lla assay; and
(ii) an ATIII catalytic agent that inactivates fluid-phase thrombin, as a combined preparation for simultaneous, separate or sequential use for inhibiting clot-bound thrombin and fluid-phase thrombin in a patient. However, advantageously, the product of the invention does not induce a clinically unsafe increase in systemic bleeding. ATIII catalytic agents suitable for use in this product include, but are not limited to, heparin and low molecular weight heparin.

Preferably the agent that inactivates clot-bound thrombin is
(i) an HCII-specific catalytic agent as hereinbefore described, or
(ii) a polyanionic carbohydrate as defined by the specific features recited (i) or (ii) above, and additionally or alternatively has a specific activity against thrombin (factor IIa) of at least about 3.0 to about 4.0 units/mg in anti-factor IIa activity. The ATIII catalytic agent is preferably unfractionated heparin, or is the lowest third molecular weight fraction isolated from unfractionated heparin.

In this product, the thrombin inactivating agent and the ATIII catalytic agent can be for administration to the patient simultaneously. When administered to the patient simultaneously, the thrombin inactivating agent and the ATIII catalytic agent can be administered as a single solution or compound or, alternatively, as two different solutions or compounds.

Preferred agents of the invention are obtainable from heparin. One class of products included in the invention comprises such preferred agents and, as a separate sub-class, the heparin preparations of the invention, which products in both sub-classes have non-sulphated uronic acid residues in open-ring form and are substantially free of aldehyde groups. Exemplary members of the class have about 30% of their uronic acid residues in open ring form. Another class of such preferred agents and heparin preparations comprises products having a native sugar (e.g., a uronic acid residue) as a nonreducing terminal and a 2,5-anhydromannitol residue as a nonreducing terminal. Some particularly preferred products belong to both the aforesaid classes.

In another aspect, the invention provides a low molecular weight heparin preparation characterized by:
(i) a molecular weight of between about 3,000 and about 8,000 Daltons (± 1,000);
(ii) specific activity against thrombin (factor IIa) of about 2.0 to about 5.0 units/mg in an anti-factor IIa assay;
(iii) a specific activity against factor Xa of about 0.2 to about 1.5 units/mg in an anti-factor Xa assay;
(iv) a solubility in aqueous media ranging from about 150 to about 1,000 mg/ml; and
(v) a native sugar (e.g., a uronic acid residue) as a, nonreducing terminal and a 2,5-anhydromannitol residue as a nonreducing terminal.
Optionally the low molecular weight heparin preparation is further characterised by any one or more of the features as hereinbefore defined.

In another aspect, the present invention provides a polyanionic carbohydrate capable of selectively inactivating clot-bound thrombin in favour of free thrombin, obtainable from heparin, having its non-sulphated uronic acid residues in open-ring form, and substantially free of aldehyde groups.

Preferably the polyanionic carbohydrate has a native sugar (e.g. a uronic acid residue) as a nonreducing terminal and a 2,5-anhydromannitol residue as a nonreducing terminal, and/or wherein 30% of the uronic acid residues are in open-ring form, optionally further characterised by any one or more of the features as hereinbefore described.

Preferably the carbohydrate has a molecular weight of from 3,000 to 8,000 (± 1,000). Preferably it contains from 10 to 28, e.g. 10 to 25 and especially 10 to 24, monosaccharide units.

The invention also provides a product capable of selectively inhibiting clot-bound thrombin obtainable by:
(i) depolymerising unfractioned heparin using nitrous acid;
(ii) isolating and pooling the depolymerised fractions having molecular weights ranging from 3,000 to 8,000 (±1,000) to provide a low molecular weight fraction;
(iii) cleaving the low molecular weight fraction using periodate;
(iv) reducing the cleaved fraction using sodium borohydride,
wherein optionally an antithrombin III affinity column is used to reduce the affinity of the depolymerised heparin, and the low molecular weight fraction has a specific activity of about 2 to about 5 anti-thrombin units/mg and less than about 1.5 anti-factor Xa units/mg.

Furthermore, the invention provides a product obtainable by:
(i) depolymerising standard unfractionated heparin by nitrous acid depolymerisation;
(ii) oxidising the depolymerised heparin with sodium periodate in an aqueous medium for 24h at 4°C, and stopping the oxidation reaction by the addition of excess ethylene glycol followed by extensive dialysis against distilled water using dialysis tubing with a 500MW cut off,
(iii) reducing the oxidised product by the addition of sodium borohydride and, after allowing the reaction mixture to stand for 25h at 23°C, adjusting the pH of the reaction mixture to 3.0 with HCl to destroy excess borohydride then quickly increasing the pH to 7.0 by the addition of NaOH;
(iv) dialysing the resultant product extensively against distilled water; and
(v) recovering the product by lyophilisation; and optionally
(vi) passing the product over an antithrombin III affinity column,
   the product obtained having the following properties:
   - molecular weight of from 3,000 to 8,000 (±1,000)
   - specific activity of about 2 to about 5 anti-Factor IIa units/mg
   - specific activity of less than about 1.5 anti-factor Xa units/mg.

In another embodiment, the present invention provides a process for preparing an HCII-specific catalytic agent having a native sugar (e.g., a uronic acid residue) as a nonreducing terminal and a 2,5-anhydromannitol residue as a nonreducing terminal, said process comprising:
(i) depolymerising unfractionated heparin;
(ii) oxidizing the resultant low molecular weight heparin; and
(iii) reducing the oxidized, low molecular weight heparin;
wherein said process optionally includes additional purification or other procedures to obtain HCII-specific catalytic agent.

Preferably the unfractionated heparin is depolymerised using nitrous acid and/or the resultant low molecular weight heparin is oxidised using sodium periodate and/or the oxidised low molecular weight heparin is reduced using sodium borohydride.

The products and agents of the invention are preferably for pharmaceutical use. The present invention also provides a pharmaceutical product comprising as active agent a catalytic agent, a preparation, a carbohydrate, or a product as hereinbefore described and optionally a pharmaceutically acceptable excipient, diluent or carrier, the pharmaceutical product optionally further comprising an inhibitor of fluid phase thrombin for simultaneous, separate or sequential administration with said active agent. The invention therefore includes the use for the manufacture of a medicament for the treatment of cardiovascular disease of any of the products or agents of the invention, such as, for example, an agent for activating HCII mediated inhibition of clot-bound thrombin and having minimal affinity for ATIII. The products and agent of the invention which may be so used include the HCII-specific catalytic agents, LMWH preparations, polyanionic carbohydrates and products obtainable as aforesaid and product V18 described in the Examples (or a substantially similar product to V18), as well as substances having substantially the same characteristics or inhibitory or pharmacological properties as the asforesaid products and agents. In another embodiment, the invention provides the use of a catalytic agent, a preparation, a carbohydrate, or a product as hereinbefore described or of an HCII specific catalytic agent obtainable using a process of the invention for the manufacture of a medicament for the treatment of a cardiovascular disease. The use optionally further including using an inhibitor of fluid phase thrombin for the manufacture of the medicament.

In another embodiment, the invention provides a use for the manufacture of a medicament for the treatment of thrombosis by prophylaxis or therapy of a heparin derivative which has its non-sulphated uronic acid residues in open-ring form and is substantially free of aldehyde groups.

The present invention further includes the use for the manufacture of a medicament of any of the products or agents of the invention for:
(i) producing an anticoagulant effect which is contributed to by both an HCII- and ATIII-mediated mechanism and by a mechanism which is independent of both HCII and ATIII; or
(ii) interfering with the binding effect of factor Xa to the platelet surface, of a catalytic agent, a preparation, a carbohydrate, or a product as herein before described or of an HCII specific catalytic agent obtainable using a process as herein before described or of a heparin derivative as previously defined.

In addition to the foregoing, the present invention provides pharmaceutical compositions comprising the thrombin inactivating agents or products of the present invention. The present invention further provides pharmaceutical compositions comprising an inventive substance, e.g. an HCII-specific catalytic agent, and an ATIII catalytic agent and compositions comprising an agent for selectively inactivating surface-bound or clot-bound thrombin and an inhibitor of thrombin in the liquid phase, e.g. an ATIII catalytic agent. Such pharmaceutical compositions, which may be in the form of blends, are useful for treating numerous cardiovascular conditions. In addition, such compositions are useful in conjunction with conventional thrombolytic treatments, such as the administration of tissue plasminogen activator (tPA), streptokinase, and the like, as well as with intravascular intervention, such as angioplasty, atherectomy, and the like.

A further understanding of the nature and advantages of the invention will become apparent by reference to the remaining portions of the specification and drawings.

### BRIEF DESCRIPTION OF THE DRAWINGS

FIG. **1** illustrates the proposed mechanism by which heparin binds to HCII and facilitates approximation between HCII and thrombin so that an irreversible covalent bond can form between the catalytic center of thrombin and a Leu-Ser bond on HCII.

FIG. **2** illustrates the comparative effects dermatan sulphate and one of the LA-LMWH HCII-specific catalytic agents of the present invention (*i.e.,* V18) have when aliquots of the same human blood sample were tested in the extracorporeal recirculation circuit.

FIG. **3** illustrates the effects hirudin has on clotting in the extracorporeal recirculation circuit over a concentration range of 10 U/ml to 20 U/ml.

FIGS. **4** and **5** illustrate the proposed mechanism by which the HCII-specific catalytic agents of the present invention are able to have selective activity against surface-bound thrombin.

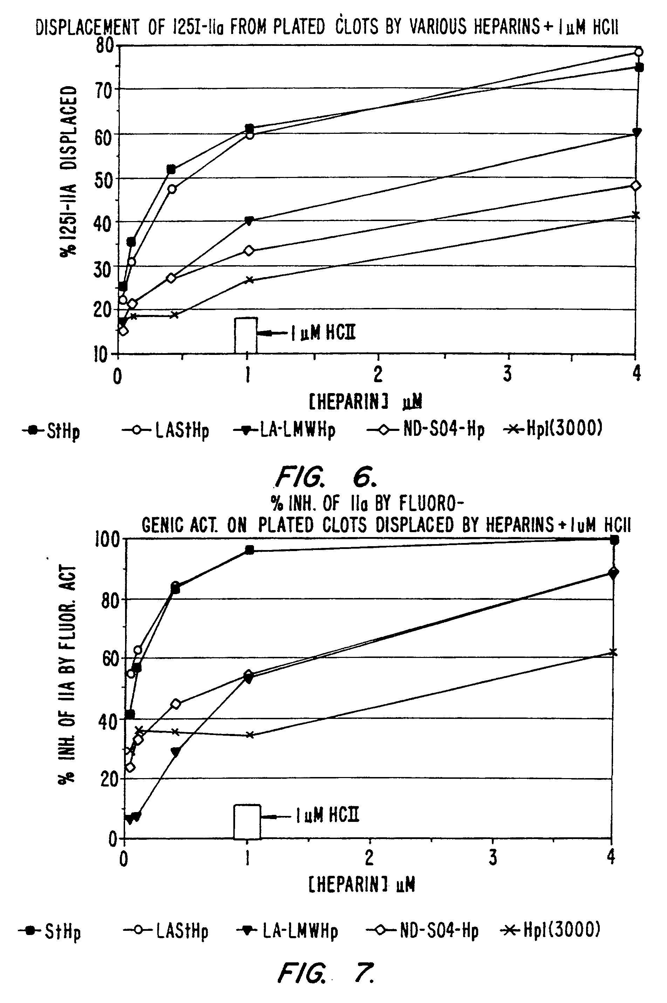

FIGS. **6** and **7** show the mean results of a series of experiments comparing the relative ability of various heparins and a LA-LMWH HCII-specific catalytic agent, *i.e.,* V18, to inhibit and displace thrombin from fibrin using a filter-containing plate assay. There is a dose response for both displacement and inactivation with 85% inactivation and about 60% displacement at 4 µM. Analysis of gels performed on the displaced thrombin and the residual inactivated fibrin-bound thrombin indicates that HCII is covalently bound to the thrombin, indicating that the thrombin is permanently inactivated.

FIGS. **8A** and **8B** illustrate the ability of dermatan sulphate and a LA-LMWH HCII-specific catalyst of the present invention, *i.e.*, V18, respectively, to inactivate free and fibrin-bound thrombin using the "hanging clot" assay.

FIG. **9** illustrates the extracorporeal recirculation circuit used to examine the ability of an agent to inhibit clotting in a human whole blood system.

FIG. **10** illustrates the results of using a blend of a LA-LMWH HCII-specific catalytic agent, *i.e.*, V18, and an ATIII catalytic agent (*e.g.,* heparin).

FIG. **11** illustrates the effects of 1 anti-Xa unit/ml and 2 anti-Xa units/ml of unmodified LMWH on clotting of the filter and on the thrombin clotting time (TCT).

FIGS. **12** and **13** illustrate the comparative effects dermatan sulphate and one of the LA-LMWH HCII-specific catalytic agents of the present invention, *i.e.*, V18, have on clotting in the extracorporeal recirculation circuit over a concentration range of 120 µg/ml to 960 µg/ml.

FIG. **14** illustrates the rate of diffusion of labelled thrombin from the fibrin clot.

FIG. **15** illustrates the effect of 0.25 µM HCII, with and without 60 µg/ml of one of the HCII-specific catalytic agents of the present invention (*i.e.,* V18), on the activity of fibrin-bound thrombin in purified fibrinogen.

FIG. **16** illustrates the effect of one of the LA-LMWH HCII-specific catalytic agents of the present invention, *i.e.,* V18, on clot weight after balloon injury.

FIG. **17** illustrates the effect of standard heparin on clot weight after balloon injury.

FIG. **18** illustrates the effect of standard heparin and one of the LA-LMWH HCII-specific catalytic agents of the present invention, *i.e.,* V18, on clot weight after balloon injury.

FIG. **19** illustrates the effect of heparin or heparin in combination with V18 in a bypass simulation model.

FIG. **20** sets forth the relationship between ACT and fibrinogen deposition on a bypass filter; comparison of heparin alone with a combination of heparin and V18.

FIG. **21** illustrates the effect of various anticoagulants on clot lysis using the Rabbit Venous Thrombosis Treatment Model.

FIG. **22** illustrates the of various anticoagulants on clot accretion using the Rabbit Venous Thrombosis Treatment Model.

FIG. **23** illustrates the effects of V18 on the TCT (A), the APTT (B), and the factor Xa clotting time (Xa clot time) (C) in normal plasma (―□―), ATIII-deficient plasma (―○―) and HCII-deficient plasma (―Δ―).

FIG. **24** illustrates the effects of LMWH on the TCT (A), the APTT (B), and the factor Xa clotting time (Xa clot time) (C) in normal plasma (―X―), ATIII-deficient plasma (―○―) and HCII-deficient plasma (―□―).

FIG. **25** illustrates the effects of Dermatan Sulphate on the TCT (A), the APTT (B), and the factor Xa clotting time (Xa clot time) (C) in normal plasma (―X― ), ATIII-deficient plasma (―□―) and HCII-deficient plasma (―○―).

FIG. **26** illustrates the effects of Fraction 1 on the TCT (A), the APTT (B), and the factor Xa clotting time (Xa clot time) (C) in normal plasma (―X―), ATIII-deficient plasma (―□―) and HCII-deficient plasma (―●―).

FIG. **27** illustrates the effects of Fraction 2 on the TCT (A), the APTT (B), and the factor Xa clotting time (Xa clot time) (C) in normal plasma (―X―), ATIII-deficient plasma (―□―) and HCII-deficient plasma (―●―).

FIG. **28** illustrates the effects of Fraction 3 on the TCT (A), the APTT (B), and the factor Xa clotting time (Xa clot time) (C) in normal plasma (―X―), ATIII-deficient plasma (―□―) and HCII-deficient plasma (―●―).

FIG. **29** is a summary table showing the concentrations of the various glycosaminoglycans (GAGS) required to double the APTT and TCT.

FIG. **30** illustrates the comparative additive effect of heparin (0.1 U/mL) on the prolongation of the thrombin time produced by DS and V18.

FIG. **31** illustrates the effect of increasing doses of heparin on the whole blood clotting time to which thrombin (A) (―●―), a PPACK clot (B) (―□―) and clot-bound thrombin (C) (―X―) is added.

FIG. **32** illustrates the effect of increasing doses of dermatan sulphate on the whole blood clotting time to which thrombin (A) (―●―), a PPACK clot (B) (―□― ) and clot-bound thrombin (C) (―X―) is added.

FIG. **33** illustrates the effect of increasing doses of V18 on the whole blood clotting time to which thrombin (A) (―●―), a PPACK clot (B) (―□―)and clot-bound thrombin (C) (―X―) is added.

FIG. **34** illustrates the effect of increasing doses of Fraction 1 on the whole blood clotting time to which thrombin (A) (―●―), a PPACK clot (B) (―□―) and clot-bound thrombin (C) (―X―) is added.

FIG. **35** illustrates the effect of increasing doses of Fraction 2 on the whole blood clotting time to which thrombin (A) (―●―), a PPACK clot (B) (―□―) and clot-bound thrombin (C) (―X―) is added.

FIG. **36** illustrates the effect of increasing doses of Fraction 3 on the whole blood clotting time to which thrombin (A) (―●―), a PPACK clot (B) (―□―) and clot-bound thrombin (C) (―X―) is added.

FIG. **37** compares the effects of heparin ((A), upper panel), Fraction 1 ((B), middle panel) and the combination of heparin and 10 µg/ml of Fraction 1 ((C), lower panel) on the whole blood clotting time to which thrombin, a PPACK and clot-bound thrombin is added.

FIG. **38** illustrates the effect of increasing doses of a combination of standard heparin and dermatan sulphate (120 µg) on the whole blood clotting time to which thrombin (A), a PPACK clot (B) and clot-bound thrombin (C) is added.

FIG. **39** illustrates the effect of increasing doses of a combination of dermatan sulphate and standard heparin (0.5 U/mL) on the whole blood clotting time to which thrombin (A) a PPACK clot (B) and clot-bound thrombin (C) is added.

FIG. **40** illustrates the effect of increasing doses of a combination of V18 and standard heparin (SH) (0.5 U/mL) on the whole blood clotting time to which thrombin (A), a PPACK clot (B) and clot-bound thrombin (C) is added.

FIG **41** sets forth a summary of the effects of the various GAGS on the WBCT in the presence of free thrombin, the PPACK clot and clot-bound thrombin and, in addition, the ratios of the corresponding IC 50.

FIG. **42** illustrates the synergy between V18 and heparin against fibrin-bound thrombin in whole blood.

FIG. **43** illustrates the effect of heparin on preventing clotting in the bypass circuit.

FIG. **44** illustrates the elution profile of V18 on a G-50 Sephadex column.

FIG. **45** compares the effectiveness of Fractions 1, 2 and 3 when combined with 1.5. units/ml of heparin in the bypass circuit

FIGS. **46** and **47** illustrate the minimum effective concentrations of the GAGS when used alone or, alternatively, in combination with 1.5 units/ml of heparin in the bypass circuit.

FIG. **48** illustrates the relative concentrations of the GAGS required to prolong the APTT and TCT, to prevent clotting of whole blood in the presence of a clot, and to prevent clotting in the bypass.

FIG. **49** sets forth the IC 50 for the TCT and corresponding doses required to prevent clotting in the circuit and the relative ratios are shown.

FIG. **50** illustrates the fold increase in second order rate constants (K2) for ATIII-mediated catalysis of factor Xa and thrombin inhibition, and HCII-mediated thrombin inhibition at concentrations of 6, 60, and 300 µg/ml.

FIG. **51** illustrates the fold increase in K2 at therapeutic concentrations of these GAGS.

FIG. **52** illustrates the intrinsic measurements of GAGs binding to serine proteases and their inhibitors.

FIG. **53** sets forth a summary of anti-Xa activity of inhibitors in a buffer system with and without ATIII present.

FIG. **54** illustrates the prolongation of the thrombin clotting time in a buffer system containing fibrinogen measured in the presence and absence of ATIII or HCII for various GAGs.

FIG. **55** illustrates the relative effects of standard heparin (A), LMWH (B), V18 (C) and Fraction 1 of V18 (C) on inactivating Xa, IXa and XIa in a plasma system to which each of these coagulation enzymes was added.

FIG. **56** illustrates the effect of platelets on the anticoagulant activity of V18 (A), Fraction 1 of V18 (B), LMWH (C) and SH (D).

FIG. **57** illustrates the results of the recalcification times using various GAGS in platelet-rich plasma (PRP), platelet-poor plasma (PPP) and platelet-free plasma (Pit-Free).

FIG. **58** illustrates the mechanism of impaired assembly.

FIG. **59** illustrates the assembly of Factor Xa on phospholipid surface.

FIG. **60** illustrates the consequences of impaired assembly.

FIG. **61**. illustrates the mechanism of impaired assembly.

### DETAILED DESCRIPTION OF THE INVENTION AND PREFERRED EMBODIMENTS

The present invention provides compositions and products for inactivating thrombin bound to fibrin within a thrombus or clot, whereby the ability of clot-bound thrombin to catalytically promote further clot accretion is substantially diminished or eliminated. The compositions and products of the present invention are particularly useful for preventing thrombosis in the circuit of cardiac bypass apparatus and in patients undergoing renal dialysis, and for treating patients suffering from or at risk of suffering from thrombus-related cardiovascular conditions, such as unstable angina, acute myocardial infarction (heart attack), cerebrovascular accidents (stroke), pulmonary embolism, deep vein thrombosis, arterial thrombosis, *etc.* The present invention is not limited to such uses, however, and the compositions and products described herein may find use in other *in vitro* and *in vivo* situations whenever it is desirable to inhibit clot or thrombus accretion, or to promote clot or thrombus solubilization. For example, the compositions of the present invention may be used as an anti-coagulant for inhibiting thrombin-induced clotting in various *in vitro* studies, assays and the like.

The use of certain terms in this specification preferably includes reference to the products or techniques defined below in relation to those terms:

"Proteoglycan," as used herein, refers to a protein to which is attached one or more glycosaminoglycan chains. Proteoglycans are polyanionic compounds that have properties that reflect both the protein and the glycosaminoglycan chains.

"Glycosaminoglycan," as used herein, refers to a polysaccharide composed of repeating disaccharide units. The disaccharides always contain an amino sugar (i.e., glucosamine or galactosamine) and one other monosaccharide, which may be a uronic acid (i.e., glycuronic acid or iduronic acid) as in hyaluronic acid, heparin, heparan sulphate, chondroitin sulphate or dermatan sulphate - or a galactose as in keratan sulphate. The glycosaminoglycan chain may be sulphated on either moiety of the repeating disaccharide. With the exception of hyaluronic acid, all glycosaminoglycans are covalently attached to a "core protein," i.e., they occur as proteoglycans.

"Heparin" (or, interchangeably, "standard heparin" (SH) or "unmodified heparin"), as used herein, refers to a mixture of polysaccharide chains composed of repeating disaccharides made up of uronic acid residue (D-glycuronic acid or L-iduronic acid) and D-glucosamine residue. Many of these disaccharides are sulphated on the uronic acid residues and/or the glucosamine residue. Generally, heparin has a molecular weight ranging from about 6,000 Daltons to 20,000 Daltons, depending on the source of the heparin and the methods used to isolate it. The structural formula of the repeating disaccharide units of heparin is generally as follows:

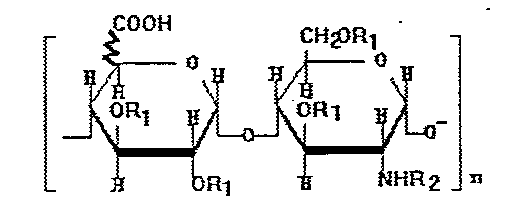

In the above formula, the "squiggle" bond at C5-C6 of the uronic acid indicates that the uronic acid may be either D-glucuronic acid (carboxyl up) or L-iduronic acid (carboxyl down). In addition, R¹ may be either H or SO₃ and R² may be H, Ac (acetyl) or SO₃.

A "heparin preparation," as used herein, refers to a preparation prepared from standard, unfractionated heparin. In a preferred embodiment, the HCII-specific catalytic agents of the present invention are modified heparins which have been prepared from standard, unfractionated heparin using the following chemical reactions: (1) nitrous acid depolymerisation of unfractionated heparin to yield low molecular weight heparin (LMWH); (2) oxidation of the resulting LMWH to open the ring structures of the unsulphated uronic acid moieties using, for example, sodium periodate; and (3) reduction of the oxidized LMWH to reduce the aldehydes (to alcohols) formed during the depolymerisation and oxidation steps using, for example, sodium borohydride.

"Low Molecular Weight Heparin" (LMWH), as used herein, refers to a heparin preparation having a molecular weight of about 3,000 Daltons to about 8,000 Daltons.

"Low Affinity Heparin" (LAH) (or, interchangeably, "low affinity standard heparin" (LASH)), as used herein, refers to a heparin preparation which binds to antithrombin III (ATIII) with an affinity of about 10⁻⁶ M, preferably weaker than about 10⁻⁵ M.

"Low Affinity-Low Molecular Weight Heparin" (LA-LMWH), as used herein, refers to a heparin preparation having a molecular weight of about 3,000 Daltons to about 8,000 Daltons and which binds to ATIII with an affinity of about 10⁻⁶ M, preferably weaker than about 10⁻⁵ M. The LA-LMWH preparation can be a mixture of heparin molecules having molecular weights ranging from 3,000 to 8,000 Daltons (± 1,000 Daltons) or, alternatively, it can be separated into its various components using, for example, gel exclusion chromatography. The LA-LMWH mixture can be arbitrarily separated into three LA-LWMH fractions by gel exclusion chromatography. Fraction 1 has a mean molecular weight of about 8,000 Daltons, Fraction 2 has a mean molecular weight of about 5,000 Daltons and Fraction 3 has a mean molecular weight of about 3,000 Daltons.

"Heparan Sulphate" (HS), as used herein, refers to a glycosaminoglycan which contains a disaccharide repeat unit similar to that of heparin, but which has more N-acetyl groups, fewer *N*-sulphate groups, and a lower degree of *O*-sulphate groups.

"Dermatan Sulphate" (DS), as used herein, refers to a heterogeneous glycosaminoglycan that contains disaccharide repeat units consisting of *N*-acetyl-D-galactosamine and D-glucuronic acid and disaccharide repeat units consisting of *N*-acetyl-D-galactosamine and L-iduronic acid. The uronic acids are present with variable degrees of sulphation.

"Hirudin," as used herein, refers to an anti-thrombin substance that is extracted from the salivary glands of leeches. "Hirulog," as used herein, refers to a small, synthetic analog of hirudin.

"Monosaccharide," as used herein, refers to a polyhydroxy alcohol containing either an aldehyde or a ketone group, *i.e.,* a simple sugar. Monosaccharide refers to naturally occurring simple sugars as well as simple sugars which have been chemically modified. Modified monosaccharides include, but are not limited to, monosaccharides that have increased or decreased sulphation or which have modified carboxyl, amino or hydroxyl groups. Monosaccharides may be chemically modified by: *N*-desulphation (*see, e.g.,* Inoue, Y., *et al., Carbohydrate Res. **46**,* pp. 87-95 (1976)); *N*-resulphation (*see, e.g.,* Lloyd, A.G., *et al., Biochem. Pharmacol.* **20**, pp. 637-648 (1971)), *N*-acetylation (*see, e.g.,* Danishefsky, I., *et al., Biophys*. **90**, pp. 114-121 (1970)); *N*-succinylation (*see e.g*., Nagasawa, *K., et al., J*. *Biochem.* **81**, pp. 989-993 (1977)); *N*-deacetylation (*see, e.g.,* Dimitriev, B.A., *et al., Carbohydr. Res*., **40**, pp. 365-372 (1975)); *O*-desulphation *(see, e.g.,* Jacobson, I., *et al., J. Biol. Chem.* **255**, pp. 5084-5100 (1980); carboxy reduction; methylation of free hydroxyl or amino groups, *etc.*

"Polysaccharide," as used herein, refers to a linear or branched polymer of more than 10 monosaccharides that are linked by means of glycosidic bonds.

"Polyanion," as used herein, refers to a molecule that possesses a large number of negative charges. "Polyanionic carbohydrates," as used herein, refers to carbohydrates that possess a large number of negative charges.

A "heparin additive," as used herein, refers to heparin or a heparin-like compound which is mixed with an agent of the present invention prior to patient administration. In a presently preferred embodiment, the heparin additive is either unfractionated heparin or the lowest third molecular weight fraction isolated from unfractionated heparin.

"Vicinal alcohol groups," as used herein, refer to two hydroxyl groups on adjacent carbon atoms. More particularly, "vicinal alcohol groups" is used herein to refer to the two hydroxyl groups on the C2 and C3 carbon atoms of the heparin preparations of the present invention.

"Oxidizing agent" or, interchangeably, "oxidant," as used herein, refers to a substance that (1) yields oxygen readily, (2) removes hydrogen from a compound, or (3) attracts negative electrons. Suitable oxidizing reagents include, but are not limited to, sodium periodate, dimethyl sulphoxide, acid anhydrides, lead tetraacetate and ascorbic acid.

"Reducing agent" or, interchangeably, "reducer," as used herein, refers to a substance that is readily oxidized by reducing another substance. Suitable reducing agents include, but are not limited to, sodium borohydride, lithium aluminum hydride, other metal hydrides and hydrazine.

"Affinity," as used herein, is expressed in terms of the dissociation constant (K_{d}). As such, each time an affinity is mentioned, it is referring to the K_{d}.

"A clinically unsafe increase in systemic bleeding," as used herein, refers in preferred embodiments to an activated clotting time of less than 400 seconds and a thrombin clotting time of less than 100 seconds even when the agent is used at the highest effective concentrations.

The "anti-factor IIa assay," as used herein, is an HCII activating assay (also referred to as a "catalytic assay") that is carried out as follows: a fixed amount of human thrombin is added to plasma containing a chromogenic synthetic thrombin substrate. After incubation with the compound of interest, the amount of residual thrombin is determined by measuring the absorbance at 405 nm.

The "anti-factor Xa assay," as used herein, is an ATIII activating assay (also referred to as a "catalytic assay") that is carried out as follows: a fixed amount of factor Xa is added to plasma containing a chromogenic synthetic factor Xa substrate. After incubation with the compound of interest, the amount of residual factor Xa activity is determined by measuring the absorbance at 405 nm.

The "Hanging Clot Assay," as used herein, refers to an assay used to examine the inhibitory effect of agents against fluid-phase and clot-bound thrombin activity. Generally, to determine the inhibitory effect against fluid-phase thrombin activity, α-thrombin (0.2-4.0 nM) is incubated with citrated plasma for 60 min at 37°C in the presence or absence of heparin at the concentrations indicated. At the end of the incubation period, the plasma levels of Fibrinopeptide A (FPA) are determined, and the percent inhibition of FPA generation is then calculated for each inhibitor concentration. To determine the inhibitory effect against clot-bound thrombin activity, washed fibrin clots are incubated in citrated plasma for 60 min at 37°C in the presence or absence of varying concentrations of heparin. At the end of the incubation period, the plasma levels of FPA are determined, and the percent inhibition of clot-induced FPA generation is then calculated for each inhibitor concentration.

A "filter-containing plate assay" (or, interchangeably, "filtration based assay"), as used herein, refers to an assay used to test the ability of a compound to displace and inactivate thrombin bound to fibrin. This assay is carried out using the protocol set forth in the examples.

It has been demonstrated that the fibrin-binding site on thrombin (anion-binding exosite 2) is distinct from the fibrinogen-binding site on thrombin (anion-binding exosite 1). That is, when thrombin is bound to fibrin, as is the case in clot or thrombus matrices, the fibrin-binding site will be occupied, while the fibrinogen-binding site remains sterically available to bind fibrinogen and orient the bound fibrinogen for interaction with the thrombin catalytic site which promotes the conversion of fibrinogen to fibrin. The enzyme's active site and exosite 1 are available to bind and cleave other substrates as well, including factor V, factor VIII and the thrombin receptor on platelets.

Thus, it is possible to disrupt or interfere with binding between the fibrin-binding site on the thrombin and/or the thrombin-binding site on the fibrin in order to release thrombin from the clot or thrombus into a surrounding aqueous environment, usually into blood in the vascular environment. While fibrin-bound thrombin in the clot or thrombus is protected from inactivation by heparin and endogenous anti-proteinases, thrombin released from the clot or thrombus becomes susceptible to inactivation from endogenous anti-proteinases and/or appropriate drug therapies.

It is known that free thrombin, *i.e.,* fluid-phase thrombin, is irreversibly inactivated by two plasma inhibitors, antithrombin III (ATIII) and heparin cofactor II (HCII), with ATIII being the primary inhibitor. Both of these inhibitors exhibit a markedly increased activity in the presence of certain classes of sulphated polysaccharides. It has been found that the activity of ATIII is catalyzed (activated) by heparin and by low molecular weight heparin (LMWH), whereas the activity of HCII is catalyzed by high concentrations of heparin and by dermatan sulphate. However, although heparin (but not LMWH) is a potent catalyst of HCII, the predominant effect of heparin at therapeutic concentrations is as a catalyst of ATIII, because heparin has a higher affinity for ATIII than HCII at such concentrations. Moreover, the plasma concentration of ATIII is more than twice that of HCII (2.4 µM and 1 µM, respectively) and, thus, heparin activates (catalyzes) both ATIII and HCII only when it is administered in very high concentrations.

HCII inactivates thrombin by acting as a pseudo-substrate for the enzyme. Thrombin cleaves HCII, resulting in the formation of a covalent enzyme-inhibitor complex. The formation of this complex is very slow in the absence of a catalyst. However, in the presence of dermatan sulphate or heparin, the rate of HCII-mediated inhibition of thrombin increases by about 2,000 fold (*See,* Tollefson, *Ann. NY Acad. Sci.* 714:21-31 (1994)).

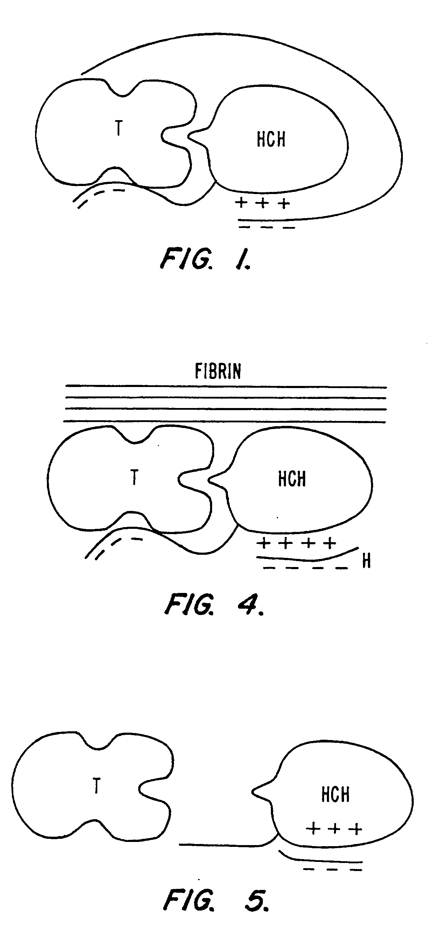

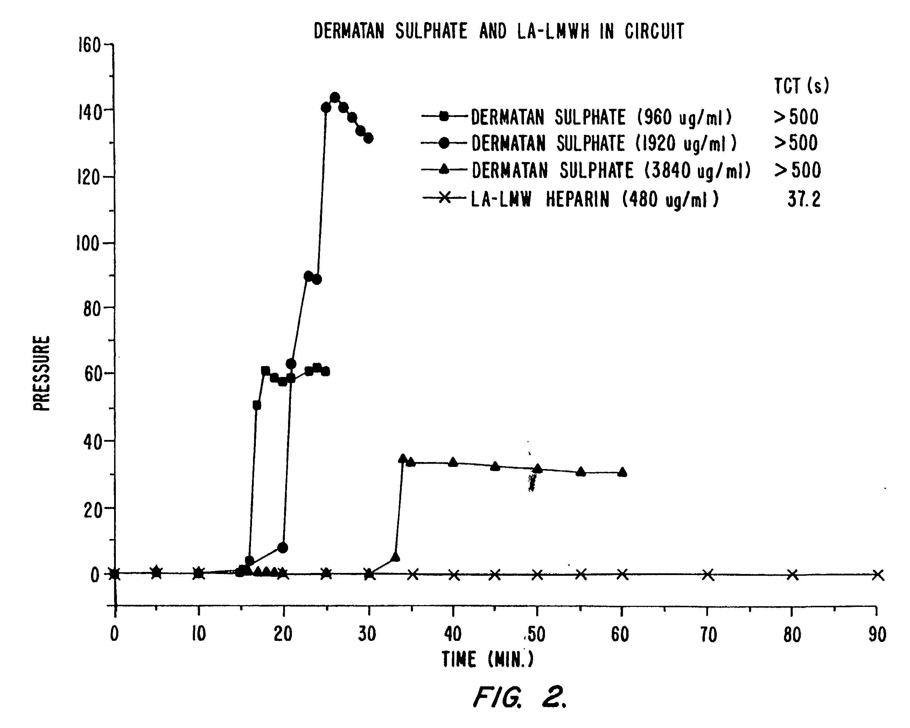

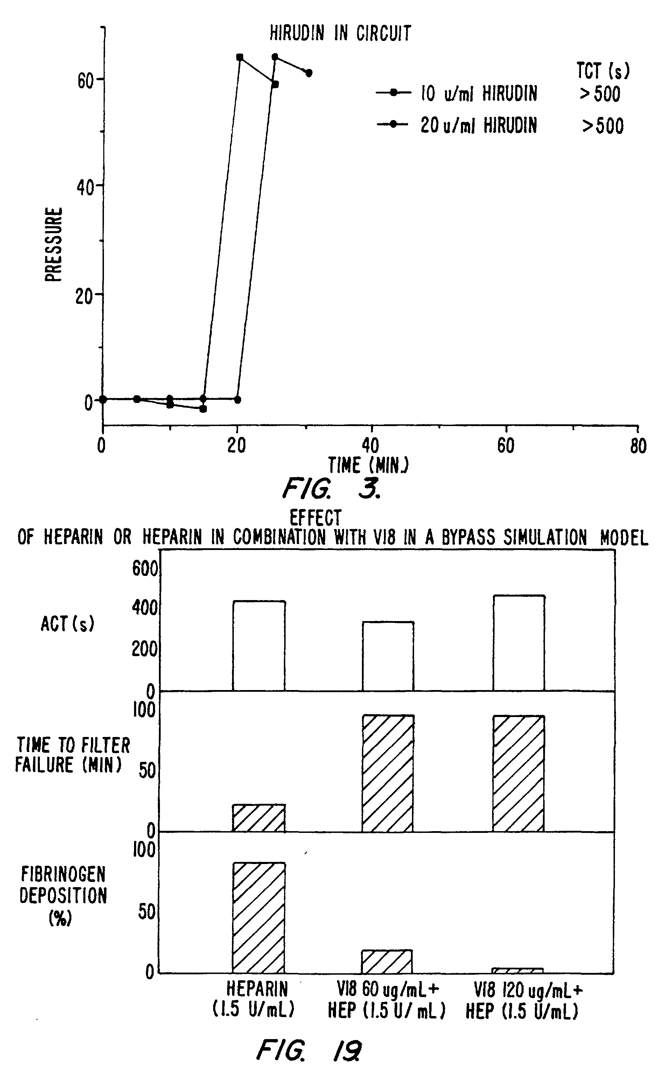

A model for HCII catalysis by dermatan sulphate or heparin involves a two-step process. First, the sulphated polysaccharide binds to a positively charged region on HCII and causes unfolding of the N-terminal, negatively charged segment of the HCII molecule (FIG. 1). This electronegative N-terminal segment then interacts with the positively charged region on thrombin known as exosite 1. The interaction of the conformationally altered HCII with thrombin increases the rate of inhibition by approximately 50-fold. If the sulphated polysaccharide chain is sufficiently long, a second step occurs which markedly enhances the rate of HCII-mediated inactivation of thrombin. In this second step, the sulphated polysaccharide binds to the electropositive region on thrombin known as exosite 2. Sulphated polysaccharides that can bind to both the inhibitor and the enzyme effectively approximate HCII and thrombin, thereby increasing the rate of HCII-mediated inactivation of thrombin by about 2,000-fold.

The activity of HCII-specific catalytic agents (HCII activating agents) of the present invention is believed to be based, in part, on inactivating thrombin bound to fibrin without necessitating displacement. More particularly, the postulated mode of activity of the HCII-specific catalytic agents of the present invention is based, in part, on the following observations. First, because thrombin binds to fibrin via exosite 2, exosite 1 is available to interact with conformationally altered HCII. As a result, conformationally altered HCII can inactivate thrombin bound to fibrin without necessarily displacing it. Second, it has been discovered that certain sulphated polysaccharides, which are poor catalysts of HCII-mediated inactivation of thrombin in solution because they are of insufficient chain length to bind both HCII and thrombin, are still able to effectively catalyze the inactivation of fibrin-bound thrombin by HCII. Thus, the HCII activating agents of the present invention are useful as selective inhibitors of clot-bound thrombin *in vivo* because they inactivate thrombin bound to fibrin without inducing a marked systemic anticoagulant state.

Without intending to be restricted to a particular theory, it is thought that this selective inhibition occurs because the requirements for catalysis of HCII-mediated inactivation of free thrombin are different from those needed for catalysis of HCII-mediated inactivation of fibrin-bound thrombin. Thus, in accordance with the present invention, polyanions have been identified that are more effective at inactivating fibrin-bound thrombin than free thrombin. These polyanions are unable to catalyze fully HCII-mediated inactivation of free thrombin either because they are of insufficient chain length, or because they lack the necessary negative charge to bind to both HCII and thrombin. Such agents, however, are able to inactivate fibrin-bound thrombin because, in theory, bridging (*i.e.*, binding to both HCII and thrombin) is not a prerequisite for efficient HCII-mediated inactivation of thrombin when the enzyme is immobilized on the fibrin surface. Instead, conformational alteration of HCII by, for example, sulphated polyanions is sufficient to promote the inactivation.

The ability of sulphated polysaccharides to bind to both HCII and thrombin is size dependent. Sulphated polysaccharides which contain less than about 24 monosaccharide units are typically of insufficient length to bind to thrombin and, hence, do not dramatically increase the rate of HCII-mediated thrombin inhibition.

However, because these agents can still bind to HCII and induce a conformational change, they will increase the rate of thrombin inhibition to a modest extent. Moreover, when thrombin is bound to fibrin at exosite 2 and immobilized, the polysaccharide is not required to bind to thrombin and, thus, the clot-bound thrombin can be readily inactivated by HCII provided that the inhibitor has been modified by the low molecular weight polysaccharide (FIG. 4). This is thought to be a possible mechanistic explanation for the selectivity of the HCII-specific catalytic agents of the present invention against clot-bound thrombin.

The compositions and methods of the present invention can provide for complete or near-complete inactivation of clot-bound or thrombus-bound thrombin, whereby thrombin-mediated amplification of coagulation is substantially inhibited or prevented. Usually, at least about 60% inhibition of clot- or thrombus-bound thrombin can be achieved, preferably at least about 90% inhibition, and more preferably at least about 95% inhibition (by "inhibition" in this context, it is meant that the thrombin activity is substantially, irreversibly inactivated so that the thrombin molecule cannot promote clot or thrombus formation or accretion; more generally, inhibition refers to a reduction in activity).

Several HCII catalyst assays (HCII activating assays) are well known to those of skill in the art. An example of such an HCII catalyst is the anti-factor IIa assay (*see,* Ofoso, *Blood* 64:742-747 (1984)). Other HCII activating assays include those described in WO-A-9517907. Similarly, several ATIII catalyst assays are well known to those of skill in the art. An example of such an ATIII activating assay is the anti-factor Xa assay (*see,* Teien, *et al., Thromb. Res.* 8:413-416 (1976)). In addition, several anticoagulant assays are known to those of skill in the art, such as thrombin clotting time, factor Xa clotting time, partial thromboplastin time and activated clotting time.

The products and agents of the invention will now be described in more detail, by way of example only, with illustrative reference to the HCII-specific catalytic agents of the invention. The preferred properties described below in relation to such HCII activating agents are applicable also to the agents and products of other aspects of the invention.

The HCII-specific catalytic agents of the present invention will preferably exhibit one or more of the following characteristics:
i) an HCII catalyst specific activity of about 2 to 5 units/mg in a chromogenic anti-factor IIa assay and, more preferably, about 3 to 4 units/mg;
ii) an ATIII catalyst specific activity of about 0.2 to 1.5 units/mg in a chromogenic anti-factor Xa assay, preferably about 0.5 to about 1.3 units/mg and, more preferably, about 1 unit/mg;
iii) a solubility in aqueous media ranging from about 150 to about 1,000 mg/ml, preferably from about 200 to about 750 mg/ml and, more preferably, from about 400 to about 500 mg/ml; and
iv) at concentrations which exert an anti-thrombic effect *in vivo,* an anticoagulant activity in plasma as measured by thrombin clotting time from 20 to 80 seconds (with a control of 20 seconds), preferably 25 to 45 seconds, and more preferably 30 seconds.

The HCII activating agents of the present invention are preferably glycosaminoglycans. More particularly, the HCII-specific catalytic agents are preferably polyanionic carbohydrates of about 10 to about 28 monosaccharide units, e.g. about 10 to about 25 units and more usually about 10 to about 24 monosaccharide units and, more preferably, are polyanionic carbohydrates of about 14 to about 20 monosaccharide units. Typically, the HCII-specific catalytic agents are heparin preparations having molecular weights ranging from about 3,000 to 8,000 Daltons (± 1,000 Daltons). As such, in one embodiment, heparin is a preferred source of the HCII-specific catalytic agents of the present invention. Heparin, as previously explained, is a highly sulphated dextrorotary mucopolysaccharide comprised of D-glucosamine and D-glucuronic acid or L-iduronic residues. Generally, heparin has a molecular weight ranging from about 6,000 Daltons to 20,000 Daltons, depending on the source of the heparin and the methods used to isolate it. In a preferred embodiment, the HCII-specific catalytic agents of the present invention are heparin preparations which have been prepared from heparin using the following chemical reactions: (1) depolymerisation of unfractionated heparin to yield LMWH; (2) oxidation of the resulting LMWH; and (3) reduction of the oxidized LMWH. It will be readily apparent to those of skill in the art that the order of these steps can be modified, e.g., unfractionated heparin can be oxidized, depolymerised and reduced or, alternatively, oxidized, reduced, depolymerised and reduced, provided the final step is a reduction step.

In addition to being heparin preparations, however, the HCII-specific catalytic (activating) agents of the present invention can be, for example, negatively charged polysaccharides other than heparin, negatively charged polyanions, electronegative organic molecules with an affinity for HCII, and the like. Such substances will typically bind to HCII with an affinity of at least 10⁻⁶ M, preferably at least about 10⁻⁸ M or stronger, but with weak affinity for thrombin, preferably weaker than about 10⁻⁶ M.

In one embodiment, the HCII-specific catalytic agents of the present invention can have the following formula: 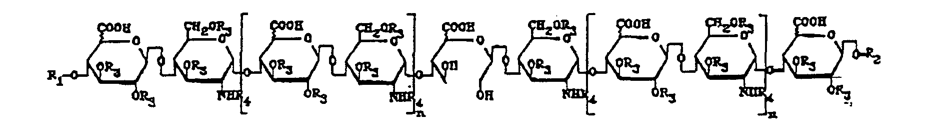 In the above formula, each n is independently an integer from 0 to 14. Preferably, however, the molecular weight is from 3,000 - 8,000 (± 1,000). Preferably the total number of saccharide residues is from 10 to 28, or more preferably from 10 to 25, e.g. 10 to 24. R₁ is a member selected from the group consisting of H, D-glucosamine acid residue, D-glucuronic acid residue and L-iduronic acid residue. R₂ is a member selected from the group consisting of H, D-glucosamine acid residue, D-glucuronic acid residue, L-iduronic acid residue and anhydromannitol. R₃, in the above formula, is a member selected from the group consisting of H and SO₃⁻. Finally, R₄ is a member selected from the group consisting of H, SO₃⁻ and CH₃CO⁻. Typically, the HCII activating agents of the present invention will have molecular weights ranging from about 3,000 Daltons to about 8,000 Daltons (± 1,000 Daltons).

In another embodiment, the heparin-derived HCII catalytic agents of the present invention can have the following formula: 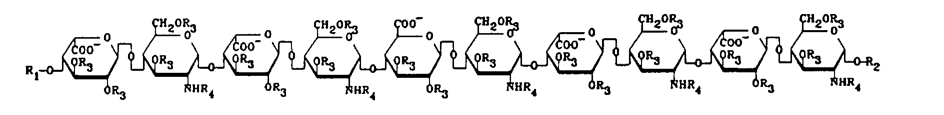 In the above formula, R₁ and R₂ are members independently selected from the group consisting of H, D-glucosamine acid residue, D-glucuronic acid residue and L-iduronic acid residue. R₃, in the above formula, is a member selected from the group consisting of H and SO₃⁻. Finally, R₄ is a member selected from the group consisting of H, SO₃⁻ and CH₃CO⁻. As mentioned, the HCII catalytic agents of the present invention will typically have molecular weights ranging from about 3,000 Daltons to about 8,000 Daltons (± 1,000 Daltons).

The HCII-specific catalytic agents, *i.e.,* activating agents which catalyze HCII-mediated inactivation of fibrin-bound thrombin, obtained from heparin preparations can be prepared using a number of different methods. As noted above, in a preferred embodiment, the HCII-specific catalytic agents of the present invention are heparin preparations which have been prepared from heparin using the following chemical reactions: (1) depolymerisation of unfractionated heparin to yield LMWH; (2) oxidation of the resulting LMWH to open the ring structures the unsulphated uronic acid moieties; and (3) reduction of the oxidized LMWH to reduce the aldehydes (to alcohols) formed during the depolymerisation and oxidation steps. In a further preferred embodiment, the HCII-specific catalytic agents of the present invention are prepared from heparin using the following chemical reactions: (1) depolymerisation of unfractionated heparin to yield LMWH using nitrous acid; (2) oxidation of the resulting LMWH using sodium periodate; and (3) reduction of the oxidized LMWH using sodium borohydride. In this preferred embodiment the resulting low affinity, low molecular weight heparin is a mixture of heparin molecules having a native sugar (*e.g.,* a uronic acid residue) as the nonreducing terminal and a 2,5-anhydromannitol residue as a non-reducing terminal, and having molecular weights ranging from about 3,000 to about 8,000 Daltons.

More particularly, heparin with low affinity for ATIII is prepared from standard unfractionated heparin (specific activity 150 to 160 anti-factor Xa and anti-factor IIa units/mg) or low molecular weight heparin either chemically by an oxidation reaction followed by a reduction reaction or, alternatively, by ATIII affinity chromatography. In a preferred embodiment, heparin with low affinity for ATIII is prepared chemically. Such chemical modifications involve treating the vicinal alcohol groups present in the heparin preparation with an oxidizing agent followed by a reducing agent in accordance with the protocol set forth in the Example Section. Suitable oxidizing agents include, but are not limited to, sodium periodate, dimethyl sulphoxide, acid anhydrides, lead tetraacetate and ascorbic acid. Suitable reducing agents include, but are not limited to, sodium borohydride, lithium aluminum hydride, other metal hydrides and hydrazine. A preferred class of reductants comprises soluble metal hydrides, for example a Group I metal borohydride, especially sodium borohydride. These reactions cleave the vicinal, *i.e.,* C2-C3, bond of a critical non-sulphated glucuronic acid residue found within the pentasaccharide sequence of heparin. Cleavage of this bond markedly reduces the affinity of heparin for ATIII. Alternatively, ATIII affinity chromatography can be used to select those heparin chains with little or no affinity for ATIII. When prepared by either technique, the resultant low affinity heparin (LAH) has the following characteristics:
a) It is essentially devoid of ATIII-catalyzing activity (with 1.5 anti-factor Xa units/mg), but retains anti-factor IIa activity (of about 2 to about 5 units/mg) because of its ability to catalyze HCII.
b) Compared to the starting material, the LAH or LA-LMWH has reduced anticoagulant activity in plasma (as measured by either the activated partial thromboplastin time or the thrombin clotting time), but it retains its ability to catalyze the inactivation of thrombin in buffer containing physiological concentrations of HCII (*see,* Table 1).

**TABLE 1**

| TCT (seconds) | |
|---|---|
| Baseline | 19.2 |
| V18 120 µg/mL | 26.5 |
| V18 240 µg/mL | 31.5 |
| V18 480 µg/mL | 37.2 |
| V18 960 µg/mL | 43.6 |
| DS 120 µg/mL | 75.9 |
| DS 240 µg/mL | 445 |
| DS 480 µg/mL | 577 |
| DS 960 µg/mL | 841 |
| LAH 120 µg/mL | 556 |
| LAH 240 µg/mL | 717 |
| LAH 480 µg/mL | 1065 |
| LAH 960 µg/mL | 3403 |
| Hirudin 10 U/mL | > 500 |
| Hirudin 20 U/ml | > 500 |

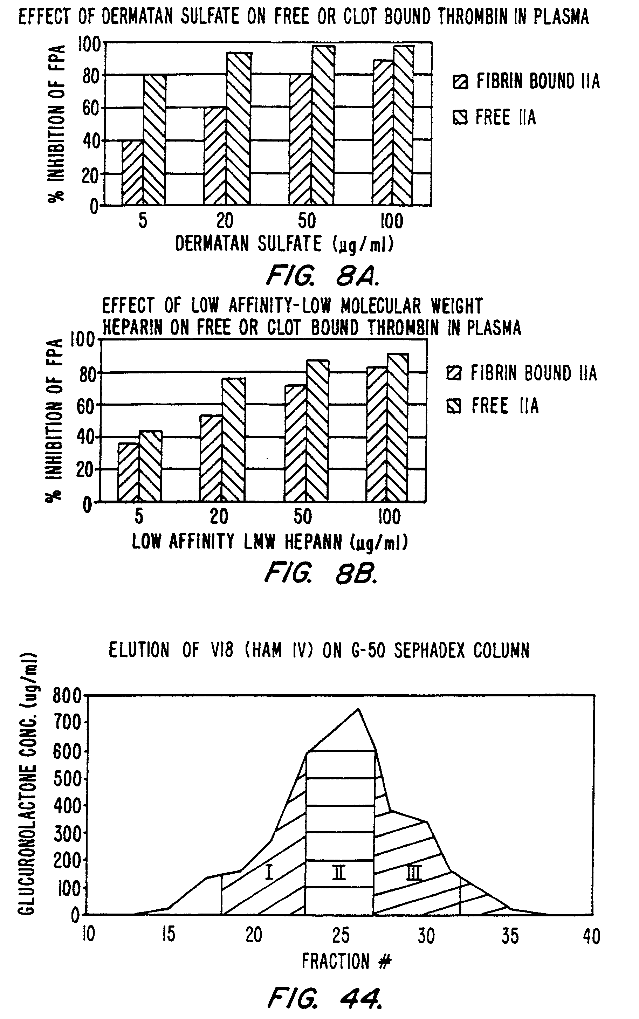

c) In filter-containing plate assays, the LAH is as effective as standard heparin at promoting HCII-mediated displacement (FIG. 6) and inactivation (FIG. 7) of fibrin-bound thrombin. Both standard heparin and LAH inhibit fibrin-bound thrombin to a greater -extent than LAH displaces it, consistent with the concept that HCII is able to bind and inactivate thrombin that remains bound to fibrin via exosite 2.
d) Most of the thrombin displaced by either standard heparin or LAH is covalently complexed to HCII as determined by SDS-PAGE analysis (data not shown).
e) Based on the extent of inhibition of clot-induced fibrinopeptide A (FPA) generation in plasma, LAH is as effective as standard, unfractionated heparin at inactivating fibrin-bound thrombin (FIGS. 8A and 8B). In a hanging clot assay, both agents produce only minimal thrombin displacement because the thrombin is bound to fibrin via exosite 2, leaving exosite 1 and the active site free to interact with HCII.

A low molecular weight heparin (LMWH) fraction can be prepared using a variety of techniques, including chemical depolymerisation using nitrous acid, enzymatic degradation with heparinase and gel filtration. In a preferred embodiment, LWMH is prepared from standard, unfractionated heparin using nitrous acid depolymerisation. The resulting LMWH is typically a mixture of heparin molecules having molecular weights ranging from about 3,000 Daltons to about 8,000 Daltons (± 1,000 Daltons). This mixture of materials can be used directly or, alternatively, it can be separated into its various components using, for example, gel exclusion chromatography. For instance, the LMWH mixture can be arbitrarily separated into three fractions by gel exclusion chromatography. Fraction 1 has a mean molecular weight of about 8,000 Daltons, Fraction 2 has a mean molecular weight of about 5,000 Daltons and Fraction 3 has a mean molecular weight of about 3,000 Daltons. As illustrated by the examples set forth herein, these three fractions have properties which are distinct from each other as well as from the mixture of materials, *i.e.*, the mixture of heparin molecules having molecular weights ranging from about 3,000 Daltons to about 8,000 Daltons. Thus, depending on whether the mixture of materials, Fraction 1, Fraction 2, Fraction 3 or various combinations of these materials are used, one can take advantage of different properties.

Although LA-LMWH, *e.g.*, V18, is less effective than standard heparin at displacing thrombin from the fibrin-coated filter (FIG. 6), it effectively inhibits the bound thrombin (FIG. 7). For example, 4 µM of V18, a HCII-specific catalytic agent which is a mixture of LA-LMWH molecules having molecular weights ranging from about 3,000 to about 8,000 Daltons, only displaces 60% of the bound thrombin, but produces greater than 85% inhibition of the activity of the bound enzyme. However, V18 causes less inhibition of fluid-phase thrombin because 4 µM V18 produces a thrombin clotting time of only 50s, whereas 4 µM of standard heparin produces an unmeasurable thrombin clotting time.

The LA-LMWH of the present invention has the following characteristics:
a) Its specific activity is about 0.2 to about 1.5 anti-factor Xa units/mg and about 2 to about 5 anti-factor IIa units/mg.
b) Compared to both standard unfractionated heparin and LAH, LA-LMWH has reduced anticoagulant activity in plasma (as measured by the thrombin clotting time) and produces less catalysis of HCII-mediated thrombin inactivation in buffer containing physiological concentrations of HCII (*see,* Table 1, *supra*).
c) In filter-containing plate assays, LA-LMWH is less effective than standard heparin or LAH at promoting HCII-mediated displacement of fibrin-bound thrombin, but it is able to promote the inactivation of the bound thrombin to a similar extent (FIGS. 7 and 8).
d) Based on its ability to inhibit clot-induced fibrinopeptide A (FPA) generation in plasma (FIGS. 8A and 8B), LA-LMWH is substantially as effective as standard, unfractionated heparin and LAH at inactivating fibrin-bound thrombin. In contrast, the LA-LMWH is less than about one-tenth as effective as heparin and LAH at inactivating free thrombin in a thrombin clotting time assay. Thus, compared to standard, unfractionated heparin and LAH, the LA-LMWH selectively promotes the inactivation of fibrin-bound thrombin.

Thus, the products and HCII-specific catalytic agents of the present invention preferably have one or more of the following characteristics. In one embodiment, the present invention preferably provides heparin preparations that have been chemically modified in two ways. First, they are chemically depolymerised using, *e.g.*, nitrous acid and, thus, reduced in size to about one-third of the size of the heparin parent molecule and, thus, they typically have molecular weights ranging from about 3,000 to about 8,000 Daltons (± 1,000 Daltons). This modification results in a marked loss of their ability to catalyze the activity of heparin co-factor II (HCII) against free thrombin, while retaining their ability to catalyze the activity of HCII against surface-bound thrombin. Second, they are subjected to oxidation and reduction reactions which result in a loss of about 95 to about 99% of their antithrombin III-binding activity. More particularly, they have weak ATIII catalytic activity as evidenced by an anti-factor Xa level of approximately 0.2 to about 1.5 units per ml, which represents about a 95 to about 99% reduction in activity compared to the unmodified low molecular weight heparin. Thus, the resulting HCII activating agents of the present invention have weak activity against free thrombin, as evidenced by their inability to prolong the thrombin clotting time more than five-fold at concentrations which effectively inactivate surface-bound thrombin. These two properties, namely, a relatively greater ability than other HCII catalysts (such as dermatan sulphate) to inactivate surface-bound than free thrombin and some, albeit markedly reduced, ATIII-dependent anti-factor Xa activity, are responsible for their improved anti-thrombic effects compared to heparin, dermatan sulphate and hirudin in a bypass circuit, which is a measure of surface-bound thrombin, at concentrations which have a lesser effect than these other anticoagulants on the inactivation of free thrombin as measured by the prolongation of the thrombin clotting time.

As a result of the foregoing properties, the products and HCII-specific catalytic agents (activating agents) of the present invention, *i.e.,* catalysts which are capable of displacing and/or inactivating clot-bound thrombin, can be used for preventing thrombus formation and/or for blocking thrombus growth in a patient without producing excessive bleeding, *i.e.,* preferably without producing a clinically unsafe increase in systemic bleeding. More particularly, the HCII activating agents of the present invention can be administered in doses which inactivate surface-bound thrombin, but which have only small effects at inhibiting free thrombin. As such, in another embodiment, the present invention provides a product for inhibiting thrombus formation in a patient, preferably without inducing a clinically unsafe increase in systemic bleeding, the product comprising a pharmacologically acceptable dose of a heparin cofactor II-specific catalytic agent capable of inactivating clot-bound thrombin, the HCII-specific catalytic agent being characterized by: (i) a heparin cofactor II specific activity against heparin cofactor II of about 2 to about 5 units/mg in an anti-factor IIa assay; (ii) an antithrombin III (ATIII) specific activity against factor Xa of about 0.2 to about 1.5 units/mg in an anti-factor Xa assay; and (iii) a solubility in aqueous media ranging from about 150 to about 1,000 mg/ml.

The HCII-specific catalytic agents (and other thrombin-inactivators) of the present invention are effective when used alone or, alternatively, when used with low doses of heparin or low molecular weight heparin which are required to inactivate free thrombin. In heparin-resistant conditions (*i.e.,* disorders requiring very high doses of heparin), for example, the HCII-specific catalytic agents of the present invention can be used as a heparin-sparing agent. As such, in another embodiment, the present invention provides combinations and, preferably, blends of an HCII-specific catalytic agent and an ATIII catalytic agent. Such blends are useful for inhibiting thrombogenesis in a patient without substantially inhibiting normal coagulation. Thus, the blends of the present invention are useful for inhibiting thrombus formation in a patient without inducing a clinically unsafe increase in systemic bleeding. In addition, such blends or combinations are useful for prophylaxis, for the treatment of venous or arterial thrombosis and for the prevention of clotting in extracorporeal circuits.

The blends of the present invention will typically be from about 90 to about 99.9 percent by weight of an HCII-specific catalytic agent and, more preferably, from about 95 to about 98.5 percent by weight; and from about 0.1 to about 10 percent by weight of an ATIII catalytic agent and, more preferably, from about 0.5 to about 5 percent by weight. Typically, the overall HCII activating activity of the blends will be about 2 to about 5 units/mg and, more preferably, about 2 to about 4 units/mg. ATIII catalytic (activating) agents suitable for use in the blends of the present invention include, but are not limited to, heparin and LMWH. In addition, other agents can be added as desired to modify the blend, including, for example, LMWH (0.1 to 5 wt %), heparin (0.1 to 5 wt %), direct thrombin inhibitors, direct inhibitors of activated factor X, *etc.*

In another embodiment, the present invention provides a product for inhibiting clot-bound thrombin and fluid-phase thrombin in a patient, preferably without inducing a clinically unsafe increase in systemic bleeding, the product comprising (i) an HCII-specific catalytic agent capable of inactivating clot-bound thrombin, the HCII-specific catalytic agent having minimal affinity for antithrombin III (ATIII) and a heparin cofactor II specific activity of about 2 to about 5 units/mg in an anti-factor IIa assay; and (ii) an ATIII catalytic agent capable of inactivating fluid-phase thrombin. Suitable ATIII activating (catalytic) agents include, but are not limited to, heparin, low molecular weight heparin, direct thrombin inhibitors and direct inhibitors of activated factor X. Moreover, in relation to this product, the HCII activating agent (HCII-specific catalytic agent) and the ATIII catalytic agent can be administered to the patient simultaneously, separately or sequentially. When administered to the patient simultaneously, the HCII-specific catalytic agent and the ATIII catalytic agent can be administered together as a single solution or compound or, alternatively, they can be administered separately as two different solutions or compounds.

The thrombin inactivators and HCII-specific catalytic agents, combinations and blends of the present invention can be incorporated as components in pharmaceutical compositions which are useful for treating the cardiovascular conditions described above. Such compositions will also be useful in conjunction with conventional thrombolytic treatments, such as the administration of tissue plasminogen activator (tPA), streptokinase, and the like, as well as with intravascular intervention, such as angioplasty, atherectomy, and the like.

Suitable pharmaceutical compositions will contain a therapeutically effective dose of one or more active products of the invention, e.g. a HCII-specific catalytic agent of the present invention, in a pharmaceutically acceptable carrier. Other suitable pharmaceutical compositions will contain a therapeutically effective dose of a blend of an active product and an ATIII-specific catalytic agent. By a "therapeutically effective dose" or, interchangeably, "pharmacologically acceptable dose," it is meant that a sufficient amount of the product or HCII-specific catalytic agent or, alternatively, a combination or blend of for example, a HCII-specific catalytic agent and an ATIII-specific catalytic agent will be present in order to inactivate clot-bound thrombin and/or to inhibit thrombus accretion when treating a thrombus-related cardiovascular condition, such as those described above.

Typically, the active product or HCII-specific catalytic agent will be present in the pharmaceutical composition at a concentration ranging from about 200 mg per dose to 2 g per dose and, more preferably, at a concentration ranging from about 500 mg per dose to 1 g per dose. Daily dosages can vary widely, depending on the activity of the particular HCII-specific catalytic agent employed, but will usually be present at a concentration ranging from about 30 µg per kg of body weight per day to about 500 µg per kg of body weight per day and, more preferably, at a concentration ranging from about 50 µg per kg of body weight per day to about 200 µg per kg of body weight per day.

With respect to the combined or blended pharmaceutical compositions, the active product or HCII-specific catalytic agent will be present at a concentration ranging from about 3 mg/kg per dose to about 30 mg/kg per dose and, more preferably, at a concentration ranging from about 3 mg/kg per dose to 10 mg/kg per dose, and the ATIII catalytic agent will be present at a concentration ranging from about 10 U/kg per dose to 500 U/kg per dose and, more preferably, at a concentration ranging from about 15 U/kg per dose to 100 U/kg per dose. Daily dosages can vary widely, depending on the activity of the particular HCII-specific and ATIII catalytic agents employed. Typically, the HCII-specific catalytic agent will usually be present at a concentration ranging from about 3 mg per kg of body weight per day to about 30 mg per kg of body weight per day and, more preferably, at a concentration ranging from about 3 mg per kg of body weight per day to about 10 mg per kg of body weight per day, whereas the ATIII catalytic agent will usually be present at a concentration ranging from about 10 U per kg of body weight per day to about 500 U per kg of body weight per day and, more preferably, at a concentration ranging from about 15 U per kg of body weight per day to about 100 U per kg of body weight per day.

The pharmaceutically acceptable carrier can be any compatible, nontoxic substance suitable to deliver the active product HCII catalytic agent or the blend of a HCII-specific catalytic agent and an ATIII-specific catalytic agent to the patient. Sterile water, alcohol, fats, waxes, and inert solids can be used as the carrier. Pharmaceutically acceptable adjuvants, buffering agents, dispersing agents, and the like can also be incorporated into the pharmaceutical compositions. Such compositions will be suitable for oral, nasal, respiratory or parenteral administration, preferably being suitable for parenteral administration, *i.e.,* subcutaneous, vascular and intravenous administration. It may also be preferred to deliver the substances provided by the present invention via transdermal administration.

In view of the foregoing, it is readily apparent to those of skill in the art that the HCII-specific catalytic agents or active products of the present invention can effectively be used to selectively inhibit clot- or fibrin-bound thrombin without inducing a clinically unsafe increase in systemic bleeding. In addition, the HCII-specific catalytic agents of the present invention can effectively be used in combination with other ATIII catalytic agents (*e.g.,* heparin or LMWH) to inhibit both clot-bound thrombin and fluid-phase thrombin without inducing a clinically unsafe increase in systemic bleeding. As such, the HCII-specific catalytic agents of the present invention can be used alone or in combination with other ATIII catalytic agents to treat a number of important cardiovascular complications, including unstable angina, acute myocardial infarction (heart attack), cerebral vascular accidents (stroke), pulmonary embolism, deep vein thrombosis, arterial thrombosis, *etc.*

In addition to being useful in pharmaceutical compositions for the treatment of the cardiovascular conditions described above, one of skill in the art will readily appreciate that the active products or HCII activating agents (HCII-specific catalytic agents) and combinations of the present invention can be used as reagents for elucidating the mechanism of blood coagulation *in vitro.*

Having produced heparin fractions or derivatives thereof having the desired properties described above, other thrombin inactivators or HCII-specific catalytic agents having similar catalytic specificity and/or affinity can be produced by a variety of methods well-known to those of skill in the art. For example, Fodor, *et al.*, U.S. Patent No. 5,143,854 describe a technique termed "VLSIPS," in which a diverse collection of short peptides are formed at selected positions on a solid substrate. Such peptides are then screened for the ability to conformationally alter HCII, such screening optionally in competition with the heparin fractions. Libraries of short peptides can also be produced and screened using phage-display technology (*see, e.g.,* Devlin, WO91/18980). Optionally, these polypeptides or variants produced by other methods, can be variegated to achieve improved binding affinity for HCII (*see, e.g.,* Ladner, U.S. Patent No. 5,223,409, which is incorporated by reference in its entirety for all purposes).

Peptidic analogs of the HCII activators can be prepared by conventional solid phase synthesis or recombinant techniques, both of which are well described in the art. Suitable solid phase synthesis techniques are based on the sequential addition of amino acids to a growing chain on a solid-phase substrate, as first described in Merriefield, *J*. *Am. Chem. Soc.* 85:2149-2156 (1963). Commercial systems for automated solid-phase synthesis are now widely available from suppliers, such as Applied Biosystems, Inc., Foster City, California. Moreover, recombinant polypeptide production techniques are widely described in the technical and scientific literature. *See,* for example, *Molecular Cloning: A Laboratory Manual*, Sambrook, *et al*., Eds., Cold Spring Harbor Laboratory Press, Cold Spring Harbor, New York (1989), Vols. 1-3.

Small molecule mimetics of the HCII-specific catalytic agents or active products of the present invention can be achieved through the use of techniques known to those working in the area of drug design. Such methods include, but are not limited to, self-consistent field (SEF) analysis, configuration interaction (CI) analysis, and normal mode dynamics computer programs, all of which are now readily available. *See,* Rein, *et al*., *Computer-Assisted Modeling of Receptor-Ligand Interactions*, Alan Liss, New York (1989) and Navia and Marcko, "Use of Structural Information in Drug Design," in *Current Opinion in Structural Biology,* Vol. 2, No. 2, pages 202-210, 1992. The preparation of compounds identified by these techniques will depend on their structure and other characteristics and may normally be achieved by standard chemical synthesis methods as described in available texts, such as Furniss, *et al.*, *Vogel's Textbook of Practical Organic Chemistry.,* John Wiley & Sons, New York 1992 and Larock, *Comprehensive Organic Tranformations*, VCH Publishers, Inc., New York 1989.

The invention will be described in greater detail by way of specific examples. The following examples are offered solely for illustrative purposes. In the Examples, the thrombin inactivators of the invention are illustrated by heparin-derived HCII-specific catalytic agents but the invention is not limited to such agents.

### EXAMPLES

### A. Preparation of Material

Heparin is a glycosaminoglycan (GAG) isolated from natural sources (usually pig gut mucosa). One aspect of the present invention is to prepare a low molecular weight heparin fraction that is essentially devoid of antithrombin III catalyzing activity, yet retains the ability to catalyze heparin cofactor II. As a consequence of its ability to catalyze heparin cofactor II, this modified GAG can inactivate thrombin bound to fibrin.

Generally, low molecular weight heparin is prepared from standard unfractionated heparin by benzylation followed by alkaline depolymerisation; nitrous acid depolymerisation; enzymatic depolymerisation with heparinase; or peroxidative depolymerisation. In a presently preferred embodiment, low molecular weight heparin is prepared from standard heparin using nitrous acid depolymerisation. The low molecular weight heparin is then further modified to reduce its affinity for antithrombin III. This can be accomplished chemically or, alternatively, through the use of an antithrombin III affinity column. In a presently preferred embodiment, this is accomplished chemically by an oxidation reaction followed by a reduction reaction. The resulting low affinity, low molecular weight heparin is typically a mixture of heparin molecules having molecular weights ranging from about 3,000 to about 8,000 Daltons. This range corresponds to about 10 to about 24 monosaccharide units. The specific activity of this material is about 2 to about 5 anti-thrombin units/mg and less than about 1.5 (starting, 100 anti-Xa) anti-Xa units/mg.

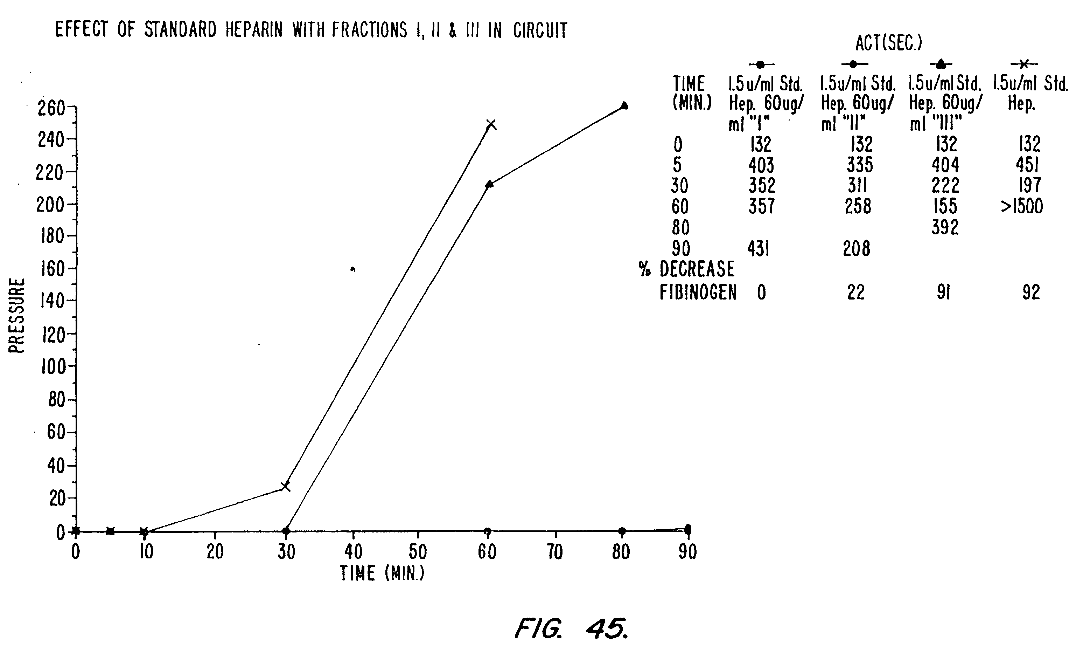

The LA-LMWH mixture of materials can be used directly or, alternatively, it can be separated into its various components using, for example, gel exclusion chromatography. The LA-LMWH fraction generally yields three LA-LWMH fractions when separated by gel exclusion chromatography. Fraction 1 has a mean molecular weight of about 8,000 Daltons, Fraction 2 has a mean molecular weight of about 5,000 Daltons and Fraction 3 has a mean molecular weight of about 3,000 Daltons. FIG. 44 illustrates the elution profile of the LA-LMWH mixture of materials using a G-50 SEPHADEX column and various concentrations of glucuronolactone. As with the LA-LMWH mixture of materials, the specific activity of each of these three LA-LMWH fractions is about 2 to about 5 anti-thrombin units/mg and less than about 1.5 (starting, 100 anti-Xa) anti-Xa units/mg.

The following examples illustrate experimental protocols which can be used to prepare the HCII-specific catalytic agents of the present invention. As noted above, in a presently preferred embodiment, the chemical reactions leading to the preparation of the HCII-specific catalytic agents of the present invention are: (1) nitrous acid depolymerisation of heparin to yield low molecular weight heparin; (2) periodate oxidation of low molecular weight heparin to open the ring structures of unsulphated uronic acid moieties; and (3) borohydride reduction of aldehydes (to alcohols) formed during the nitrous acid and periodate steps.

### 1. Example 1: Preparation of V-18, Lot #7-1

### a. Step 1: Isolation of LMW-heparin, Lot #7

Porcine intestinal heparin (250 grams) was dissolved in 5 liters of purified water (5% solution). Sodium nitrite (3.45 grams) was added and dissolved into the solution to give a 10 mM concentration. The solution temperature was between 18 and 24 degrees Celsius. Over the course of about 2 minutes, 30 mls of 37% HCl were added and the pH adjusted from an initial value of 6.32 to a final pH of 3.00. The resultant solution was then stirred for 2 hours at ambient temperature to allow depolymerisation to occur. At the end of the 2 hour incubation, the pH was adjusted upwards to a value of 6.75 by slow addition of about 18 mls of 50% NaOH solution.

The sample was then diluted to a volume of 12.5 liters and ultrafiltered against 10 volumes of purified water using a Millipore Pellicon ultrafiltration device equipped with 10,000 molecular weight cut-off membranes (1.5 m²). The permeate from the ultrafiltration was then concentrated and dialyzed using a Millipore Pellicon ultrafiltration unit equipped with 3,000 molecular weight cut-off membranes (1.5 m²). Once the 125 liters of permeate was concentrated to about 6 liters, it was then dialyzed against 3-volumes of purified water. The retentate was then freeze-dried to give LMW-heparin, Lot#7. Yield = 106 grams (42%)

Molecular weight characteristics of LMW-heparin intermediate #7 (above) were determined by high performance size exclusion chromatography in conjunction with multiangle laser light scattering (HPSEC-MALLS) and are compiled in Table 2

**TABLE 2 -**

| HPSEC-MALLS Results for LMW-Heparin Intermediate & V18 Product | | | | | | | |
|---|---|---|---|---|---|---|---|
| **Lot:** | **#7** | **#7-1** | **#9** | **#9-1** | **#9-2** | **#20** | **#20-1** |
| **>2,000** | 100 | 100 | 99.8 | 100 | 100 | 99.2 | |
| **>3,000** | 100 | 100 | 80.4 | 100 | 100 | 76.4 | |
| **>4,000** | 57.5 | 61.8 | 50.1 | 63.6 | 63.9 | 52.1 | |
| **>5,000** | 35.0 | 39.9 | 29.9 | 36.2 | 36.4 | 35.5 | |
| **>6,000** | 22.2 | 25.0 | 18.2 | 20.6 | 20.6 | 24.4 | |
| **>7,000** | 14.0 | 16.3 | 10.8 | 12 | 11.8 | 16.5 | |
| **>8,000** | 9.2 | 10.5 | 6.4 | 6.5 | 6.5 | 11.6 | |
| **>9,000** | 5.8 | 7.1 | 3.6 | 3.6 | 3.6 | 7.7 | |
| **Mw**^{**ii**} | 4,989 | 5,228 | 4,583 | 5,022 | 5,024 | 4,920 | |
| **Mn**^{**iii**} | 4,421 | 4,602 | 4,031 | 4,582 | 4,603 | 4,067 | |
| **Mw/Mn**^{**iv**} | 1.129 | 1.136 | 1.137 | 1.096 | 1.091 | 1.210 | |

| | | | | | | | |
|---|---|---|---|---|---|---|---|
| *i* Weight fraction above a given molecular weight, expressed in percent. *ii* Weight-average molecular weight. | | | | | | | |
| *iii* Number-average molecular weight. | | | | | | | |
| *iv* Polydispersity. | | | | | | | |

### b. Steps 2 and 3: Oxidation and Reduction of LMW-heparin. Lot #7

LMW-heparin, Lot #7 (100 grams) was dissolved in 1 liter of purified water at 4-10 degrees Celsius. One liter (1 liter) of 200 mM sodium acetate, pH 5.0 was added to the dissolved sample. Two liters (2 liters) of 200 mM sodium periodate was added to the buffered LMW-heparin solution. The resultant solution was incubated in the dark at 4-10 degrees C for 48 hours with gentle stirring.

After 48 hours, excess sodium periodate was destroyed by addition of glycerol (70 mls). The pH of the resultant reaction mixture was raised to neutrality with ∼10 mls of 50% NaOH solution and the resultant solution diluted to about 5.5 liters. This solution was then dialyzed (ultrafiltered) using the Millipore Pellicon system equipped with 3,000 MWCO membranes (as in Step 1 above). After ∼7 volumes of permeate were collected, the oxidized LMW-heparin intermediate solution was concentrated to a volume of∼3 liters.

Reduction of the oxidized intermediate was carried out as follow: Sodium bicarbonate (63 grams) was added and mixed into the above 3 liter solution to give ∼0.25 M NaHCO₃ solution. This solution was kept cold (4-100°C) while a solution (1.2 liters) containing 22.8 grams of NaBH₄ (also 4-100°C) was slowly added with stirring. Once all the NaBH₄ solution was added, the reaction was kept at 4-100°C for 3.5 hours. The reaction pH was then adjusted to 4.0 with 6M HCl (∼230 mls), mixed for ∼30 minutes, then adjusted upwards in pH to 6.2 with 50% NaOH addition. This sample was then ultrafiltered again against the 3,000 MWCO membranes using the Millipore Pellicon system (7 volumes) and finally sterile filtered through a 0.2 1 Sterivex (Millipore) filter. The resultant solution was freeze-dried to give V-18, Lot#71. Yield = 76.6 grams.

Molecular weight characteristics of the product were determined by HPSEC-MALLS and are compiled in Table 2, *supra.*

### 2. Example 2: Preparation of V-18, Lots #9-1 and 9-2

### a. Step 1: Isolation of LMW-Heparin, Lot# 9

Porcine intestinal heparin (250 grams) was dissolved in 5 liters of purified water (5% solution). Sodium nitrite (8.62 grams) was added and dissolved into the solution to give a 25 mM concentration. The solution temperature was between 18 and 24 degrees Celsius. Over the course of about 2 minutes, 33 mls of 37% HCI were added and the pH adjusted from an initial value of 6.32 to a final pH of 3.01. The resultant solution was then stirred for 2 hours at ambient temperature to allow depolymerisation to occur. At the end of the 2 hour incubation, the pH was adjusted upwards to a value of 6.28 by slow addition of 50% NaOH solution.

The sample was then diluted to a volume of 10 liters and ultrafiltered against 7 volumes of purified water using a Millipore Pellicon ultrafiltration device equipped with 3,000 MWCO membranes (1.5 m²). The sample was then concentrated to ∼3.5 liters and freeze-dried to give LMW-heparin Lot#9. Yield = 120.4 grams (48%)

Molecular weight characteristics of LMW-heparin intermediate #9 were determined by HPSEC-MALLS and are compiled in Table 2, *supra.*

### b. Steps 2 and 3: Oxidation and Reduction of V-18, Lots 9-1 and 9-2

Two identical but separate fifty gram (50 gm) samples of LMW-heparin, Lot #9, were treated as follows: LMW-heparin (50 gm) was dissolved in 500 ml of purified water (4-100C). Sodium acetate buffer (500 mls of 200 mM, pH 5.0) was added to each identical sample. Sodium periodate (1,000 mls of 200 mM solution) was then added to each reaction and the resultant solutions were each incubated in the dark and cold for 72 hours. After the 72 hr. incubation, glycerol (40 mls) was added to each sample to destroy excess periodate. The reaction pH was then raised to ∼6.5 for each sample and each ultrafiltered against 7 volumes of purified water using the Pellicon system equipped with 3,000 MWCO membranes.

Reduction of each of the resultant oxidized LMW-intermediates and all other steps in the workup were exactly as indicated for sample 7-1 in Example 1 (above). Yields of V-18, Lots #9-1 and 9-2 were: 37.4 gms and 36.7 gms, respectively.

Molecular weight characteristics of V-18, Lots #9-1 and 9-2 were determined by HPSEC-MALLS and are compiled in Table 2, *infra.*

### 3. Example 3: Preparation of V-18, Lot #20-1

### a. Step 1: Isolation off LMW-Heparin, Lot #20

Porcine intestinal heparin (500 grams) was dissolved in 10 liters of purified water (5% solution). Sodium nitrate (9.0 grams) was added and dissolved into the solution to give a 12.8 mM concentration. The solution temperature between 18 and 24 degrees Celsius. Over the course of about 2 minutes, 59 mls of 37% HCl were added and the pH adjusted from an initial value of 6.27 to a final pH of 3.00. The resultant solution was then stirred for 2 hours at ambient temperature to allow depolymerisation to occur. At the end of the 2 hour incubation, the pH was adjusted upwards to a value of 6.57 by slow addition of about 38 mls of 50% NaOH solution.

The sample was then diluted to a volume of 17 liters and ultrafiltered against 10 volumes of purified water using a Millipore Pellicon 11 ultrafiltration device equipped with 8,000 molecular weight cut-off membranes (1.5 m²). The permeate from the ultrafiltration was then concentrated and dialyzed using a Millipore Pellicon II ultrafiltration unit equipped with 3,000 molecular weight cut-off membranes (1.5 m²). Once the 170 liters of permeate was concentrated to about 8.5 liters, it was then dialyzed against 7-volumes of purified water. The retentate was then freeze-dried to give LMW-heparin, Lot #20. Yield = 171.3 grams (34%).

Molecular weight characteristics of LMW-heparin intermediate #20 (above) were HPSEC-MALLS) and are compiled in Table 2, *supra.*

### b. Steps 2 and 3: Oxidation and Reduction of V-18. Lot 20-1

LMW-heparin (170 gms. of Lot #20) was dissolved in 1,700 mls of purified water (4-10°C). Sodium acetate buffer (1,700 mls of 200 mH, pH 5.0) was added and mixed with the sample. Sodium periodate (3,400 mls of 200 mM solution) was then added to the mixture to initiate reaction and the resultant solution was incubated in the dark and cold for 72 hours. After the 72 hr. incubation, glycerol (115 mls) was added to destroy excess periodate. The reaction pH was then raised to 6.5 and the oxidised LMW-heparin ultrafiltered vs 7 volumes of purified water using the Pellicon II system equipped with 3,000 MWCO membranes.

Reduction of the resultant oxidised LMW-intermediate and all other steps in the workup were exactly as indicated for sample 7-1 in Example 1. Yield of V-18 lots # 20-1 were 131 gms.

Molecular weight characteristic of V-18 lot #20-1 was determined by HPSEC-MALLS and is included in Table 2, *supra.*

### B. Filtration-Based Assay

In addition to examining the ability of various heparin derivatives to catalyze HCII-mediated inactivation of fluid-phase thrombin, their ability to displace and inactivate thrombin bound to fibrin was also studied. In this system, a fibrin clot was formed on a filter-covered well of a 96 well plate by adding 25 µl of buffer containing 8 µM fibrinogen, 8 mM CaCl₂ and 8 nM ¹²⁵I-labeled thrombin to each well. After incubation for 30 minutes at room temperature, the resultant clot was washed twice with 150 µl of buffer and the bound thrombin was quantified by counting the radioactivity. Varying concentrations of the different materials derived from heparin were added with and without HCII. In each case, these components were added in a 20 µl volume, incubated for 20 min and then aspirated through the filter plate. This step was repeated and the clot was then washed twice with 50 µl of buffer. The amount of thrombin displaced from the clot was determined by counting the wash buffer, whereas the amount of thrombin that remained bound to the fibrin was quantified by counting the filter. The enzymatic activity of the residual bound thrombin was determined by adding a synthetic thrombin substrate and monitoring changes in the fluorescent signal due to the reaction over a 3 minute interval. Finally, the wash buffers were collected and the filters were punched out and, after boiling in SDS-containing buffer, were subjected to SDS-PAGE followed by autoradiography to determine the extent to which thrombin was complexed to HCII.

As illustrated in FIG. 6, 1 µM HCII (which is the physiologic HCII concentration) displaces only small amounts of thrombin. SH, LASH, LMWH and a heparin fraction with a molecular weight of 3,000 Daltons do not displace thrombin without HCII. However, when used in conjunction with 1 µM HCII, these substances all displace thrombin (FIG. 6), with SH and LASH producing more displacement than LMWH (which has a mean molecular weight of about 5,500 Daltons). However, all of the agents inhibit the thrombin that remains bound to the fibrin (FIG. 7), with the SH and LASH producing almost complete inhibition at high concentrations and the LA-LMWH, *i.e.,* V18, producing somewhat less inhibition. Gel electrophoresis analysis of the material that remains bound to the filter indicates that most of the thrombin is complexed to HCII, thereby explaining its lack of chromogenic activity. These findings suggest that the thrombin that remains bound to the fibrin is bound via exosite 2, thereby leaving exosite 1 and the active site available to interact with HCII.

### C. Hanging Clot Assay

The Hanging Clot Assay is used to examine the inhibitory effect of agents against fluid-phase and clot-bound thrombin activity. To determine the inhibitory effect against fluid-phase thrombin activity, I-thrombin (0.2-4.0 nM) was incubated with citrated plasma for 60 min at 37°C in the presence or absence of heparin at the concentrations indicated. At the end of the incubation period, the plasma levels of Fibrinopeptide A (FPA) were determined, and the percent inhibition of FPA generation was then calculated for each inhibitor concentration. To determine the inhibitory effect against clot-bound thrombin activity, washed fibrin clots were incubated in citrated plasma for 60 min at 37°C in the presence or absence of varying concentrations of heparin. At the end of the incubation period, the plasma levels of FPA were determined, and the percent inhibition of clot-induced FPA generation was then calculated for each inhibitor concentration. Each bar represents the mean of three separate experiments (each done in duplicate), while the lines above the bars represent the SD.

FIGS. 8A and 8B illustrate studies comparing the relative ability of dermatan sulphate (the prototype HCII catalyst) and one of the LA-LMWH HCII-specific catalysts of the present invention, *i.e.,* V18, to inactivate free and fibrin-bound thrombin using the hanging clot assay. At 5 µg/ml, LA-LMWH was much more selective than dermatan sulphate (dermatan sulphate was only half as effective at inactivating fibrin-bound thrombin, while LMWH was almost as effective at inactivating fibrin bound and free thrombin). At 20 µg/ml, the advantage of LA-LMWH was still apparent even though it was somewhat less obvious. At higher concentration, both are almost 90% as effective at inactivating fibrin-bound and free thrombin.

Other results from the Hanging Clot Assay also indicate that the LA-LMW HCII catalysts of the present invention bind to and inactivate clot- or thrombus-bound thrombin. In these experiments, a 250 µl clot containing labelled thrombin was suspended in 10 ml of solution containing either 150 mM NaCI or 2 M NaCl. One of the following was added to the isotonic buffer: HCII 0.25 or 0.5 µM 100 µg of the LA-LMWH HCII-specific catalytic agent, or the combination of HCII and the LA-LMWH HCII-specific catalytic agent. The following measurements were made: (1) diffusion of thrombin out of the clot; (2) the catalytic activity of thrombin on the clot, which was assessed by measuring fibrinopeptide A production after removing the clot and adding it to a fibrinogen solution; and (3) the extent of thrombin/HCII complex formation, which was assessed by solubilizing the clot and performing SDS-PAGE and autoradiography.

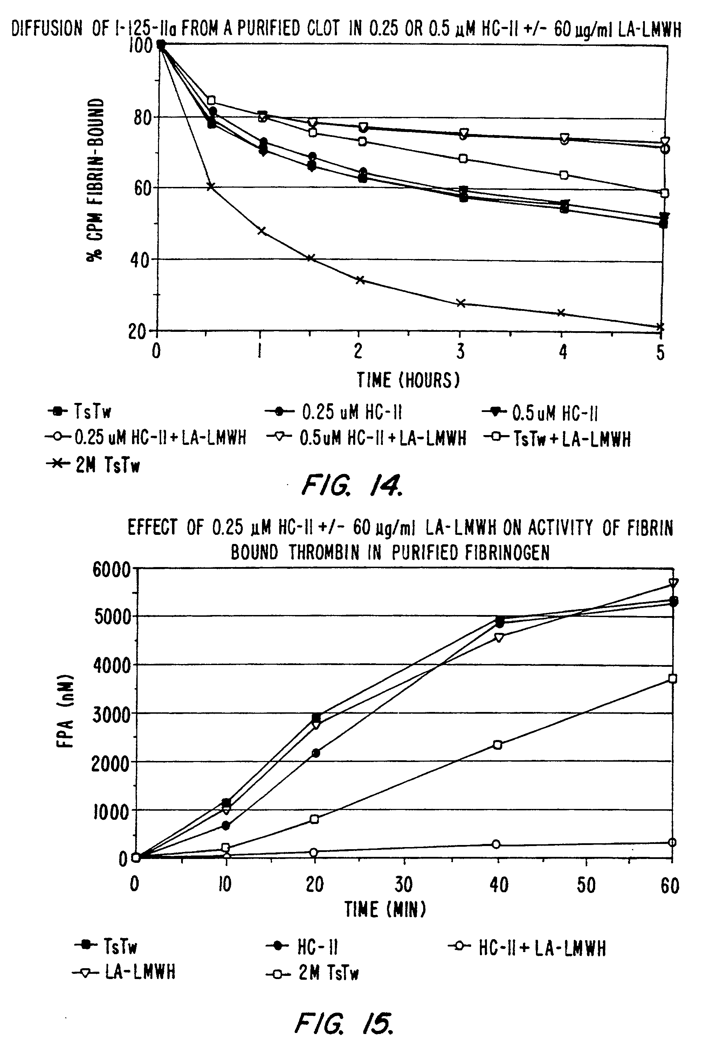

FIG. 14 illustrates the rate of diffusion of labelled thrombin from the fibrin clot. After 5 hours, about 40% of the thrombin remained in the clot suspended in 150 mM NaCl. Neither the addition of HCII alone or in combination with the LA-LMWH HCII-specific catalytic agent, *i.e.,* V18, influenced the rate of diffusion. In fact, the combination of HCII and the LA-LMWH HCII-specific catalytic agent actually reduced the diffusion rate to a small extend. In contrast, the diffusion rate of thrombin was markedly increased when the clot was suspended in 2 M NaCI.

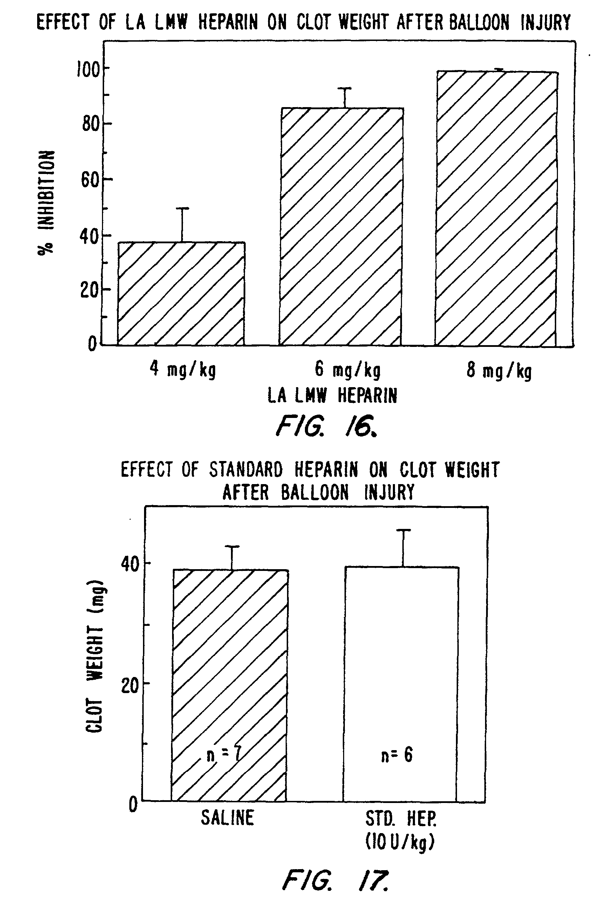

FIG. 15 compares the catalytic activity of clot-bound thrombin measured by removing the clot after five hours of incubation with the initial solutions and suspending it in a fibrinogen solution. Clots that have been suspended in 150 nM NaCl in the presence or absence of HCII or the LA-LMWH HCII-specific catalytic agent, *i.e.*, V18, alone generated about 6000 nM FPA. In contrast, FPA production by clots that had been suspended in 150 mM containing the combination of HCII and the LA-LMWH HCII-specific catalytic agent was suppressed by approximately 95%. The clots that had been suspended in 2 M NaCl generated about 4000 nM FPA, consistent with the fact that these contain about half the thrombin found in clots incubated in low salt buffer with or without HCII. These findings indicate that the LA-LMWH HCII-specific catalytic agent of the present invention, *i.e.*, V18, inactivates clot-bound thrombin in the presence of HCII, but as illustrated in FIG. 14, it does this without displacing thrombin from the clot. This supports the concept that thrombin binds to fibrin via exosite 2, leaving exosite 1 available to interact with HCII (*see,* U.S. Patent Application Serial No. 08/175,211 (filed December 27, 1993), the teachings of which are hereby incorporated by reference).

Analysis of the gels indicates that a large percentage of the thrombin recovered from the clots that had been suspended in buffer containing the combination of HCII and the LA-LMWH HCII-specific catalytic agent, *i.e.*, V18, was complexed to HCII. In contrast, predominately uncomplexed thrombin was recovered in clots suspended in buffer containing HCII alone or the LA-LMWH HCII-specific catalytic agent alone. These findings indicate that the LA-LMWH HCII-specific catalytic agent, *i.e.*, V18, produces permanent inactivation of clot-bound thrombin by catalyzing covalent complex formation between thrombin and HCII.

### D. Extracorporeal Recirculation Circuit

The selective ability to inactivate fibrin-bound thrombin was demonstrated by using an extracorporeal closed circuit containing human blood to measure the ability of various anticoagulants to inactivate surface-bound thrombin, and the thrombin clotting time was used to measure the ability of the various anticoagulants to inactivate fluid-phase thrombin. A LA-LMWH HCII-specific catalytic agent of the present invention, *i.e.*, V18, was compared to the following anticoagulants: dermatan sulphate, low molecular weight heparin, unfractionated heparin and hirudin.

### 1. The Extracorporeal Closed Circuit

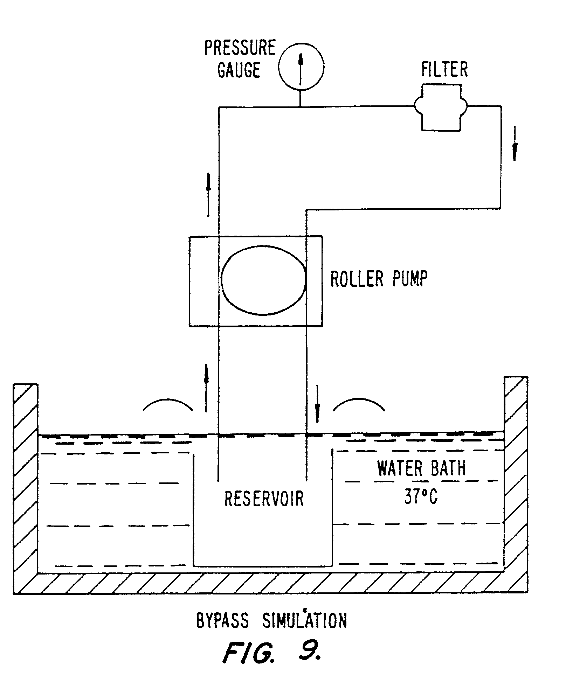

A diagram of the extracorporeal closed circuit is shown in FIG. 9. The circuit consists of Tygon tubing (3/16" x 1/16") connected to a 40 micron transfusion filter (Pall SQ40S). The system includes 3-way stopcocks for blood sampling. A surgical pressure transducer connected to a pressure recorder (Hewlett-Packard) is connected in line with the filter so that clotting of the filter causes a steady increase in pressure. Citrated whole blood taken from normal, healthy volunteers is used. The circuit is filled with 50 ml of whole blood placed in a reservoir and kept in a waterbath maintained at 37°C. The anticoagulant to be tested is added to the circuit, clotting is initiated by recalcification (0.8 ml of 1.0 M CaCl₂), and the blood is recirculated at a constant flow rate through the thrombogenic surface using a roller head pump (Cole-Parmer MFLX modular drive with a large F/6 roll head cartridge). Thrombosis of the filter is monitored by a change in pressure in a gauge inserted into the circuit, proximal to the filter. Progressive obstruction to flow occurs as fibrin forms on the surface of the filter and, in addition, as thrombin bound to the clot or thrombus promotes further clotting.

The inactivation of surface-bound thrombin and fluid-phase thrombin can be measured simultaneously using this system. More particularly, inactivation of surface-bound thrombin is quantified by recording the delay in clotting of the circuit. This delay is contributed to, albeit to a lesser extent, by the inactivating effect of the anticoagulant on fluid phase thrombin, whose generation is potentiated by the clot-bound thrombin. Inactivation of fluid phase thrombin is quantified by recording the thrombin clotting time of plasma prepared from blood removed from the circuit just before recalcification.

### 2. Results

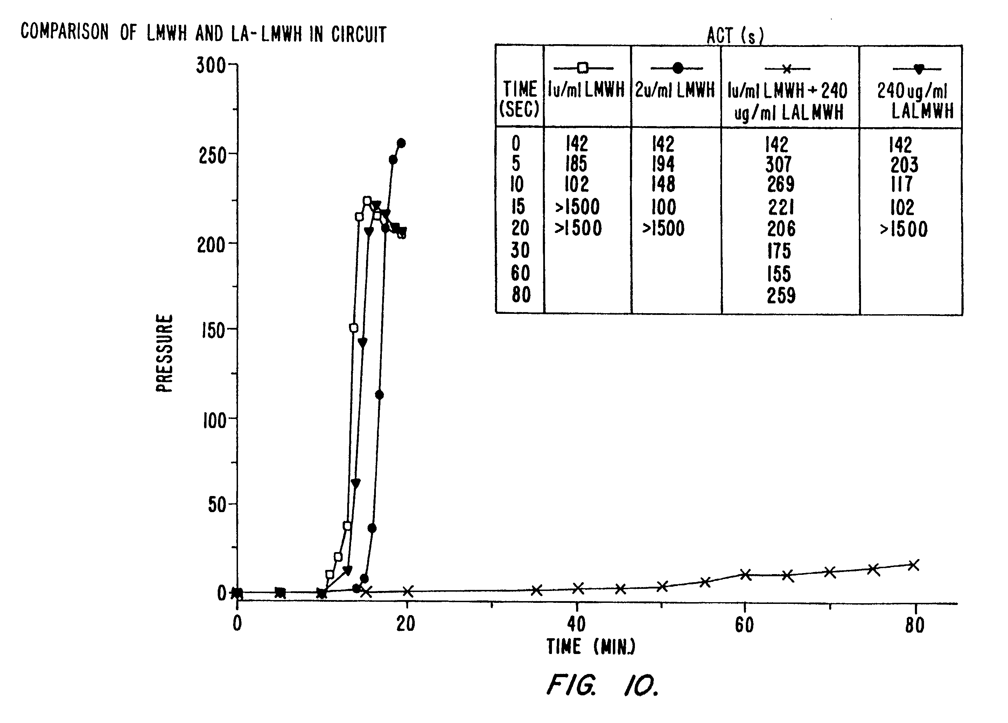

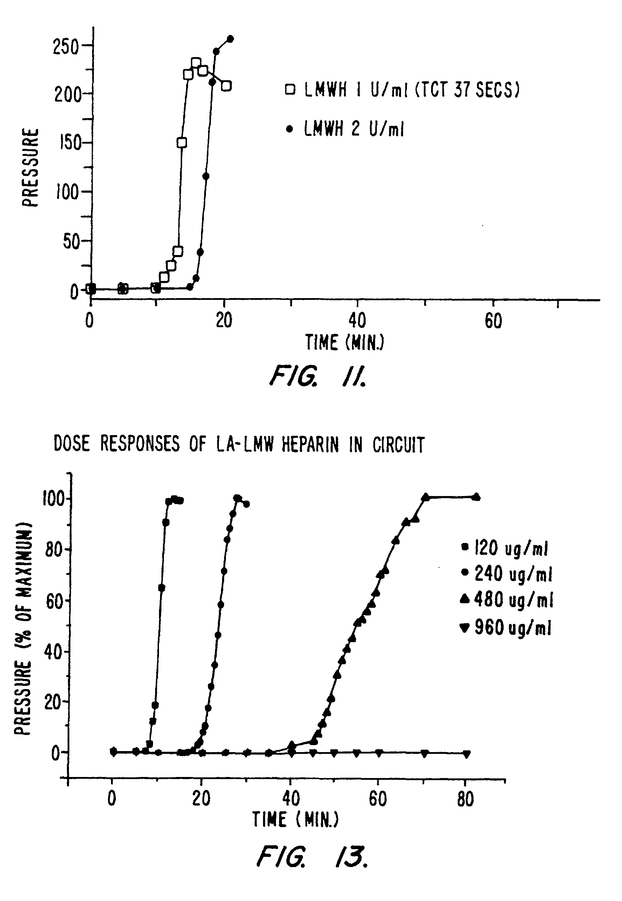

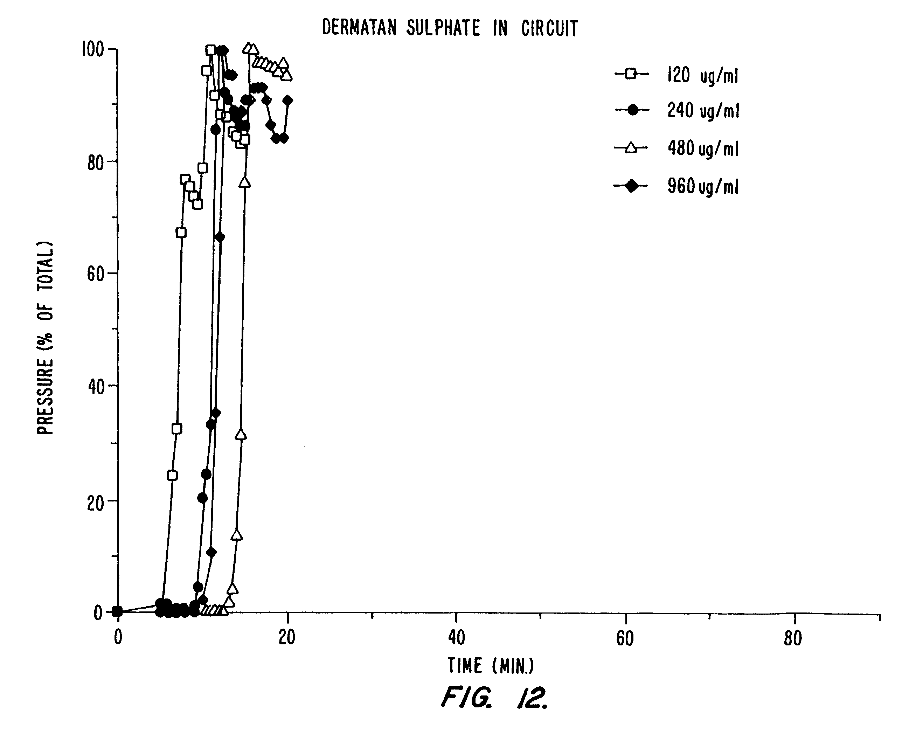

The following points summarize the results of experiments in which: a) one of the two HCII catalysts, *i.e.*, the LA-LMWH HCII-specific catalytic agent (V18) or dermatan sulphate, was added to the blood alone (FIG. 2); b) the HCII catalysts were added in combination with a low concentration (less than 2% by weight) of an unmodified low molecular weight heparin (LMWH) (FIG. 10); c) the unmodified LMWH was added alone (FIG. 11); d) dermatan sulphate was added alone (FIG. 12); e) hirudin was added alone (FIG. 3); and f) the LA-LMWH was added alone (FIG. 13).

FIGS. 12 and 13 illustrate the comparative effects dermatan sulphate and the LA-LMWH HCII-specific catalytic agent of the present invention, *i.e.,* V18, have on clotting in the circuit over a concentration range of 120µg/ml to 960µg/ml. As seen in FIG. 13, the LA-LMWH HCII-specific catalytic agent, *i.e.,* V18, produces a dose-dependent inhibition of clotting in the circuit. More particularly, clotting occurs in the circuit in about 20 minutes with a LA-LMWH dose of 240 µg/ml, and is abolished with a LA-LMWH dose of 960µg/ml. The corresponding thrombin clotting times are shown in Table 1, *supra.* Table 3, *infra*, shows the comparative effects of various concentrations of LMWH or blends of LA-LMWH with LMWH or dermatan sulphate. The thrombin clotting time was 26 seconds at a LA-LMWH concentration of 240µg/ml, and 43.6 seconds for a LA-LMWH concentration of 960µg/ml. In contrast, as shown in FIG. 12, clotting in the circuit occurred in less than 10 minutes with a dermatan sulphate dose of 240µg/ml, even though the corresponding thrombin clotting time was over 500 seconds (*see,* Table 1, *supra*). Moreover, clotting in the circuit occurred in less than 20 minutes with a dermatan sulphate dose of 960µg/ml, even though the corresponding thrombin clotting time was 841 seconds (*see,* Table 1, *supra*).

**TABLE 3**

| THROMBIN CLOTTING TIME (2 unit) | |
|---|---|
| ADDITION | TCT (seconds) |
| Control | 21 |
| 0.5 unit/mL LMWH | 20 |
| 1.0 unit/mL LMWH | 37 |
| 2.0 unit/mL LMWH | 64 |
| 240 µg/mL LA-LMWH | 26 |
| 240 µg/mL DS | >500 |
| 0.5 unit/mL LMWH+ 240 µg/mL LA-LMWH | 20 |
| 0.5 unit/mL LMWH+ 240 µg/mL DS | >500 |
| 1 unit/mL LMWH+ 240 µg/mL LA-LMWH | 38 |
| 1 unit/mL LMWH+ 240 µg/mL DS | >500 |
| LMWH - Low molecular weight heparin | |
| LA-LMWH - Low affinity, low molecular weight heparin (V18) | |
| DS - Dermatan sulphate | |

In addition, the relative effects of the LA-LMWH HCII-specific catalytic agent, *i.e.,* V18, and dermatan sulphate were compared when aliquots of the same human blood sample were tested in the model (FIG. 2). On a weight basis, the LA-LMWH HCII-specific catalytic agent is more effective than dermatan sulphate at preventing thrombosis of the circuit. Thus, 480 µg/ml of the LA-LMWH HCII-specific catalytic agent was able to completely prevent clotting for 90 minutes, whereas an 8-fold increase in the amount of dermatan sulphate could not totally prevent clotting in the circuit. In contrast, dermatan sulphate is a much more effective inhibitor of fluid phase thrombin (*see,* Table 1, *supra*). For example, in this experiment at 240µg/ml, the thrombin clotting time for the LA-LMWH HCII-specific catalytic agent is about 26 seconds (control 21 seconds) compared to greater than 500 seconds for dermatan sulphate.

FIG. 11 illustrates the effects of 1 anti-Xa unit/ml and 2 anti-Xa units/ml of unmodified LMWH on clotting of the filter and on the thrombin clotting time. At these concentrations, the LMWH has minimal effects on preventing shunt thrombosis even though the thrombin clotting time was prolonged to 37 and 64 seconds, respectively (*see*, Table 3, *infra*)*.*

FIG. 10 illustrates the results of using a blend of a HCII-specific catalyst, *i.e.,* V18, and an efficient ATIII catalyst (*e.g.,* LMWH). At concentrations of 0.5 anti-factor Xa units/ml of LMWH (which produced a thrombin clotting time of 20 seconds), unmodified LMWH was ineffective at preventing clotting of the filter, but when the same amount of LMWH was used in conjunction with 240 µg/ml of the LA-LMWH HCII-specific catalytic agent, *i.e.,* V18, the blend was highly effective in inhibiting clotting of the filter. The blend of the LMWH and dermatan sulphate was also very effective. However, the corresponding thrombin clotting time for the LMWH/dermatan sulphate combination was greater than 500 seconds, whereas the corresponding thrombin clotting time for the blend of the LMWH/LA-LMWH HCII-specific catalytic agent was only 20 seconds (*see,* Table3).

These findings clearly indicate that compared to dermatan sulphate, the LA-LMWH HCII-specific catalytic agent of the present invention, *i.e.*, V18, has selective activity against fibrin-bound thrombin. Thus, it is more effective than dermatan sulphate at preventing filter clotting, but it produces much less prolongation of the thrombin clotting time because it has less inhibitory activity against fluid phase thrombin.

In contrast to the LA-LMWH HCII-specific catalytic agent, hirudin is much less effective at preventing thrombosis in the circuit at concentrations which prolong the thrombin clotting time to over 500 seconds, at concentrations which prolong the thrombin clotting time to less than 500 seconds (*see,* FIG. 3 and Table 1), and when a combination of the LA-LMWH HCII-specific catalytic agent and LMWH are used to prolong the thrombin clotting time to less than 30 seconds (*see,* FIG. 11 and Table 1).

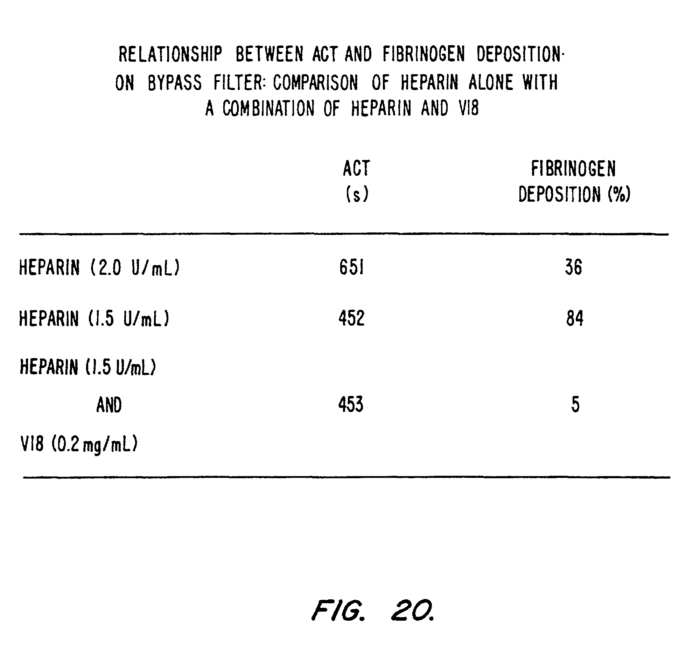

FIG. 19 illustrates the effect of heparin or heparin in combination with V18 in a bypass simulation model. In addition, FIG. 20 sets forth the relationship between ACT and fibrinogen deposition on a bypass filter. In FIG. 20, heparin alone is compared with heparin in combination with V18.

### E. Animal Disease Models of Venous Thrombosis Prevention

### Example I

### 1. Surgical Procedures

Studies were done in male New Zealand white rabbits weighing between three and four kilograms. The right and left jugular veins were exposed through a ventral incision in the neck. A 2 cm segment of each jugular vein was identified and side branches were ligated. After a venous blood sample was collected for coagulation studies, the animals were randomized to receive an intravenous bolus of either low affinity standard heparin, low affinity low molecular weight heparin, or saline. Four minutes after this treatment, a second blood sample was collected for coagulation studies. A 4 French balloon catheter was then introduced into the right jugular vein and the balloon was inflated and the endothelium within the 2 cm jugular vein segment was damaged by 15 passages of the inflated balloon. Stasis was then induced within the 2 cm segment by placing two tourniquets approximately 2 cm apart around the blood filled segment. As soon as this was done, an intravenous bolus of thromboplastin (7 mg/kg) was injected into the left jugular vein and stasis in this vein was induced by placing two tourniquets 2 cm apart around a blood filled segment. After 15 minutes of venous occlusion, a blood sample was taken for coagulation studies and the venous segments were then explanted and the clots contained therein were weighed.

### 2. Results

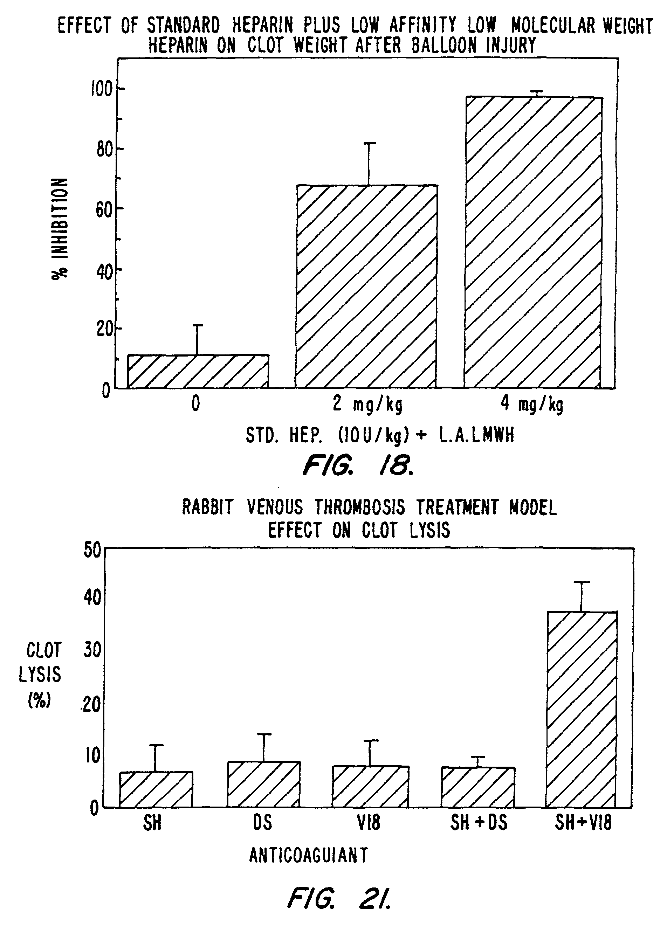

The LA-LMWH HCII-specific catalytic agents of the present invention, *e.g.*, V18, have been studied in a rabbit model simulating prophylaxis in high risk states. A dose response relationship was established. At 8 mg/kg (about 100 µg/ml which is about five times lower than that required to prevent thrombosis in the bypass circuit), there was complete inhibition of thrombosis (*see,* FIG. 16). To test the synergistic effect of combining the LA-LMWH HCII-specific catalytic agent of the present invention, *i.e.*, V18, with an ATIII catalyst, the combination of heparin at a concentration of 10 U/kg (a concentration which has no effect on thrombus formation (*see,* FIG. 17)) and the LA-LMWH HCII-specific catalytic agent, *i.e.,* V18, at a concentration of 2 mg/kg and 4 mg/kg was studied. Over 60% inhibition of thrombosis was seen when 2 mg/kg of the LA-LMWH HCII-specific catalytic agent was used (a dose which had virtually no effect when used alone), and 100% inhibition of thrombosis was seen when 4 mg/kg of the LA-LMWH HCII-specific catalytic agent was used (a dose which produced less than 40% inhibition when used alone) *(see,* FIG. 18). The thrombin clotting time was not increased when 8 mg/kg of the LA-LMWH was used alone, or when it was used in combination with 10 U/kg heparin, indicating that effectiveness is seen with minimal inhibitory effects on free thrombin.

SH and LMWH with low affinity for ATIII (LASH and LA-LMWH; respectively) were prepared from SH (specific activity, 160 anti-Xa and anti-IIa units/mg) and LMWH (specific activity, 100 anti-Xa U/mg), respectively, by periodate oxidation and subsequent reduction as described in Casu, B., *et al*., "Retention of antilipemic activity by periodate-oxidized non-anticoagulant heparins," *Arzneim-Forsch*/*Drug Res.* 36:63742 (1986). The anticoagulant activities of the low affinity derivatives were then compared with those of the starting materials and dermatan sulphate (DS). As illustrated in Table 4, when compared in equivalent amounts by weight, LASH and LA-LMWH, *i.e.,* V18, are essentially devoid of anti-Xa activity, indicating that they can no longer potentiate antithrombin III-mediated inactivation of factor Xa. In addition, these low affinity derivatives have less of an effect on the thrombin clotting times (TCT) than do the parent compounds. Thus, by abolishing their ability to catalyze ATIII, their anticoagulant activity has been reduced.

**TABLE 4**

| GAG (conc.) | Anti-Xa |
|---|---|
| | U/ml |
| SH (0.5 U/ml) | 0.3 |
| SH (2.0 U/ml) | 1.3 |
| SH (10.0 U/ml) | 6.0 |
| LASH (3 µg/ml) | 0.07 |
| LASH (11 µg/ml) | 0.06 |
| LASH (50 µg/ml) | 0.06 |
| LMWH (0.5 U/ml) | 0.6 |
| LMWH (2.0 U/ml) | 2.8 |
| LMWH (10.0 U/ml) | 11.0 |
| LA LMWH (5 µg/ml) (V18) | 0.04 |
| LA LMWH (20 µg/ml) (V18) | 0.05 |
| LA LMWH (100 µg/ml) (V18) | 0.06 |
| DS (1 µg/ml) | 0.05 |
| DS (10 µg/ml) | 0.06 |
| DS (100 µg/ml) | 0.05 |

When the activity of heparin fractions of different molecular weights were compared, a 9,000 Daltons fraction had activity close to that of SH, whereas a 5,000 Daltons fraction had activity closer to that of LMWH. In contrast, a 3,000 Daltons fraction had much less activity (FIGS. 6 and 7). These findings again are consistent with the concept that maximal catalysis of HCII occurs with heparin chains containing 20 or more monosaccharide units, which corresponds to a molecular weight of 8,000 Daltons or higher.

### Example II

### 1. Anesthesia

Specific pathogen-free, New Zealand white male rabbits were anesthetized with an intramuscular injection of ketamine (50 mg/kg) and xylazine (2 mg/kg). Once anesthetized, the ventral cervical area was shaved and prepped with alcohol and iodine solutions. 22-gauge catheters (Becton-Dickinson, Sandy, UT) were inserted into the left central auricular artery and the marginal auricular vein for blood sample collection and for intravenous administration of fluids and anticoagulants, respectively. Once these procedures were performed, rabbits were transferred into the operating room. After a brief exposure to a mixture of isoflurane (1 to 4%), oxygen (1 L/min) and nitrous oxide (0.5 L/min) by face mask, rabbits were intubated with a No. 2 Fr endothelial tube and maintained on the same mixture of inhalational anesthetics until the end of the procedure.

### 2. Clot Creation

The right external jugular and the facial vein were exposed through a ventral cervical skin incision. A segment of the facial vein was occluded with two No. 4-0 silk sutures placed 0.5 cm apart. All side branches of the jugular vein were ligated over a 2 cm length. After introducing a No. 3 Fr Fogarty thrombectomy catheter into the jugular vein through the occluded segment of the facial vein, the balloon was inflated and the endothelium lining the 2 cm segment of jugular vein was damaged by 15 passages of the catheter. Two No. 40 silk sutures were placed around the damaged vein 1.5 cm apart. The Fogarty catheter was removed and replaced with #60 polyethylene tubing passed into the isolated jugular vein segment. Blood was evacuated from the damaged vein and the segment was occluded with the sutures. The vein segment was flushed with 500 U of bovine thrombin diluted in 0.5 ml of saline for 5 minute taking care that the venous segment was totally occluded thereby preventing systemic delivery of thrombin. The thrombin solution was withdrawn and the segment was then flushed with saline.

Approximately 1 ml of arterial blood was rapidly drawn into a 1 ml syringe and mixed with approximately 1 1Ci of ¹²⁵I-labeled fibrinogen. 0.2 ml of this mixture was injected into the occluded jugular vein segment. The catheter was then removed, the facial vein was ligated and the thrombus was allowed to mature for 30 minutes, At the same time, two 0.2 ml aliquots of the same blood were allowed to clot in test tubes for 30 minute at 37°C. Since pilot studies demonstrated that thrombi formed *ex vivo* are equivalent in weight and radioactivity to those formed *in situ* in the jugular vein, the mean weight and radioactivity of the *ex vivo* clots were used as an index of the mass and radioactivity of the clots *in situ.*

Twenty minutes after thrombin injection into the jugular vein segment, animals were given either (a) heparin, 70 U/kg IV bolus and 280 U/kg s.c. 96 h X 2, (b) dermatan sulphate, 2 mg/kg IV bolus and 8 mg/kg s.c. q6h X 2, (c) V-18, 2 mg/kg IV bolus and 8 mg/kg s.c. q6h X 2, (d) a combination of heparin and dermatan sulphate in the same doses, or (e) a combination of heparin and V-18 in the same doses. Control animals were given equivalent volumes of saline at the same intervals. After 30 minutes of thrombus maturation, the tourniquets were removed and two 4-0 silk sutures were placed through the jugular vein wall into the thrombus to prevent its migration. The occluding tourniquets were then removed and blood flow through the jugular vein segment was restored. The cervical incision was flushed with 0.5 ml of penicillin and the skin was closed in a routine manner. Rabbits were left to recover breathing 100% oxygen. When they regained a gag reflex, the endotracheal tube was removed, and the animals were transferred into the recovery room.

### 3. End-points

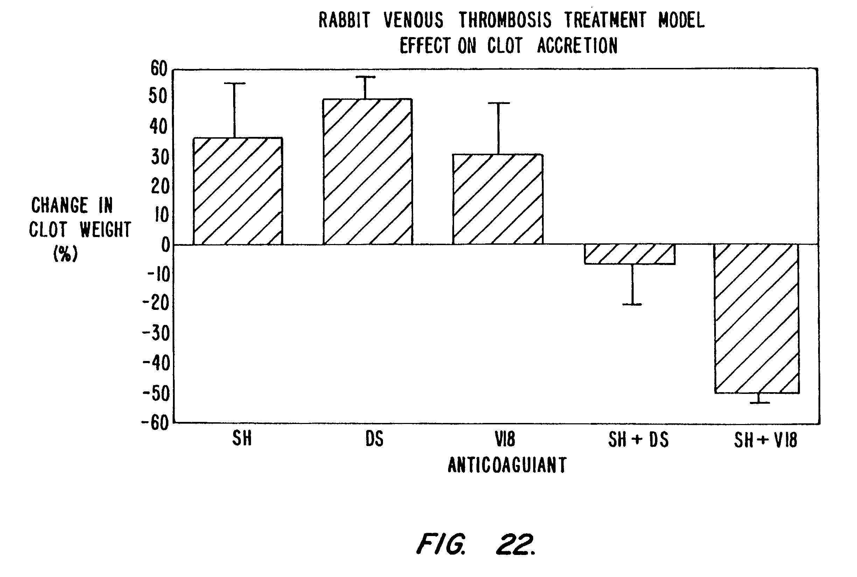

24-h after thrombus creation, the animals were euthanized and the jugular segment was opened and the residual clot was weighed and counted for radioactivity. By comparing these results with the weight and radioactivity of the clots formed *ex vivo,* the percentage change in clot weight (clot accretion) and radioactivity (clot lysis) were calculated (*See*, FIGS. 21 and 22).

### F. Coagulation Profile Of V18 And Its Fractions Compared With Low Molecular Weight Heparin And Dermatan Sulphate In Normal and ATIII- And HCII-Deficient Plasmas

Coagulation studies were performed to characterize the anticoagulant profile of V18 and three V18 fractions which were separated by gel exclusion chromatography to yield Fraction 1 (mean MW 8,000), Fraction 2 (mean MW 5,000) and Fraction 3 (mean MW 3,000). In addition, because V18 is a modified LMWH with some characteristics of Dermatan Sulphate (DS), the anticoagulant profile of V18 was compared with these two sulphated polysaccharides. Such comparisons were made using the thrombin clotting time (TCT) assay, the activated partial thromboplastin time (APTT) assay, and the factor Xa clotting time (Xa time) assay. These three assays were carried out in normal plasma, ATIII-deficient plasma and HCII-deficient plasma.

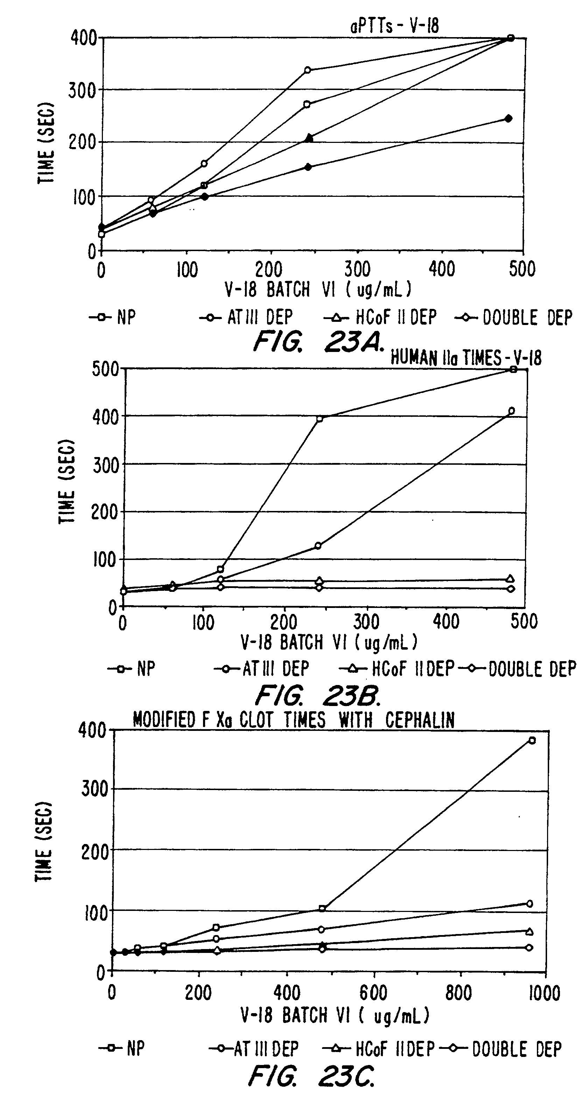

FIG. 23 illustrates the effects of V18 on the APTT (A), the TCT (B), and the factor Xa clotting time (Xa clot time) (C) in normal plasma, ATIII-deficient plasma and HCII-deficient plasma. From FIG. 23A, it is apparent that there is a dose-dependent increase in the APTT which is both ATIII- and HCII- dependent, since a similar dose-dependent prolongation is seen in normal, ATIII-depleted plasma and HCII depleted plasma. FIG. 23B illustrates that there is minimal prolongation of the TCT up to a concentration of about 120 µg/ml. Thereafter there is a sharp increase in the TCT in the normal and ATIII-depleted plasma, but only a slight increase in the HCII-depleted plasma. Such findings indicate that V18 has weak activity against free thrombin and that this activity is largely HCII dependent. FIG. 23C illustrates that there is a dose-dependent prolongation in the Xa clot time which is both HCII- and ATIII-dependent. These findings indicate that in addition to its activity against clot-bound thrombin, V18 has weak activity against fluid phase thrombin, which is HCII-dependent and additional anti-Xa activity which is ATIII-dependent.

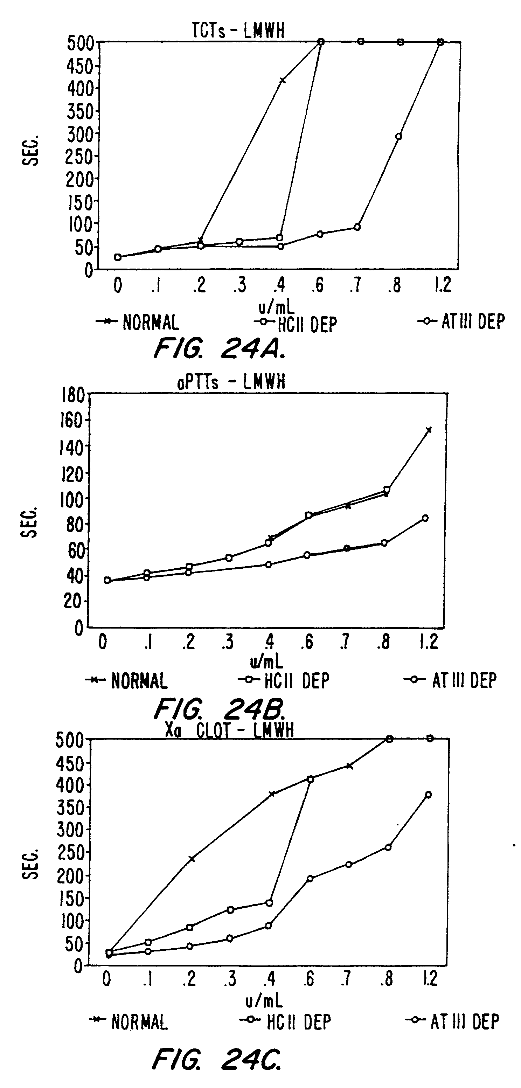

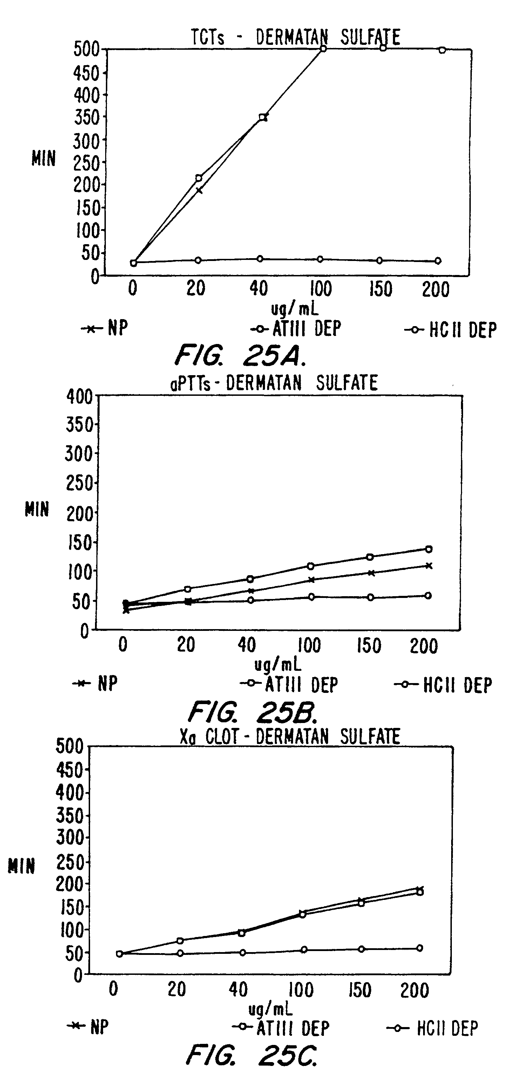

For purposes of comparison, FIGS. 24 and 25 illustrate the anticoagulant profiles of LMWH (FIG. 24) and DS (FIG. 25). In contrast to V18, the inhibitory effect of LMWH on the TCT (FIG. 24A), APTT (FIG. 24B) and Xa time (FIG. 24C) is mainly ATIII-dependent, with a minor contribution of HCII to the prolongation of the TCT and Xa time. In addition, in contrast to V18, the inhibitory effects of DS on the TCT (FIG. 25A), APTT (FIG. 25B) and Xa time (FIG. 25C) is entirely HCII-dependent.

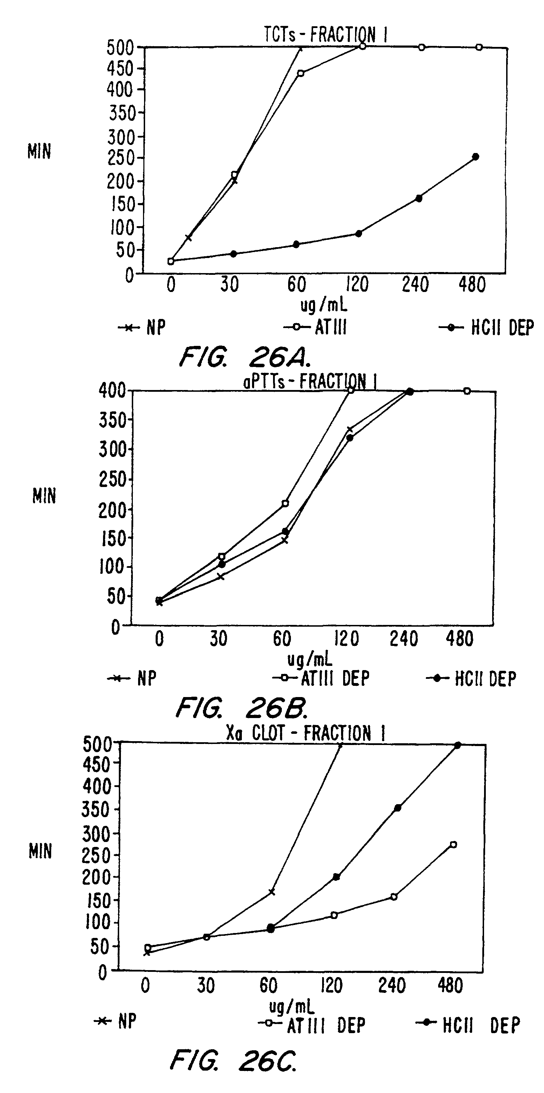

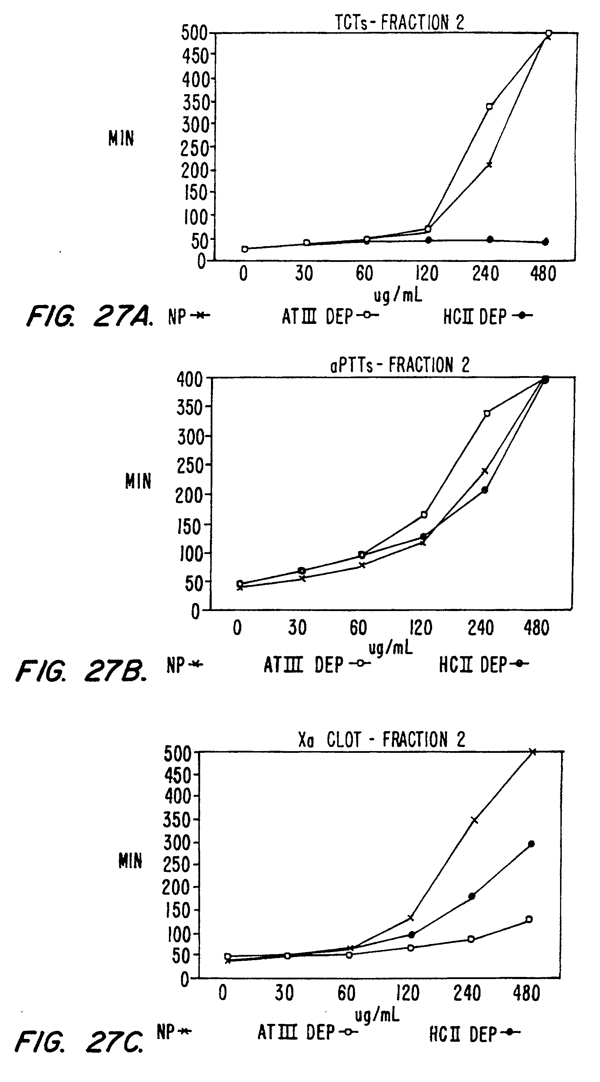

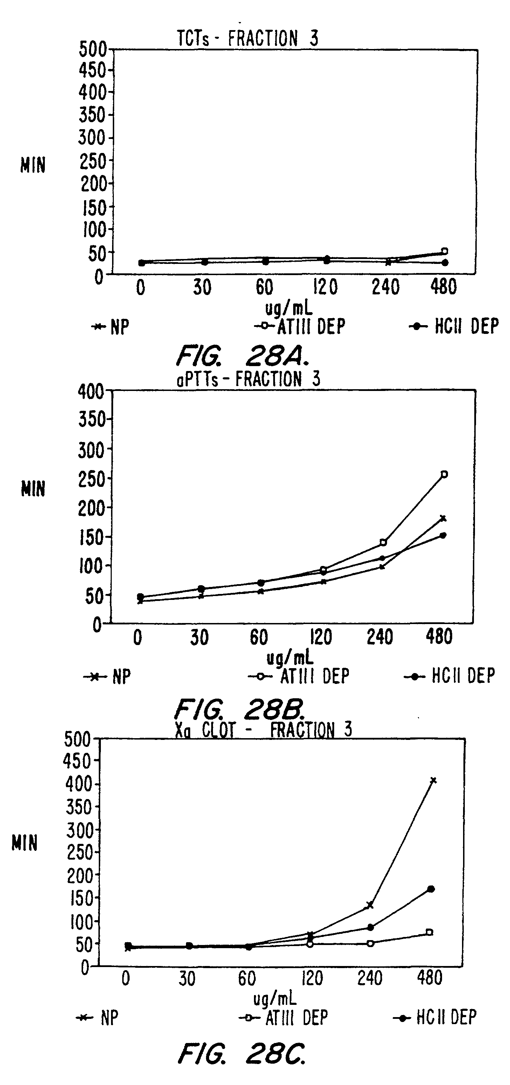

FIGS. 26, 27 and 28 illustrate the anticoagulant profiles of the three fractions of V18 which were separated by size using gel exclusion chromatography. Fraction 1 has a mean molecular weight of about 8,000, Fraction 2 has a mean molecular weight of about 5,000 and Fraction 3 has a mean molecular weight of about 3,000. The inhibitory effects of Fraction 1 on the TCT (FIG. 26A) is mainly HCII-dependent, on the APTT (FIG. 26B) both HCII- and ATIII-dependent and on Xa time (FIG. 26C) mainly ATIII-dependent. The inhibitory effects of Fraction 2 on the TCT (FIG. 27A) is HCII-dependent, on the APTT (FIG. 27B) both HCII- and ATIII-dependent and on the Xa time (FIG. 27C) mainly ATIII-dependent. In contrast to Fraction 1, Fraction 2 is much less potent against fluid phase thrombin and less potent in the APTT and Xa time assays. Fraction 3 has minimal activity in the TCT assay (FIG. 28A), and weak activity in the APTT (FIG. 28B) and Xa time (FIG. 28C) assays.

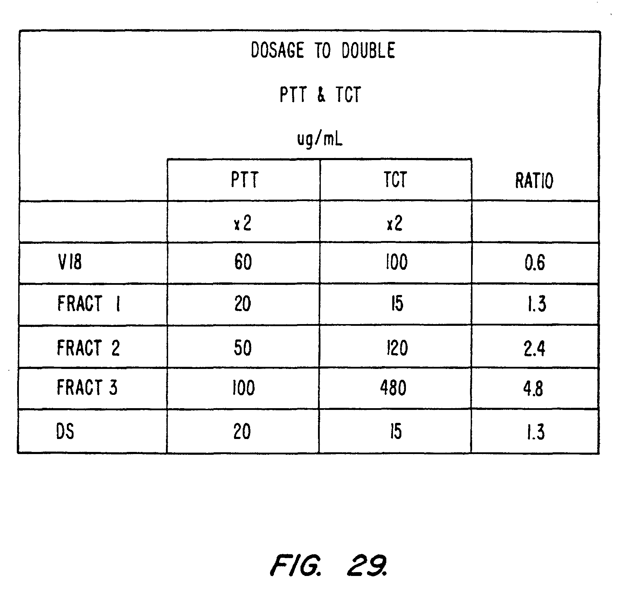

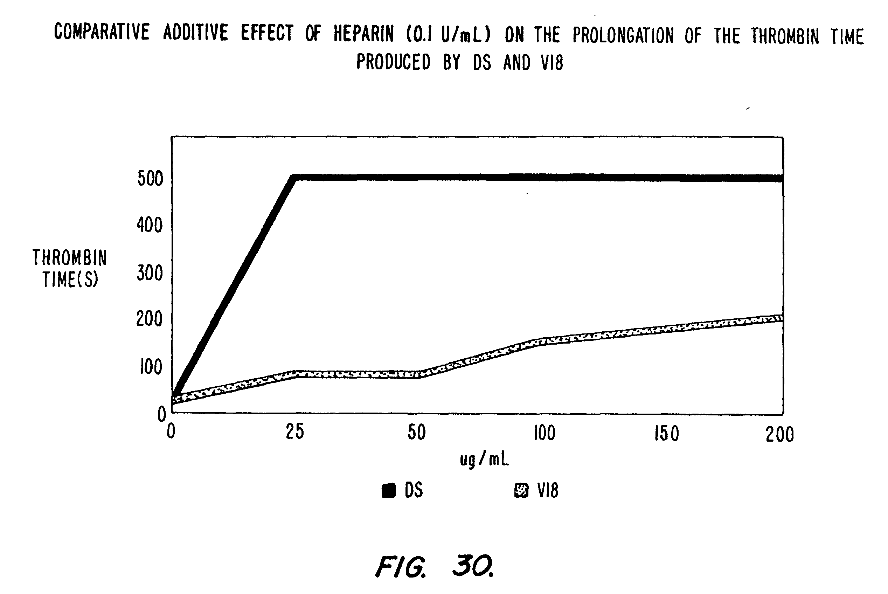

FIG. 29 is a summary table showing the concentrations of the various glycosaminoglycans (GAGS) required to double the APTT and TCT. On a weight basis, DS is much more potent than V18, and DS has similar potency to Fraction 1. The fractions of V18 lose potency with reduction in molecular weight. FIG. 30 illustrates the comparative additive effect of heparin (0.1 U/mL) on the prolongation of the thrombin time produced by DS and V18.

### G. Modified Whole Blood Clotting Time (WBCT) Assay For Testing Inhibition Of Free And Clot-Bound Thrombin

Studies were performed to compare the effects of the various GAGS on fluid phase thrombin and clot-bound thrombin in a modified whole blood clotting time assay. Clots were prepared around polystyrene hooks by adding 250 µl CaCl₂ to 10 ml of platelet-poor plasma (final concentration 0.025 M). The clots were allowed to age for 1 hour at 37°C. They were then removed, attached to the hooks and washed four times for 30 minutes. Control clots with PPACK-inactivated clot-bound thrombin were prepared by incubating the clots for the first 30 minute incubation with 10 µM PPACK. The whole blood clotting times were performed by adding 950 µl of human blood obtained from a normal donor to 50 µl of the anticoagulant (or buffer control). The clots (clot-bound thrombin) or PPACK clots (inactivated clot-bound thrombin) which were attached to the polystyrene hooks, or free-thrombin at a sufficient concentration to reduce the baseline clotting time to that obtained with clot-bound thrombin (free thrombin) were added to the tubes of blood which were incubating at 37°C, and the clotting time was recorded using the tilt tube method.

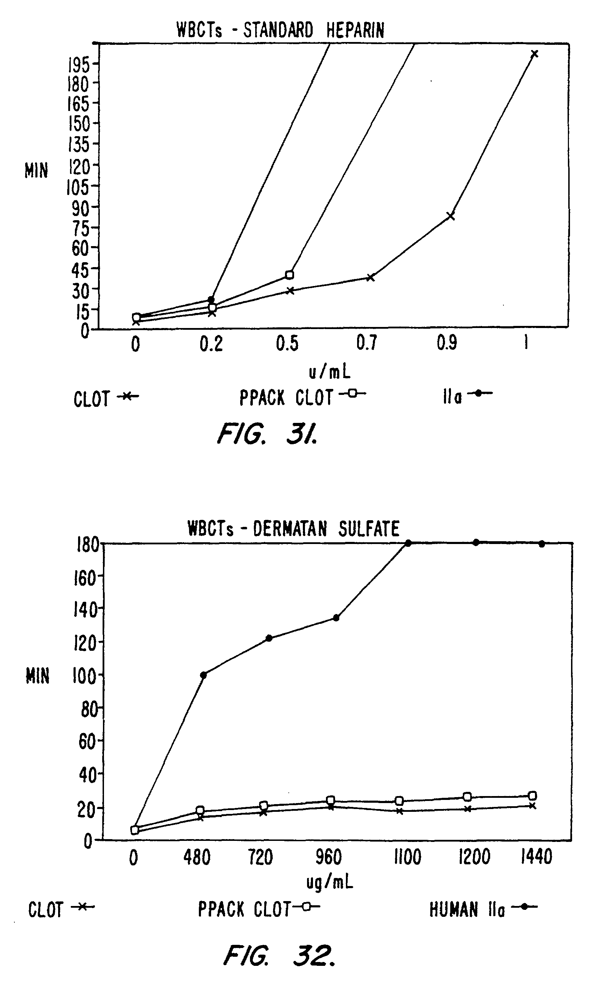

FIG. 31 illustrates the effect of increasing doses of heparin on the whole blood clotting time to which thrombin (A), a PPACK clot (B) and clot-bound thrombin (C) is added. The IC 50 was 0.3 units/ml, 0.6 units/ml and 0.9 units/ml for the free thrombin, the PPACK clot and the clot-bound thrombin, respectively. Thus, the ratio for the relative sensitivity of this whole blood system to the effects of free thrombin (A) to clot-bound thrombin (C) is about 3, and the ratio for the relative sensitivity of the whole blood system to the effects of the PPACK-inactivated clot (B) to the clot-bound thrombin (C) is about 1.5.

FIG. 32 illustrates the effect of increasing doses of DS on the whole blood clotting time to which thrombin (A), a PPACK clot (B) and clot-bound thrombin (C) is added. The IC 50 was 480 µg/ml for the free thrombin, and it was >1440 for both the PPACK clot and the clot-bound thrombin. Thus, the ratio for the relative sensitivity of the whole blood system to the effects of free thrombin (A) and clot-bound thrombin (C) is >3.0, and the ratio for the relative sensitivity of the whole blood system to the effects of the PPACK-inactivated clot (B) to the clot-bound thrombin (C) is >3.0.

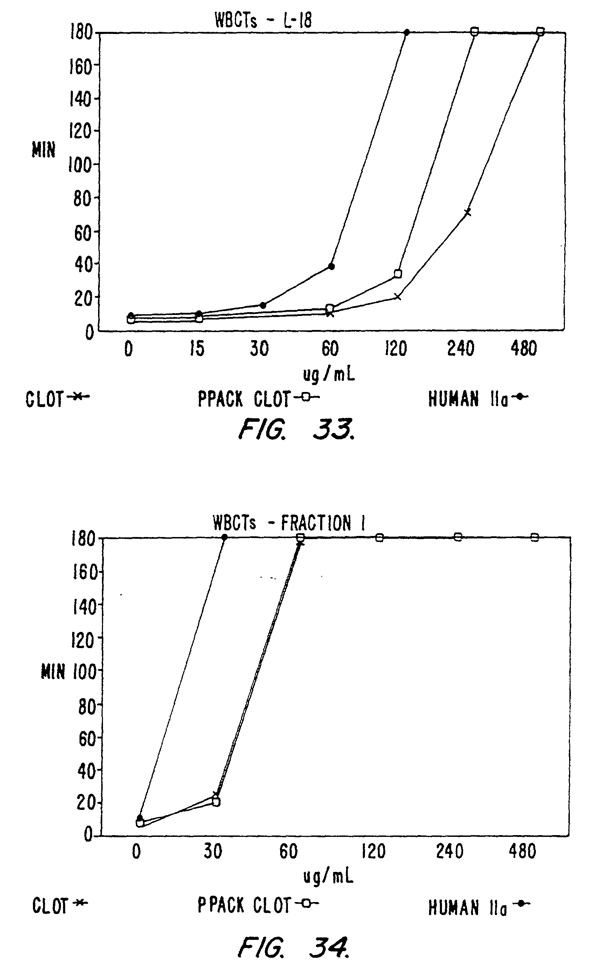

FIG. 33 illustrates the effect of increasing doses of V18 on the whole blood clotting time to which thrombin (A), a PPACK clot (B) and clot-bound thrombin (C) is added. The IC 50 was 90 µg/ml, 180 µg/ml and 250 µg/ml for the free thrombin, the PPACK clot and the clot-bound thrombin, respectively. Thus, the ratio for the relative sensitivity of this whole blood system to the effects of free thrombin (A) to clot-bound thrombin (C) is about 3, and the ratio for the relative sensitivity of the whole blood system to the effects of the PPACK-inactivated clot to the clot-bound thrombin is about 1.5.

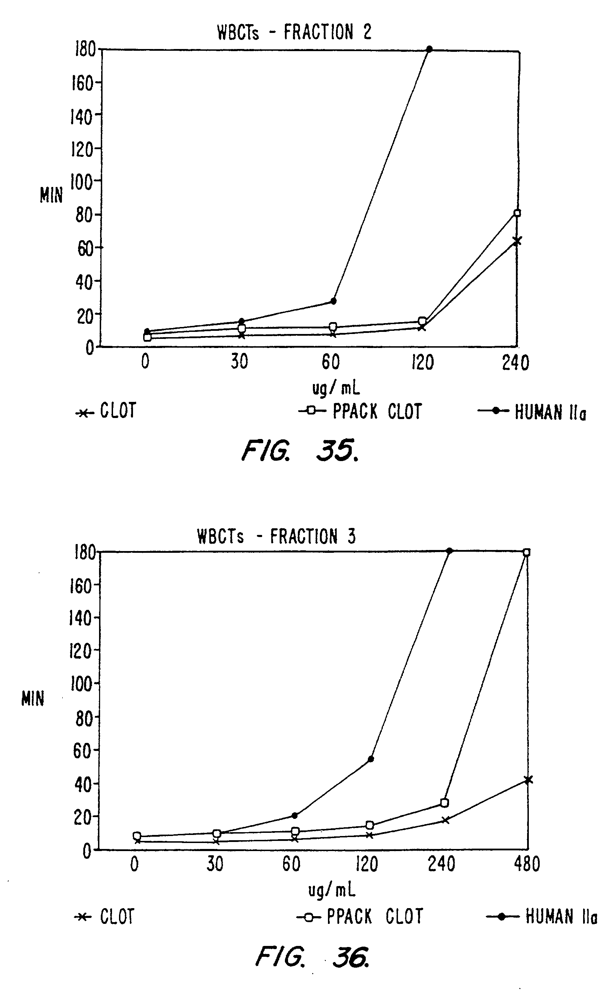

FIGS. 34, 35 and 36 illustrate the effects of increasing doses of Fraction 1, 2 and 3 of V18, respectively, on the whole blood clotting time to which thrombin (A), a PPACK clot (B) and clot-bound thrombin (C) is added. For Fraction 1, the IC 50 was 22 µg/ml, 25 µg/ml and 37 µg/ml for the free thrombin, the PPACK clot, and the clot-bound thrombin, respectively. Thus, the ratio for the relative sensitivity of this whole blood system to the effects of free thrombin (A) to clot-bound thrombin (C) is about 1.7, and the ratio for the relative sensitivity of the whole blood system to the effects of the PPACK-inactivated clot (B) to the clot-bound thrombin (C) is about 1.6.

For Fraction 2, the IC 50 was 90 µg/ml, 240 µg/ml and 250 µg/ml for the free thrombin, the PPACK clot and the clot-bound thrombin, respectively. Thus, the ratio for the relative sensitivity of this whole blood system to the effects of free thrombin (A) to clot-bound thrombin (C) is about 2.7, and the ratio for the relative sensitivity of the whole blood system to the effects of the PPACK-inactivated clot (B) to the clot-bound thrombin (C) is about 1.0. For Fraction 3, the IC 50 was 150 µg/ml, 320 µg/ml and about 600 µg/ml for the free thrombin, the PPACK clot and the clot-bound thrombin, respectively. Thus, the ratio for the relative sensitivity of this whole blood system to the effects of free thrombin (A) to clot-bound thrombin (C) is about 4.0, and the ratio for the relative sensitivity of the whole blood system to the effects of the PPACK-inactivated clot (B) to the clot-bound thrombin (C) is about 1.9.

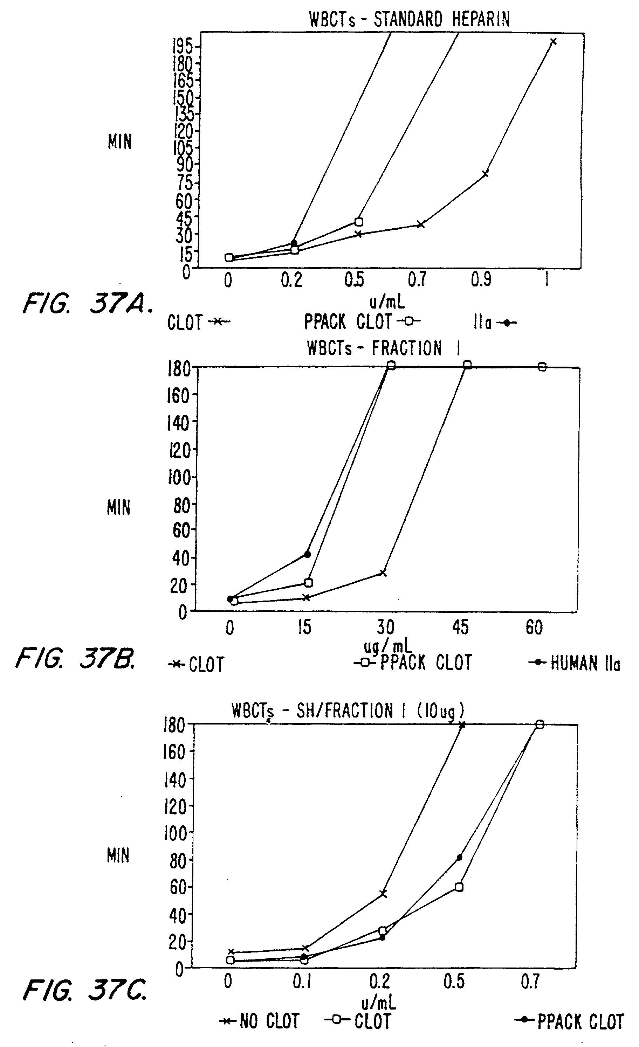

FIG. 37 compares the effects of heparin (FIG. 37A, upper panel), Fraction 1 (FIG. 37B, middle panel) and the combination of heparin and 10 µg/ml of Fraction 1 (FIG. 37C, lower panel) on the WBCT. The results for heparin and Fraction 1 have been described above and are set forth in FIG. 37 for purposes of comparison with the combination of heparin and Fraction 1. The IC 50 of the combination (FIG. 37C, lower panel) for the free thrombin was 0.3 units/ml (*i.e.*, the same value as for heparin (FIG. 37A, upper panel). Similarly, the IC 50 for the PPACK clot is the same values as for heparin, *i.e.*, about 0.55 units/ml. In contrast, the IC 50 for the clot-bound thrombin is the same as for the PPACK clot, *i.e.,* about 0.55 units/ml. Thus, in contrast to heparin, the ratio for the relative sensitivity of this whole blood system to the effects of free thrombin (A) to clot-bound thrombin (C) is about 2.0, and the ratio for the relative sensitivity of the whole blood system to the effects of the PPACK-inactivated clot (B) to the clot-bound thrombin (A) is about 1.0.

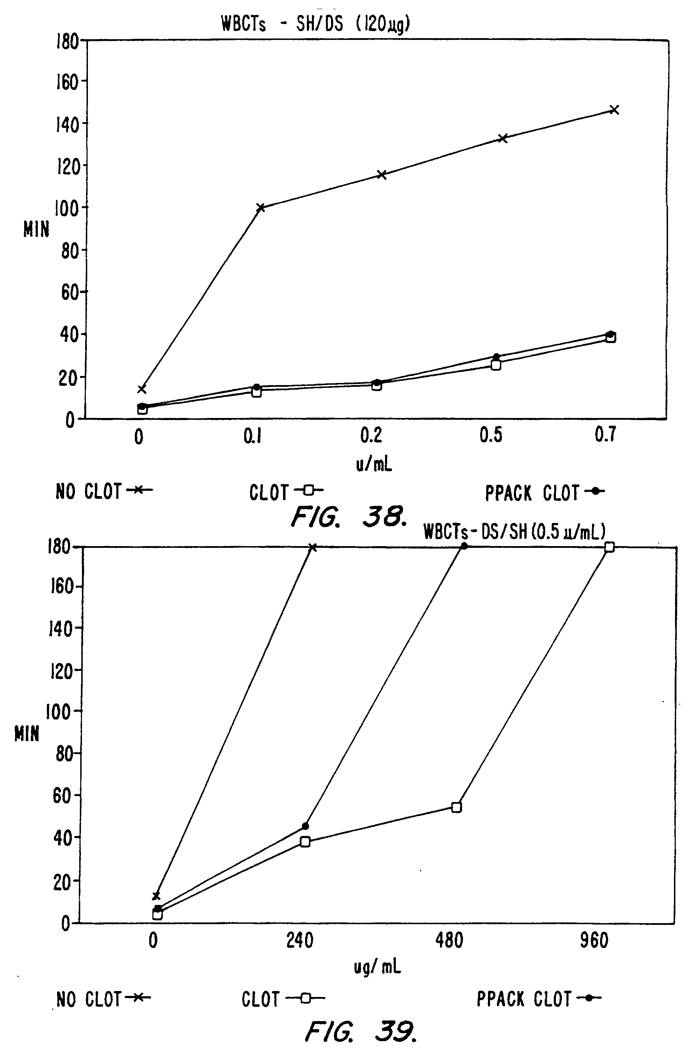

FIG. 38 illustrates the effect on the WBCT of the combination of heparin and DS. In contrast to V18, 120 µg/ml of DS did not influence the clotting time in the presence of the PPACK clot or the clot-bound thrombin. However, when increasing concentrations of DS were added to 0.5 units/ml of heparin (FIG. 39), it was possible to calculate a ratio for the relative IC 50 values. The ratio for the relative sensitivity of this whole blood system to the effects of free thrombin (A) to clot-bound thrombin (C) is about 5.0, and the ratio for the relative sensitivity of the whole blood system to the effects of the PPACK-inactivated clot (B) to the clot-bound thrombin (C) is about 2.0. Thus, the ratio for the relative sensitivity of this whole blood system to the effects of free thrombin (A) to clot-bound thrombin (C) is 1.1 and the ratio for the relative sensitivity of the whole blood system to the effects of the PPACK-inactivated clot to the clot-bound thrombin is about 1.0.

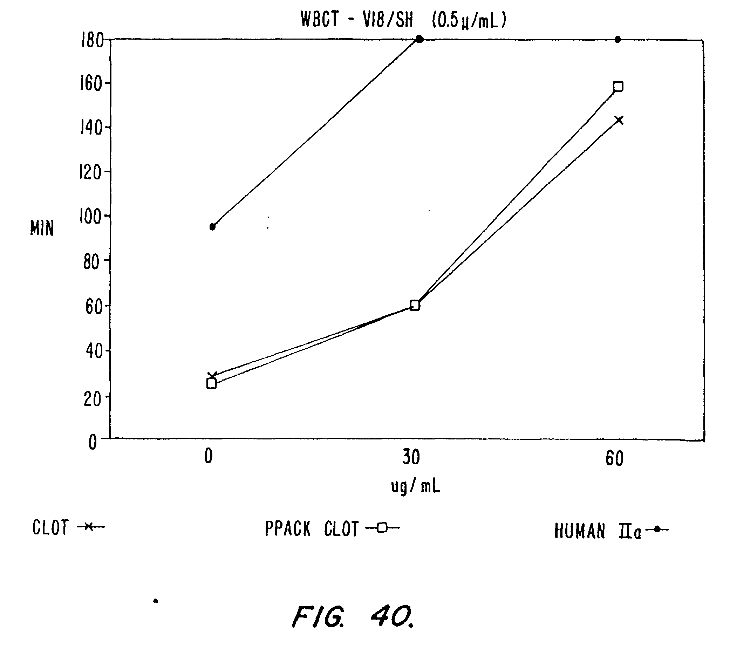

FIG. 40 illustrates the effect on the WBCT of the combination of heparin and V18 on the whole blood clotting time to which thrombin (A), a PPACK clot (B) and clot-bound thrombin (C) is added. The IC 50 was 50 µg/ml, 45 µg/ml and 45 µg/ml for the free thrombin, the PPACK clot, and the clot-bound thrombin, respectively. Thus, the ratio for the relative sensitivity of this whole blood system to the effects of free thrombin (A) to clot-bound thrombin (C) is about 3, and the ratio for the relative sensitivity of the whole blood system to the effects of the PPACK-inactivated clot (B) to the clot-bound thrombin (C) is about 1.

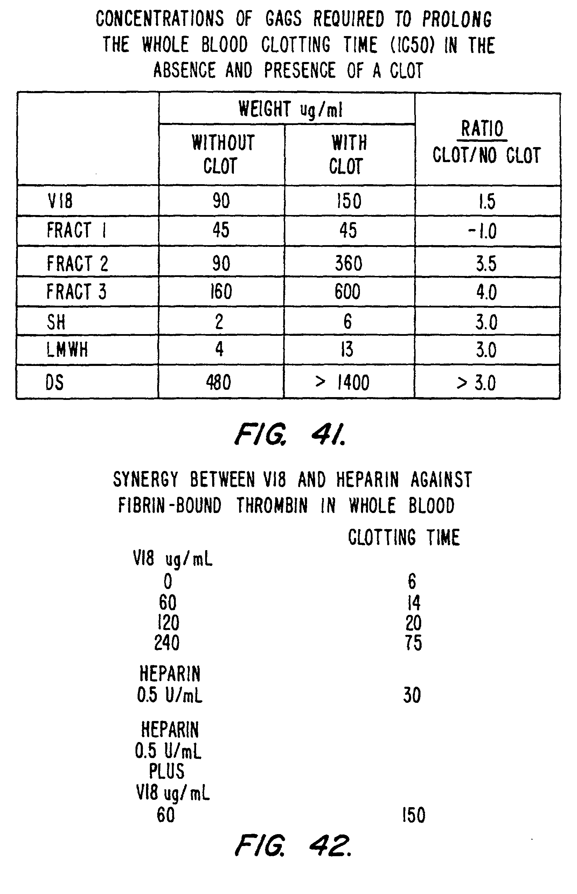

A summary of the effects of the various GAGS on the WBCT in the presence of free thrombin, the PPACK clot and clot-bound thrombin and, in addition, the ratios of the corresponding IC 50 are set forth in FIG. 41. Moreover, a summary of the synergy between V18 and heparin against fibrin-bound thrombin is set forth in FIG. 42.

### H. Clotting Prevention Studies Using A Bypass Circuit

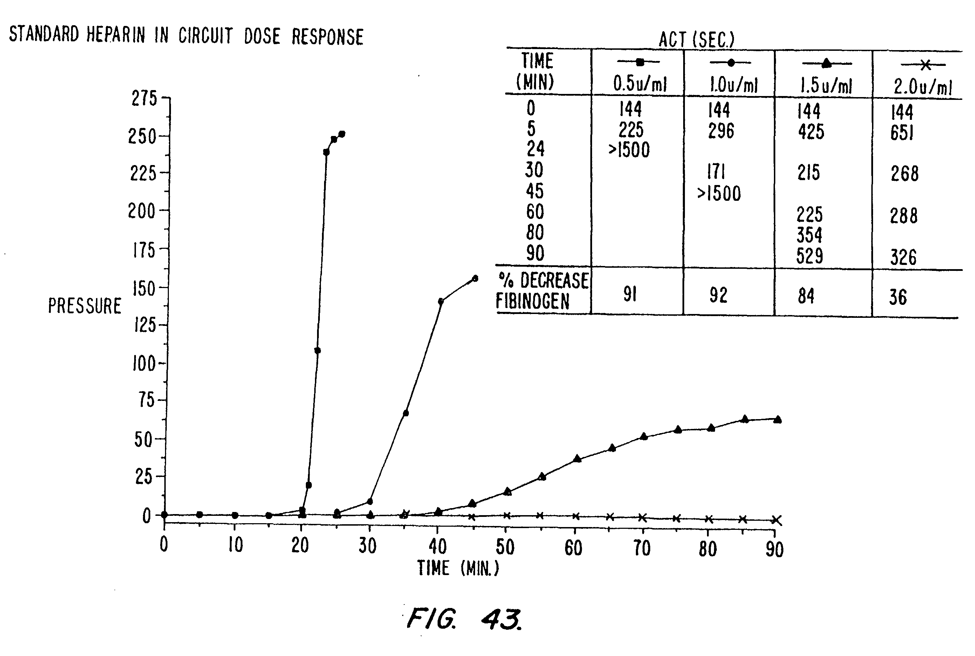

FIG. 43 illustrates the effect of heparin on preventing clotting in the bypass circuit. Clotting occurred, with 84% fibrinogen consumption, at a heparin concentration of 1.5 units/ml. Clotting was partially prevented by a concentration of 2.0 units/ml, although there was still 36% fibrinogen consumption even at this concentration. V18 prevented clotting in the circuit at a concentration of 960 µg/ml when used alone and at a concentration of about 120 to 240 µg/ml when used in combination with 1.5 units/ml of heparin. Fraction 1 prevented clotting in the circuit at a concentration of about 120 µg/ml.

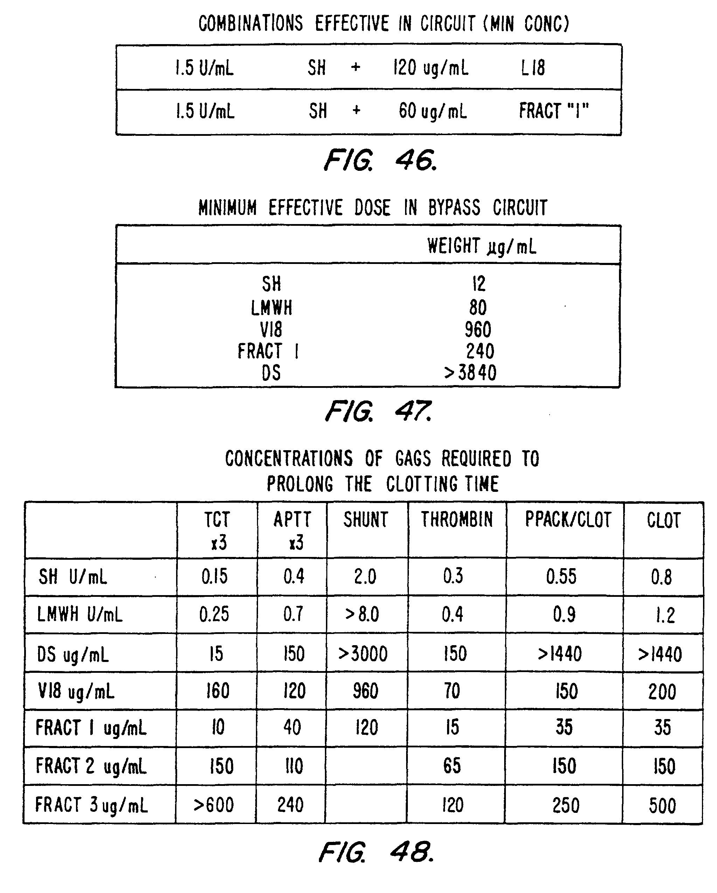

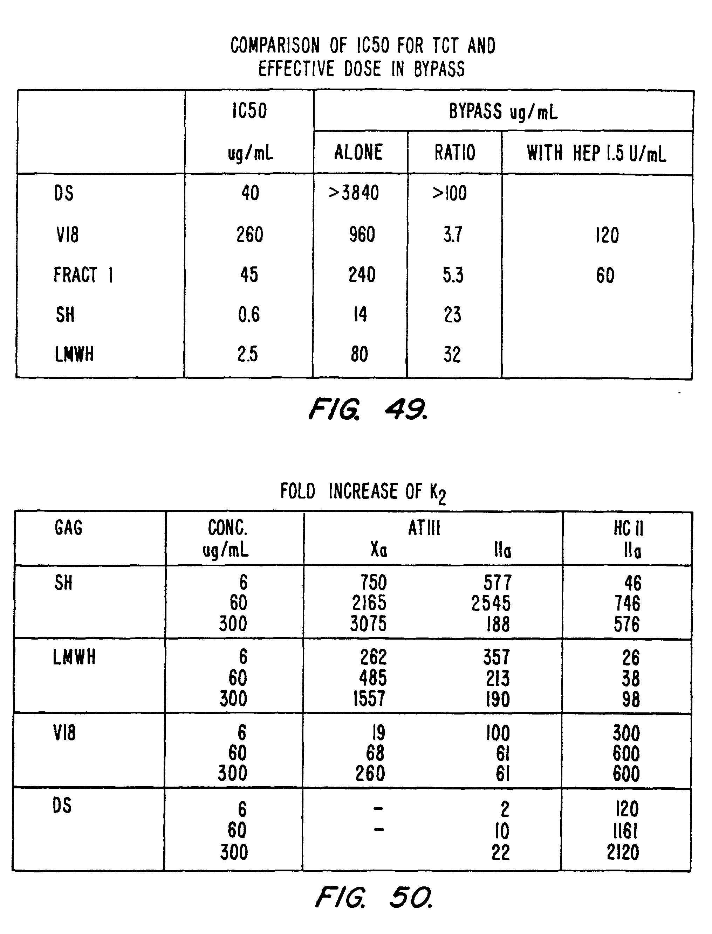

FIG. 44 illustrates the elution patterns of Fractions 1, 2 and 3 from a Sepharose G50 column. In addition, FIG. 45 compares the effectiveness of Fractions 1, 2 and 3 when combined with 1.5. units/ml of heparin. Fraction 1 prevented clotting in the circuit at a concentration of about 60 µg/ml, whereas Fraction 2 was partially effective at a concentration of about 60 µg/ml and Fraction 3 was ineffective. This experiment demonstrates that of the three fractions, Fraction 1 is most effective in the bypass circuit and Fraction 3 is the least effective. The minimum effective concentrations of the GAGS when used alone or, alternatively, in combination with 1.5 units/ml of heparin are set forth in FIGS. 46 and 47. The relative concentrations of the GAGS required to prolong the APTT and TCT, to prevent clotting of whole blood in the presence of a clot, and to prevent clotting in the bypass are shown in FIG. 48. The IC 50 for the TCT and corresponding doses required to prevent clotting in the circuit and the relative ratios are shown in FIG. 49.

### I. Measurement Of Second Order Rate Constants

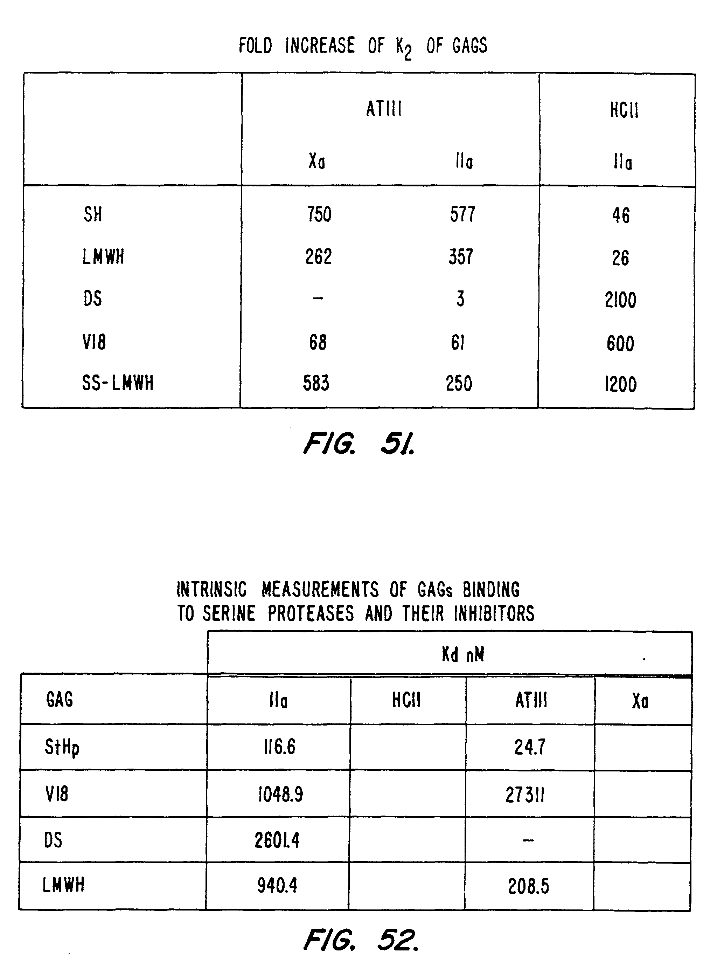

A summary of the fold increase in second order rate constants (K2) for ATIII-mediated catalysis of factor Xa and thrombin inhibition, and HCII-mediated thrombin inhibition at concentrations of 6, 60, and 300 µg/ml are shown in FIG. 50. The fold increase in K2 at therapeutic concentrations of these GAGS is shown in FIG. 51. At therapeutic concentrations (*i.e.*, about 6 µg/ml), heparin (SH) and LMWH produce their anticoagulant effects by catalyzing ATIII, with only a weak contribution from catalysis of HCII. In contrast, at therapeutic concentrations (about 60 to 300 µg/ml), V18 produces its anticoagulant effect by catalyzing both ATIII and HCII. Moreover, at therapeutic concentrations (about 300 µg/ml), DS produces its anticoagulant effect by catalyzing HCII. It is interesting to note that in both assays in which clotting is mediated by fibrin-bound thrombin (*i.e.*, the whole blood clotting time with plasma clot and the bypass circuit), much higher concentrations of DS than V18 are required to prevent less clotting, yet V18 has almost 50-fold less rate enhancement on HCII-mediated thrombin inhibition. The binding affinities (Kd) of the various GAGS for thrombin (IIa), factor Xa, and ATIII are shown in FIG. 52.

### J. Experiments To Determine Whether V18 has Anticoagulation Effects Which Are Independent Of HCII Or ATIII

Experiments were performed to determine whether V18 had effects on coagulation which were independent of ATIII or HCII. These experiments were designed to determine: 1) if V18 inhibited factor Xa independently of ATIII; 2) if V18 impaired fibrin polymerization; 3) if V18 inactivated factors IXa or XIa independently of ATIII; and 4) if V18 is as effective in a platelet-rich system as in a platelet-poor system.

### 1. ATIII-independent inhibition of factor Xa

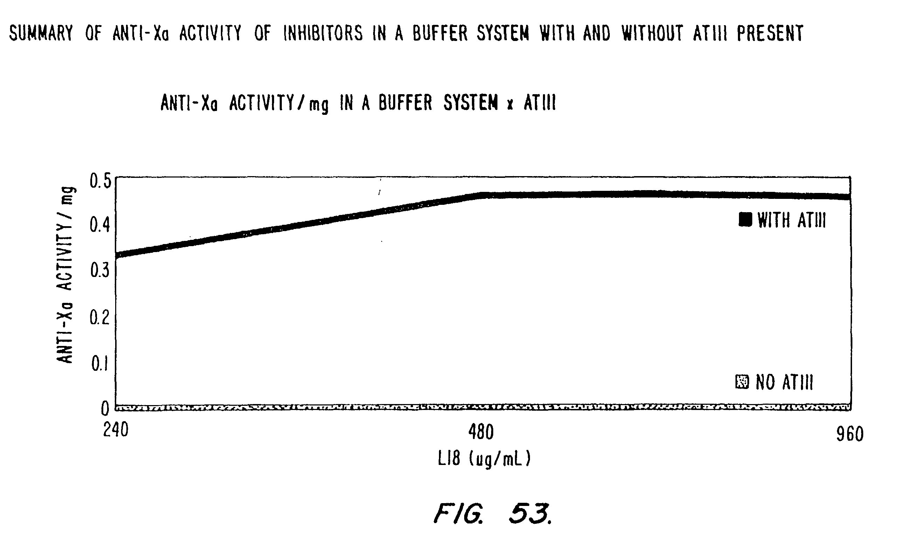

In a buffer system, the anti-factor Xa activity of V18 was measured in the presence and absence of ATIII. V18 did not inactivate factor Xa in the absence of ATIII (FIG. 53).

### 2. Inhibition of fibrin polymerization

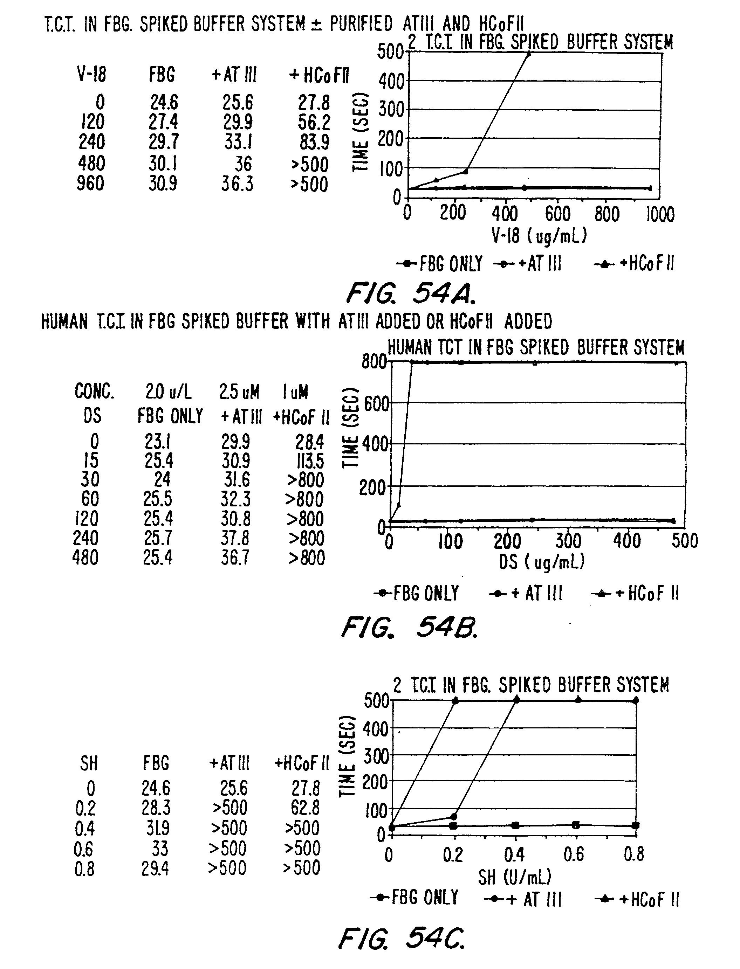

To determine whether V18 was interfering with fibrin polymerization, the prolongation of the thrombin clotting time in a buffer system containing fibrinogen was measured in the presence and absence of ATIII or HCII. For comparison, experiments were performed with heparin (SH) and DS. None of these GAGS prolonged the thrombin clotting time in the absence of ATIII or HCII. The effect of V18 was HCII-dependent as was the effect of DS. On a weight basis, DS was about 20-fold more potent than V18. In contrast to V18 and DS which required HCII and not ATIII to inhibit fibrinogen clotting by thrombin, heparin acted through both cofactors, although ATIII was a more effective co-factor (FIG. 54).

### 3. Inactivation of IXa and XIa

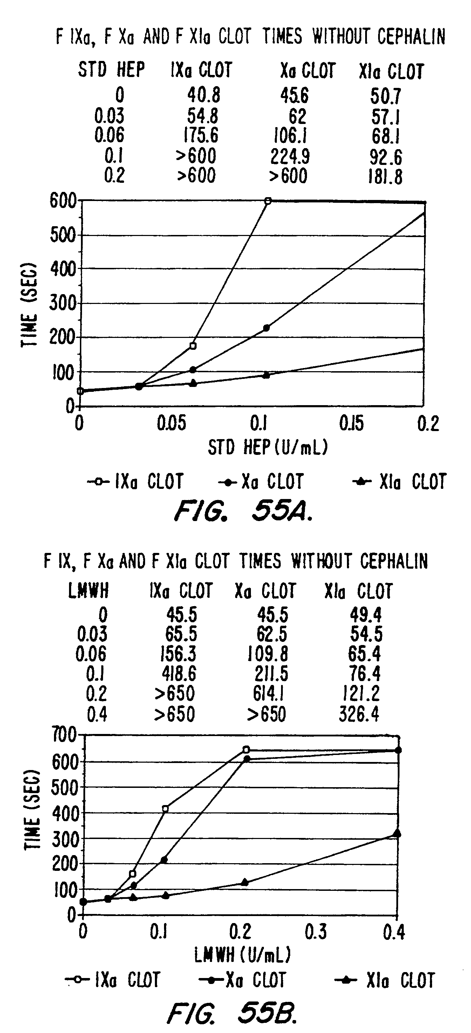

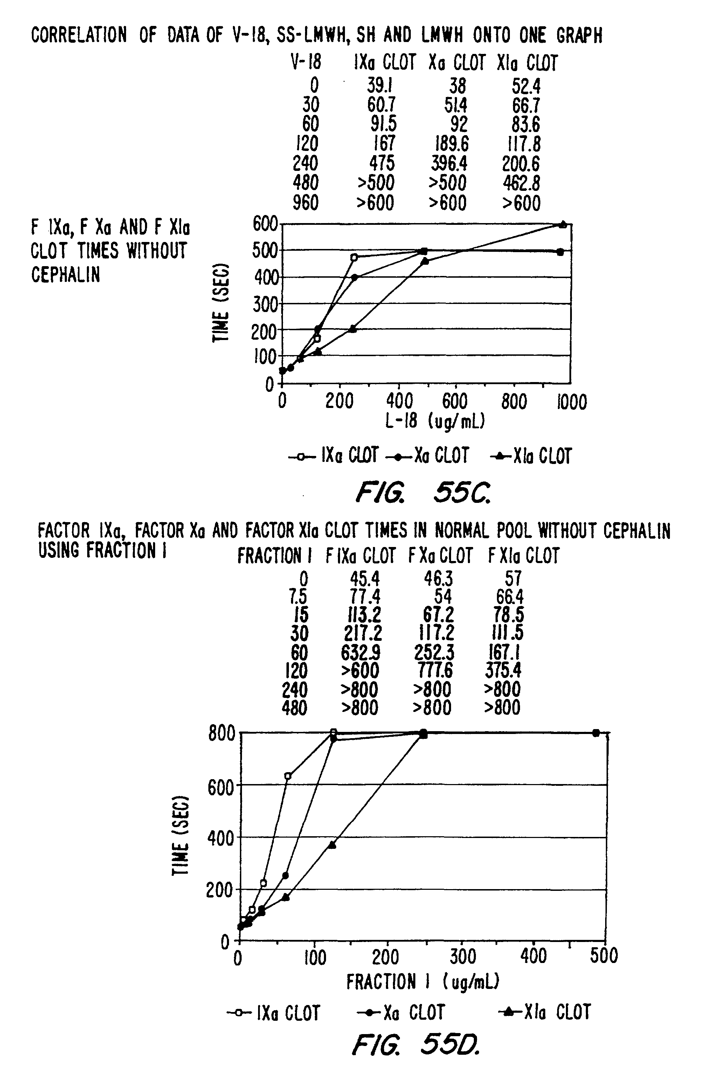

These experiments were performed to determine whether V18 or Fraction 1 of V18 prolonged the APTT by inactivating IXa or XIa by mechanisms independent of ATIII or HCII. The relative effects of heparin, LMWH, V18 and Fraction 1 of V18 on inactivating Xa, IXa and XIa was studied in a plasma system to which each of these coagulation enzymes was added (FIG. 55). Each of the coagulation enzymes was added in a concentration which produced a clotting time of between 40 and 50 seconds. Heparin (FIG. 55A) prolonged the IXa clotting time more than the Xa clotting time and had relatively less effects on the XIa clotting time. In contrast, all of the other GAGS, including V18 and Fraction 1 of V18, had similar effects on the IXa and Xa clotting times. These results indicate that V18 (FIG. 55C) and Fraction 1 of V18 (FIG. 55D) do not have effects on IXa or XIa which are independent of ATIII or HCII.

### K. Effect Of Platelets On The Anticoagulant Activity of V18 and Fraction 1

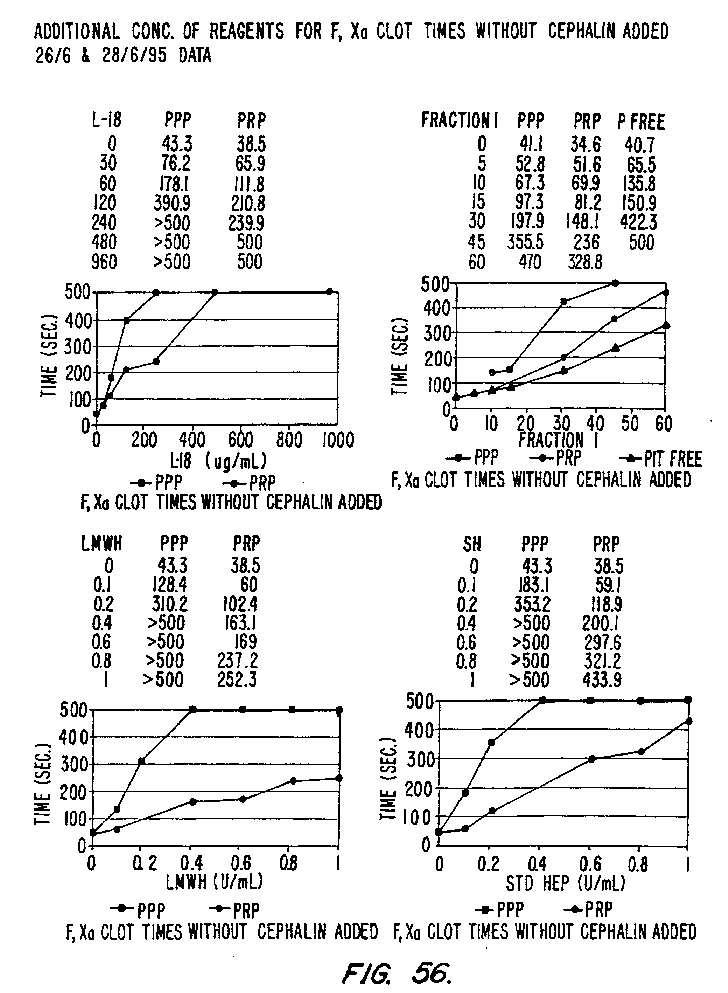

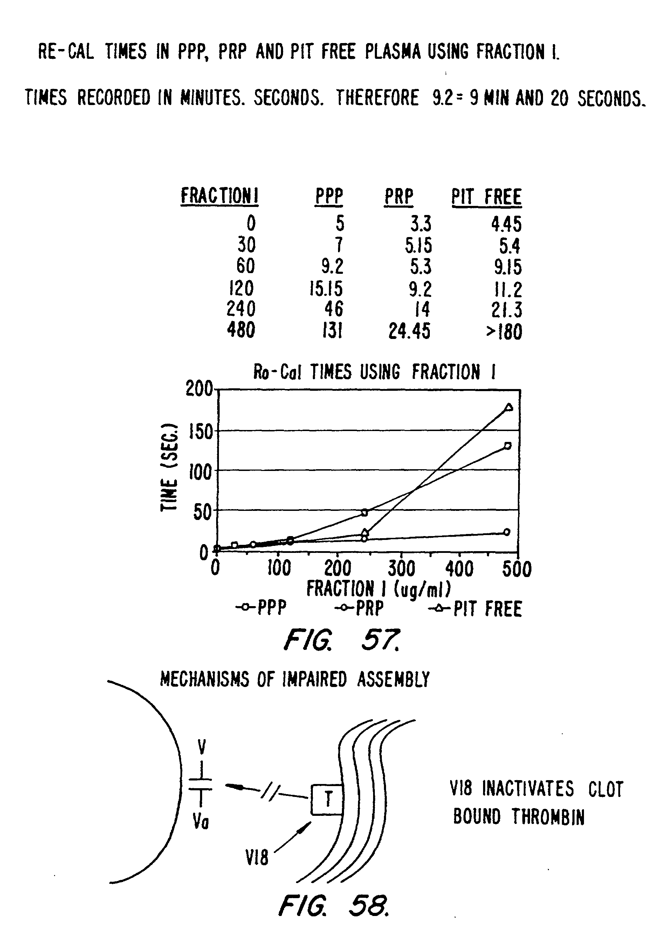

The factor Xa clotting time was performed on platelet-rich, platelet-poor and platelet-free plasma in the presence of heparin, V18, LMWH and Fraction 1 of V18. In all cases, the clotting time was shorter in platelet-rich plasma, indicating that factor Xa is protected from inactivation by these GAGS, including V18 and Fraction 1 (FIG. 56). However, the anticoagulant effects of V18 appear to be more resistant to platelets than heparin or LMWH. The results of the recalcification times with all of these GAGS was much shorter in platelet-rich than platelet-poor plasma, indicating that factor IXa in the tenase complex is protected from inactivation by these GAGS (FIG. 57).

### L. Comparison of V18 (MW 3,000 to 8,000) and SPL (MW 1,000 to 3,000) In A Simulated Cardiopulmonary Bipass Circuit

This example compares the activity of V18 with SPL, a V18-like material having a molecular weight of 1,000 to 3,000 Da, in a simulated cardiopulmonary bypass circuit. As set forth in Table 5, *infra*, in contrast to V18, SPL is substantially inactive.

### 1. V18 has Anticoagulation Effects Which Are Independent Of HCII Or ATIII

Although V18 has minimal Anti-factor Xa activity when tested *in-vitro* in a standard chromogenic factor Xa assay, it has appreciable anticoagulant activity when tested in HCII-depleted plasma. This is summarised in Table 5 which describes the effect of V18 and heparin on the recalcification clotting time (clotting of citrated platelet-depleted plasma by the addition of calcium and phospholipid [cephalin]). In normal plasma, V18 in a concentration of 500 µg/ml increased the recalcification time 9.6-fold. The addition of this concentration of V18 increased the recalcification time 3.6 fold in ATIII-depleted plasma (the "HCII effect") and 4.1 fold in HCII-depleted plasma (the "ATIII effect"). In addition V18 increased the recalcification time 2.9 fold in plasma depleted of both HCII and ATIII (double depleted plasma). In contrast, the effect of heparin in prolonging the recalcification time was virtually entirely ATIII-dependent. Thus, the fold increase in recalcification time with heparin was only 9.5 in normal plasma, 1.2 in ATIII-depleted plasma (the "HCII effect"), 6.0 in the HCII-depleted plasma (the ATII effect) and 1.3 in plasma depleted of both HCII and ATIII.

These findings indicate that the anticoagulant effect of V18 is contributed to by both an HCII- and ATIII-mediated mechanism, and by a mechanism which is independent of both ATIII and HCII. In contrast, almost all of the anticoagulant effect of heparin is mediated by ATIII. Included in the invention, therefore, is the use of a product or agent of the invention for the manufacture of a medicament for producing an anticoagulant affect which is contributed to by both an HCII-and ATIII-mediated mechanism and by a mechanism independent of both.

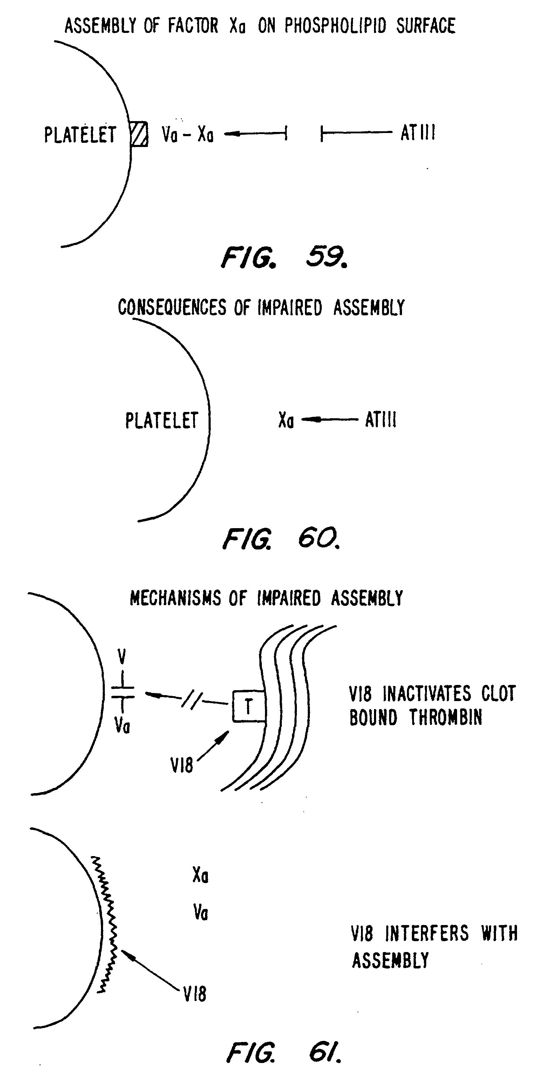

Without intending to be restricted to particular theory, it is thought that two interrelated mechanisms are responsible for the HCII-independent activity of V18. Both are related to the fact that V18 interferes with the assembly of factor Xa on the platelet surface. The process of blood coagulation occurs on the platelet surface as a result of the assembly of a number of the coagulation factors on the surface. Thus factor IXa complexes with factor VIIIa to form the tenace complex which activates factor X to factor Xa, and factor Xa in turn forms a complex with factor Va on the platelet surface (the "prothrombinase complex") which converts prothrombin to thrombin. Factor Va is the receptor for factor Xa on the platelet surface. The activation of factor V to factor Va is mediated by thrombin surface. In the thrombus, which consists of platelet aggregated in a fibrin meshwork, the activation of factor V is mediated by thrombin which is bound to fibrin in close proximity to platelets (FIG. 58). Factor Xa is protected from inactivation by its natural inhibitor, ATIII when this clotting enzyme is bound to factor Va on the platelet surface (FIG. 59). Therefore, agents that prevent factor Xa binding to the platelet surface markedly enhance the rate activation of factor Xa by ATIII (FIG. 60).

V18 interferes with the binding of factor Xa to the platelet surface by two different but interacting mechanisms (FIG. 61). First, by inactivating fibrin-bound thrombin through an HCII-mediated mechanism, V18 impairs the activation of factor V to factor Va, thereby reducing the density of the factor Xa receptor on the platelet surface. Second, as shown, V18 competes with factor Xa binding to a phospholipid surface ("platelet" surface). Both of these mechanisms act to inhibit the binding of factor Xa to the platelet surface, thereby rendering the factor Xa vulnerable to inactivation by even a relatively weak ATIII catalyst such as V18 (FIG. 60).

The interference with assembly exhibited by V18 is novel. The invention therefore includes the use of a product or agent of the invention for the manufacture of a medicament for causing such interference. The process not only targets Xa, but as shown in FIG. 60, other clotting enzymes. Others have attempted to provide products to compete with binding of Xa and IXa , by using inactive protein analogues. However, the antithrombotic mechanism described above for V18 is unique because it combines an HCII catalyst with selectivity to fibrin-bound thrombin with a unique process for interfering with assembly of factor Xa on the platelet surface which exposes the unprotected factor Xa to inactivation by ATIII. By combining the HCII-mediated inactivation of fibrin-bound thrombin with an ATIII mediated inhibition of thrombin generation (through inactivation of factor Xa), V18 modulates thrombogenesis by inhibiting two critical pathways (FIG. 61).

**TABLE 5**

| | **Normal Plasma** | **ATIII Dep Plasma** | **HCII Dep Plasma** | **Double Dep Plasma** |
|---|---|---|---|---|
| Time in Minutes | | | | |
| CONTROL 1/5 Cephalin | 3.3 | 2.3 | 2.4 | 2.3 |
| RATIOS | | | | |
| V18 200 µg/ml 1/5 cephalin | 2.8 | 1.8 | 2.0 | 1.5 |
| V18 300 µg/ml 1/5 cephalin | 4.6 | 2.3 | 2.8 | 2.3 |
| V18 500 µg/ml 1/5 cephalin | 9.6 | 3.6 | 4.1 | 2.9 |
| Heparin 0.5 U/mL 1/5 Cephalin | 9.5 | 1.2 | 6 | 1.3 |

### M. Comparison of V18 (MW 3,000 to 8,000) and SPL (MW 1,000 to 3,000) In a Simulated Cardiopulmonary Bypass Circuit

This example compares the activity of V18 with SPL, a V18-like material having a molecular weight of 1,000 to 3,000 Da, in a simulated cardiopulmonary bypass circuit. As set forth in Table 5, *infra*, in contrast to V18, SPL is substantially inactive.

### 1. Preparation of SPL, a V18-like Material Having a Molecular Weight of 1,000 to 3,000 Daltons

2 g of SPL (1,000 to 3,000 Da) product was dissolved in 50 mL of distilled water. An equal volume of 0.2 M sodium metaperiodate (freshly made) was added. The solution was mixed and kept at 40°C for 24 h. 5.0 mL of ethylene glycol was added and the solution was placed in dialysis tubing (MWCO 500) and dialyzed against several changes of distilled water for 24 h. The solution was put back into a beaker and 800 mg of potassium borohydride was added with constant stirring. The solution was kept in the dark for 2.5 h at room temperature. The pH was adjusted to 3.0 with 1 N HCl and quickly readjusted to pH 7.4 with 1 N NaOH. The solution was dialyzed again as previously described and the lyophilized to yield the final product.

### 2. Comparison of V18 and SPL in the Simulated Cardiopulmonary Bypass Circuit

A comparison of V18 and SPL was carried out in the simulated cardiopulmonary bypass circuit described above. The results obtained establish that, in 'contrast to V18, SPL is substantially inactive (*see,* Table 6, *infra*). It is for this reason that the fraction of the heparin molecules having molecular weights below 3,000 Da is removed from V18. By removing such molecules from V18, the potency off V18 is substantially increased.

**TABLE 6**

| **TREATMENT 1g/ml** | | **A.C.T. secs** | **TIME TO CIRCUIT FAILURE (min)** | **FIBRINOG CONSUMPT** |
|---|---|---|---|---|
| V18 | 480 | 372 | >90 | 9 |
| V18 | 240 | 284 | >90 | 9 |
| SPL (1,000-3000) | 480 | 193 | 17 | 89 |

### N. Comparison of the Efficacy and Safety of Hirudin with the Combination of V18 and Heparin in a Simulated Cardiopulmonary Bypass Circuit

This example compares the efficacy and safety of hirudin with the combination of V18 and heparin in the simulated cardiopulmonary bypass circuit described above. The results obtained clearly establish that in contrast to hirudin, V18 has very good APTT's at concentrations having no bleeding problems (*see,* Table 7).

**TABLE 7**

| **Treatment** | **ACT (secs)** | **Time to Treatment Failure (min)** | **Fibrin Deposited %** |
|---|---|---|---|
| Hirudin | 340 | 30 | >90 |
| Hirudin | 480 | 60 | >90 |
| Hirudin | 610 | 75 | >90 |
| Hirudin | >1500 | >90 | 9 |
| V18 | 358 | >90 | 8 |
| V18 and heparin | 370 | >90 | 6 |
| Heparin | 360 | 35 | 91 |
| SALINE | 180 | 10 | >90 |

### O. Comparative Effects of V18 + Desmin On Fluid Phase Thrombin And Clot Bound Thrombin

This example compared the effects of V18 and desmin, i.e. low molecular weight detmatan sulphate, on fluid phase thrombin and clot-bound thrombin using the previously described Hanging-Clot Assay. The results set forth in Table 8, *infra*, unequivocally establish that desmin is less-selective than V18 and, in addition, less potent than V18 by a factor of about 4.

**TABLE 8**

| **Fluid-Phase Thrombin** | | **Clot-Bound Thrombin** |
|---|---|---|
| TCT (IC 50) | | Human Bypass Circuit (IC 50) |
| V18 | 90 | 210 |
| µg/ml | | |
| Desmin | 15 | 750 |
| µg/ml | | |
| RATIO | | |
| V18 : | 6:1 | 1:3.5 |
| Desmin | | |

### 4. Example 4: General Procedure for Preparation of LA-LMWH

### 1. Preparation of LMWH

A low molecular weight heparin fraction is prepared from standard unfractioned heparin by benzylation followed by alkaline depolymerisation, nitrous acid depolymerisation, enzymatic depolymerisation with heparinase, or peroxidative depolymerisation. The heparin is then further modified to reduce its affinity for antithrombin III as described in the following part of this Example. Thus, such modification can be accomplished chemically or on an antithrombin III affinity column. The final product of the Example ranges in molecular weight from 3,000 to 8,000 Daltons. This corresponds to about 10 to about 24 monosaccharide units. The specific activity of this material is about 2 to about 5 anti-thrombin units/mg and less than about 1.5 (starting, 100 anti-Xa) anti -Xa units/mg.

### 2. Preparations of LA-LMWH

The LA-LMWH is prepared by first oxidizing the LMWH with sodium periodate in aqueous medium for 24h at 4°C. The reaction is stopped by the addition of excess ethylene glycol followed by extensive dialysis against distilled water using dialysis tubing with a 500 MW cut-off. The oxidised product is then reduced by the addition of sodium borohydride. After standing for 25h at 23°C, the reaction mixture is adjusted to pH 3.0 with HCl to destroy excess borohydride and the pH is then quickly increased to 7.0 by the addition of NaOH. The product is again dialyzed extensively against distilled water and is recovered by lyophilization. To reduce its antithrombin III activity even further, the product can be passed over an antithrombin III affinity column.

## Claims

1. A heparin cofactor II-specific (HCII-specific) catalytic agent that inactivates clot-bound thrombin, **characterized by**:
(i) a specific activity against thrombin (factor IIa) of about 2.0 to about 5.0 units/mg in an anti-factor IIa assay;
(ii) a specific activity against factor Xa of about 0.2 to about 1.5 units/mg in an anti-factor Xa assay; and
(iii) a solubility in aqueous media ranging from about 150 to about 1,000 mg/ml.

2. An agent of claim 1 which is **characterised by** one or both of the following features:
(i) it has an antithrombin III affinity of less than about 3% of that of unfractionated heparin;
(ii) it is a polyanionic carbohydrate of 10 to 28 monosaccharide units.

3. An agent of claims 1 or claim 2, which is a heparin preparation having a molecular weight of between about 3,000 and about 8,000 Daltons.

4. An agent of claim 3, wherein the heparin preparation:
(i) consists essentially of the lowest third molecular weight fraction isolated from unfractionated heparin; or
(ii) is produced from unfractionated heparin by chemically lowering the molecular weight range to between about 3,000 and about 8,000 Daltons.

5. An agent of claim 3 or claim 4, wherein the heparin preparation:
(i) has an average molecular weight of about 8,000 Daltons;
(ii) has an average molecular weight of about 5,000 Daltons; or
(iii) has an average molecular weight of about 3,000 Daltons.

6. An agent of any of claims 3 to 5, wherein the heparin preparation is produced from unfractioned heparin by chemically lowering the molecular weight range to between about 3,000 and about 8,000 Daltons and had its antithrombin III activity reduced by treating the vicinal alcohol groups present in the heparin preparation with an oxidizing agent followed by a reducing agent and optionally wherein the oxidizing agent is selected from sodium periodate, dimethyl sulphoxide, acid anhydrides, lead tetraacetate and ascorbic acid, and the reducing agent is selected from sodium borohydride, lithium aluminum hydride, metal hydrides and hydrazine.

7. An agent of any of claims 3 to 6, wherein the heparin preparation consists essentially of material without affinity for ATIII, said material having been prepared by affinity purification on a solid phase to which ATIII is immobilized and the effluent retained.

8. An agent of claim 1, which has
(a) the formula: 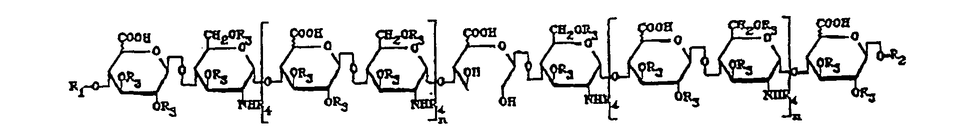 in which:
each n is independently an integer from 0 to 14, provided that the total number of monosaccharide residues is from 10 to 28;
R₁ is selected from the group consisting of H, D-glucosamine acid residue, D-glucuronic acid residue and L-iduronic acid residue;
R₂ is a member selected from the group consisting of H, D-glucosamine acid residue, D-glucuronic acid residue, L-iduronic acid residue and anhydromannitol;
R₃ is a member selected from the group consisting of H and SO₃⁻; and
R₄ is a member selected from the group consisting of H, SO₃⁻ and CH₃CO⁻;
wherein:
the HCII-specific catalytic agent has a molecular weight ranging from about 3,000 Daltons to about 8,000 Daltons; or
(b) the formula: 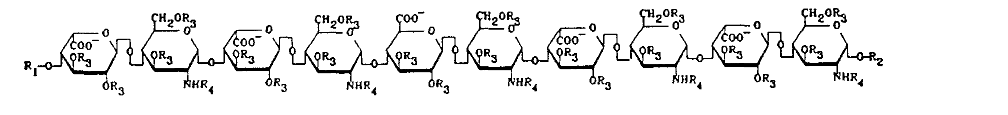 in which:
R₁ and R₂ are members independently selected from the group consisting of H, D-glucosamine acid residue, D-glucuronic acid residue and L-iduronic acid residue;
R₃ is a member selected from the group consisting of H and SO₃⁻; and
R₄ is a member selected from the group consisting of H, SO₃⁻ and CH₃CO⁻;
wherein:
the HCII-specific catalytic agent has a molecular weight ranging from about 3,000 Daltons to about 8,000 Daltons.

9. An agent of any of claims 1 to 8, which is **characterised by** one or both of the following features: (i) a specific activity against thrombin (factor IIa) of at least about 3.0 to about 4.0 units/mg in anti-factor IIa activity; (ii) a specific activity of about 1.0 unit/mg in an anti-factor Xa assay.

10. An agent of any of claims 1 to 9, wherein:
(i) the agent is combined with a heparin additive; or
(ii) the agent is combined with a heparin additive and the weight ratio of the HCII-specific catalytic agent to the heparin additive is greater than 2 to 1, wherein optionally the heparin additive is unfractionated heparin or is the lowest third molecular weight fraction isolated from unfractionated heparin.

11. A pharmaceutical composition for inhibiting thrombogenesis in a patient, the composition comprising:
(i) from about 90 to about 99.9 weight percent of an HCII-specific catalytic agent that inactivates fibrin-bound thrombin, the HCII-specific catalytic agent having only minimal affinity for antithrombin III (ATIII);
(ii) from about 0.1 to about 10 weight percent of an ATIII catalytic agent that inactivates fluid phase thrombin,
wherein:
the HCII catalytic activity of said composition is about 2 to about 5 units/mg.

12. A composition of claim 11, wherein the HCII-specific catalytic agent is
(i) a polyanionic carbohydrate of 10 to 24 monosaccharide units; or
(ii) polyanionic carbohydrate is of 10 to 24 monosaccharide units and is a heparin preparation having a molecular weight of between about 3,000 and about 8,000 Daltons.

13. A composition of claim 12, wherein the heparin preparation is as further defined by the specific features recited in one or more of claims 4, 5, 6, 7, 8 and 9.

14. A composition of claim 12 or claim 13 wherein the ATIII catalytic agent is unfractionated heparin, or is the lowest third molecular weight fraction isolated from unfractionated heparin.

15. A product comprising:
(i) an agent that inactivates clot-bound thrombin, said agent having minimal affinity for antithrombin III (ATIII) and a specific activity against thrombin (tactor IIa) of about 2.0 to about 5.0 units/mg in an anti-factor IIa assay; and
(ii) an ATIII catalytic agent that inactivates fluid-phase thrombin, as a combined preparation for simultaneous, separate or sequential use for inhibiting clot-bound thrombin and fluid-phase thrombin in a patient.

16. A product of claim 15, wherein the thrombin inactivator agent is
(i) an HCII-specific catalytic agent as defined in one or more of claims 1 to 8, or
(ii) a polyanionic carbohydrate as defined by the specific features recited in claim 12(i) or (ii), and additionally or alternatively has a specific activity against thrombin (factor IIa) of at least about 3.0 to about 4.0 units/mg in anti-factor IIa activity.

17. A product of claim 15 or claim 16, wherein the ATIII catalytic agent is unfractionated heparin, or is the lowest third molecular weight fraction isolated from unfractionated heparin.

18. A low molecular weight heparin preparation **characterized by**:
(i) a molecular weight of between about 3,000 and about 8,000 Daltons (±1,000);
(ii) specific activity against thrombin (factor IIa) of about 2.0 to about 5.0 units/mg in an anti-factor IIa assay;
(iii) a specific activity against factor Xa of about 0.2 to about 1.5 units/mg in an anti-factor Xa assay;
(iv) a solubility in aqueous media ranging from about 150 to about 1,000 mg/ml; and
(v) a native sugar (e.g., a uronic acid residue) as nonreducing terminal and a 2,5-anhydromannitol residue as non-reducing terminal.

19. A polyanionic carbohydrate capable of selectively inactivating clot-bound thrombin in favour of free thrombin, obtainable from heparin, having its non-sulphated uronic acid residues in open-ring form, and substantially free of aldehyde groups.

20. A carbohydrate of claim 19, which has a native sugar (e.g. a uronic acid residue) as a nonreducing terminal and a 2,5-anhydromannitol residue as nonreducing terminal, and/or wherein 30% of the uronic acid residues are in open-ring form.

21. A preparation of claim 18 or a carbohydrate of claim 19 or claim 20, which is further **characterised by** one, two or three of the **characterising** features of claim 1 and/or by the specific features recited in one or more of claims 2 to 9.

22. A product capable of selectively inhibiting clot-bound thrombin obtainable by:
(i) depolymerising unfractioned heparin using nitrous acid;
(ii) isolating and pooling the depolymerised fractions having molecular weights ranging from 3,000 to 8,000 (±1,000) to provide a low molecular weight fraction;
(iii) cleaving the low molecular weight fraction using periodate;
(iv) reducing the cleaved fraction using sodium borohydride,
wherein optionally an antithrombin III affinity column is used to reduce the affinity of the depolymerised heparin, and the low molecular weight fraction has a specific activity of about 2 to about 5 anti-thrombin units/mg and less than about 1.5 anti-factor Xa units/mg.

23. A product obtainable by:
(i) depolymerising standard unfractionated heparin by nitrous acid depolymerisation;
(ii) oxidising the depolymerised heparin with sodium periodate in an aqueous medium for 24h at 4°C, and stopping the oxidation reaction by the addition of excess ethylene glycol followed by extensive dialysis against distilled water using dialysis tubing with a 500MW cut off;
(iii) reducing the oxidised product by the addition of sodium borohydride and, after allowing the reaction mixture to stand for 25h at 23 °C, adjusting the pH of the reaction mixture to 3.0 with HCl to destroy excess borohydride then quickly increasing the pH to 7.0 by the addition of NaOH;
(iv) dialysing the resultant product extensively against distilled water; and
(v) recovering the product by lyophilisation; and optionally
(vi) passing the product over an antithrombin III affinity column, the product obtained having the following properties:
• molecular weight of from 3,000 to 8,000 (±1,000)
• specific activity of about 2 to about 5 anti-Factor IIa units/mg
• specific activity of less than about 1.5 anti-Thrombin IIa units/mg.

24. A catalytic agent of any of claims 1 to 10, a preparation of claim 18 or claim 21, a carbohydrate of any of claims 19 to 21, or a product of claim 22 or claim 23 for use as a pharmaceutical.

25. A pharmaceutical product comprising as active agent a catalytic agent of any of claims 1 to 10, a preparation of claim 18 or claim 21, a carbohydrate of any of claims 19 to 21, or a product of claim 22 or claim 23 and optionally a pharmaceutically acceptable excipient, diluent or carrier, the pharmaceutical product optionally further comprising an inhibitor of fluid phase thrombin for simultaneous, separate or sequential administration with said active agent.

26. A process for preparing an HCII-specific catalytic agent having a native sugar (e.g., a uronic acid residue) as the nonreducing terminal and a 2,5-anhydromannitol residue as nonreducing terminal, said process comprising:
(i) depolymerising unfractionated heparin;
(ii) oxidizing the resultant low molecular weight heparin; and
(iii) reducing the oxidized, low molecular weight heparin;
wherein said process optionally includes additional purification or other procedures to obtain said HCII-specific catalytic agent.

27. A process of claim 26 wherein the unfractionated heparin is depolymerised using nitrous acid and/or the resultant low molecular weight heparin is oxidised using sodium periodate and/or the oxidised low molecular weight heparin is reduced using sodium borohydride

28. The use of a catalytic agent of any of claims 1 to 10, a preparation of claim 18 or claim 21, a carbohydrate of any of claims 19 to 21, or a product of claim 22 or claim 23 or of an HCII specific catalytic agent obtainable using a process of claim 26 or claim 27 for the manufacture of a medicament for the treatment of a cardiovascular disease, the use optionally further including using an inhibitor of fluid phase thrombin for the manufacture of the medicament.

29. The use of a heparin derivative which has its non-sulphated uronic acid residues in open-ring form and is substantially free of aldehyde groups for the manufacture of a medicament for the treatment of thrombosis by prophylaxis or therapy.

30. The use of a catalytic agent of any of claims 1 to 10, a preparation of claim 18 or claim 21, a carbohydrate of any of claims 19 to 21, or a product of claim 22 or claim 23 or of an HCII specific catalytic agent obtainable using a process of claim 26 or claim 27 or of a heparin derivative as defined in claim 29 for the manufacture of a medicament for:
(i) producing an anticoagulant effect which is contributed to by both an HCII- and ATIII-mediated mechanism and by a mechanism which is independent of both HCII and ATIII; or
(ii) interfering with the binding effect of factor Xa to the platelet surface,

## Patentansprüche

1. Heparin-Cofaktor-II-spezifisches (HCII-spezifisches) katalytisch wirkendes Mittel, das an Gerinnsel gebundenes Thrombin inaktiviert, **gekennzeichnet durch**:
(i) eine spezifische Aktivität gegen Thrombin (Faktor IIa) von ca. 2,0 bis ca. 5,0 Einheiten/mg bei einem Antifaktor-IIa-Assay;
(ii) eine spezifische Aktivität gegen den Faktor Xa von ca. 0,2 bis ca. 1,5 Einheiten/mg bei einem Antifaktor-Xa-Assay, und
(iii) eine Löslichkeit in wässrigen Medien von ca. 150 bis ca. 1000 mg/ml.

2. Mittel nach Anspruch 1, **gekennzeichnet durch** eines oder beide der folgenden Merkmale:
(i) es weist eine Antithrombin III-Affinität von weniger als ca. 3% im Vergleich mit derjenigen des unfraktionierten Heparins auf,
(ii) es besteht aus einem polyanionischen Kohlenhydrat mit 10 bis 28 Monosaccharid-Einheiten.

3. Mittel nach Anspruch 1 oder Anspruch 2, bei dem es sich um eine Heparinzubereitung mit einer Molmasse zwischen ca. 3.000 und ca. 8.000 Dalton handelt.

4. Mittel nach Anspruch 3, bei dem die Heparinzubereitung:
(i) im Wesentlichen aus der aus unfraktioniertem Heparin isolierten Fraktion einer im unteren Drittel liegenden Molmasse besteht oder
(ii) aus unkfraktioniertem Heparin durch chemisches Reduzieren des Molmassenbereichs auf ca. 3.000 bis ca. 8.000 Dalton hergestellt wird.

5. Mittel nach Anspruch 3 oder Anspruch 4, bei dem die Heparinzubereitung:
(i) eine Durchschnittsmolmasse von ca. 8.000 Dalton,
(ii) eine Durchschnittsmolmasse von ca. 5.000 Dalton oder
(iii) eine Durchschnittsmolmasse von ca. 3.000 Dalton aufweist.

6. Mittel nach einem der Ansprüche 3 bis 5, bei dem die Heparinzubereitung aus unfraktioniertem Heparin durch chemisches Reduzieren des Molmassenbereichs auf ca. 3.000 bis ca. 8.000 Dalton hergestellt wird und deren Antithrombin III-Aktivität durch Behandeln der in der Heparinzubereitung vorliegenden vicinalen Alkoholgruppen mit einem Oxidationsmittel, gefolgt von einem Reduziermittel reduziert worden ist und bei dem das Oxidationsmittel gegebenenfalls unter Natriumperiodat, Dimethylsulfoxid, sauren Anhydriden, Bleitetraacetat und Ascorbinsäure und das Reduziermittel unter Natriumborhydrid, Lithiumaluminiumhydrid, Metallhydrid und Hydrazin ausgewählt wird.

7. Mittel nach einem der Ansprüche 3 bis 6, bei dem die Heparinzubereitung im Wesentlichen aus einem Material ohne Affinität für AT III besteht, wobei das Material durch Affinitätsreinigung auf einer festen Phase zubereitet wird, an der AT III immobilisiert und der Ausfluss zurückgehalten wird.

8. Mittel nach Anspruch 1, das folgende Formel aufweist:
(a) die Formel 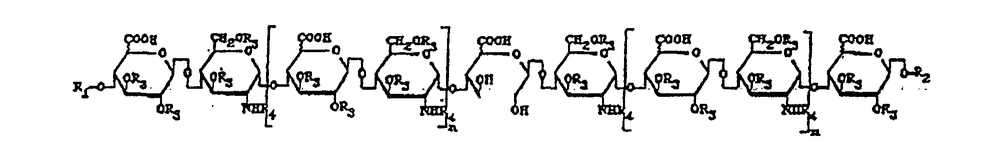 in der:
jedes n jeweils unabhängig eine ganze Zahl von 0 bis 14 darstellt, vorausgesetzt, dass die Gesamtzahl an Monosaccharidresten 10 bis 28 beträgt,
R₁ aus der Gruppe ausgewählt wird, die aus einem sauren H-,D-Glucosaminrest, einem D-Glucuronsäurerest und einem L-Iduronsäurerest besteht,
R₂ ein Glied darstellt, das aus der Gruppe ausgewählt wird, die aus einem
sauren H-,D-Glucosaminrest, einem D-Glucuronsäurerest und einem L-Iduronsäurerest und Anhydromannitol besteht,
R₃ ein Glied darstellt, das aus der Gruppe ausgewählt wird, die aus H und SO₃⁻ besteht und
R₄ ein Glied darstellt, das aus der Gruppe ausgewählt wird, die aus H, SO₃⁻ und CH₃CO⁻ besteht,
wobei
das HCII-spezifische katalytisch wirkende Mittel eine Molmasse im Bereich von ca. 3.000 Dalton bis ca. 8.000 Dalton aufweist, oder
(b) die Formel 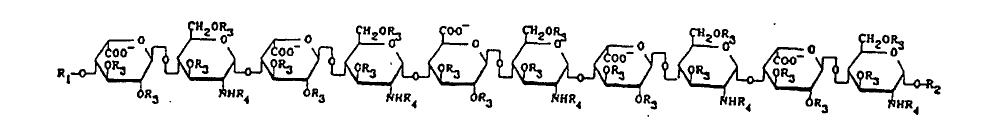 in der:
R₁ und R₂ Glieder sind, die unabhängig aus der Gruppe ausgewählt werden, die aus einem sauren H-,D-Glucosaminrest, einem D-Glucuronsäurerest und einem L-Iduronsäurerest besteht,
R₃ ein Glied darstellt, das aus der Gruppe ausgewählt wird, die aus H und SO₃⁻ besteht und
R₄ ein Glied darstellt, das aus der Gruppe ausgewählt wird, die aus H, SO₃⁻ und CH₃CO⁻ besteht,
wobei:
das HCII-spezifische katalytisch wirkende Mittel eine Molmasse im Bereich von ca. 3.000 Dalton bis ca. 8.000 Dalton aufweist.

9. Mittel nach einem der Ansprüche 1 bis 8, **gekennzeichnet durch** eines oder beide der folgenden Merkmale: (i) eine spezifische Aktivität gegen Thrombin (Faktor IIa) von mindestens ca. 3,0 bis ca. 4,0 Einheiten/mg als Antifaktor-IIa-Aktivität; (ii) eine spezifische Aktivität von ca. 1,0 Einheiten/mg bei einem Antifaktor-Xa-Assay.

10. Mittel nach einem der Ansprüche 1 bis 9, bei dem
(i) das Mittel mit einem Heparinzusatzmittel kombiniert wird oder
(ii) das Mittel mit einem Heparinzusatzmittel kombiniert wird und das Gewichtsverhältnis des HCVII-spezifischen katalytisch wirkenden Mittels zum Heparinzusatzmittel höher als 2 zu 1 liegt, wobei es sich bei dem Heparinzusatzmittel gegebenenfalls um unfraktioniertes Heparin oder die aus unfraktioniertem Heparin isolierte Fraktion einer im unteren Drittel liegenden Molmasse handelt.

11. Pharmazeutische Zusammensetzung für das Inhibieren der Thrombogenese bei einem Patienten, wobei die Zusammensetzung folgendes umfasst:
(i) ca. 90 bis ca. 99,9 Gew.-% eines HCII-spezifischen katalytisch wirkenden Mittels, das an Fribrin gebundenes Thrombin inaktiviert, wobei das HCII-spezifische katalytisch wirkende Mittel nur eine minimale Affinität für Antithrombin III (AT III) aufweist,
(ii) ca. 0,1 bis ca. 10 Gew.-% eines katalytisch wirkenden AT III-Mittels, das das Fluidphasenthrombin inaktiviert,
wobei:
die katalytische HCII-Aktivität der Zusammensetzung ca. 2 bis ca. 5 Einheiten/mg beträgt.

12. Zusammensetzung nach Anspruch 11, bei der es sich bei dem HCII-spezifischen katalytisch wirkenden Mittel um
(i) ein polyanionisches Kohlenhydrat mit 10 bis 28 Monosaccharid-Einheiten handelt oder
(ii) das polyanionische Kohlenhydrat aus 10 bis 28 Monosaccharid-Einheiten besteht und eine Heparinzubereitung mit einer Molmasse zwischen ca. 3.000 und ca. 8.000 Dalton darstellt.

13. Zusammensetzung nach Anspruch 12, bei der die Heparinzubereitung des weiteren durch die spezifischen Merkmale definiert wird, die in einem oder mehreren der Ansprüche 4, 5, 6, 7, 8 und 9 angegeben sind.

14. Zusammensetzung nach Anspruch 12 oder Anspruch 13, bei der es sich bei dem katalytisch wirkenden AT III-Mittel um unfraktioniertes Heparin oder die aus unfraktioniertem Heparin isolierte Fraktion einer im unteren Drittel liegenden Molmasse handelt.

15. Produkt, das Folgendes umfasst:
(i) ein Mittel, das an Gerinnsel gebundenes Thrombin inaktiviert, wobei das Mittel eine minimale Affinität für Antithrombin III (AT III) und eine spezifische Aktivität gegen Thrombin (Faktor IIa) von ca. 2,0 bis ca. 5,0 Einheiten/mg bei einem Antifaktor IIa-Assay aufweist, und
(ii) ein katalytische wirkendes AT III-Mittel, das Fluidphasenthrombin inaktiviert. als kombinierte Zubereitung für die gleichzeitige, getrennte oder sequenzielle Anwendung für das Inhibieren von an Gerinnsel gebundenes Thrombin und Fluidphasenthrombin bei einem Patienten.

16. Produkt nach Anspruch 15, bei dem es sich bei dem Thrombininaktivatormittel
(i) um ein HCII-spezifisches katalytisch wirkendes Mittel handelt, wie es in einem oder mehreren der Ansprüche 1 bis 8 definiert ist oder
(ii) um ein polyanionisches Kohlenhydrat, wie es durch die spezifischen in Anspruch 12(i) oder (ii) angegebenen Merkmale definiert ist, und es des weiteren oder alternativ eine spezifische Aktivität gegen Thrombin (Faktor IIa) von mindestens ca. 3,0 bis ca. 4,0 Einheiten/mg Antifaktor IIa-Aktivität aufweist.

17. Produkt nach Anspruch 15 oder Anspruch 16, wobei es sich bei dem katalytisch wirkenden AT III-Mittel um unfraktioniertes Heparin oder die aus unfraktioniertem Heparin isolierte Fraktion einer im unteren Drittel liegenden Molmasse handelt.

18. Heparinzubereitung von niedriger Molmasse, **gekennzeichnet durch**
(i) eine Molmasse zwischen ca. 3.000 und ca. 8000 Dalton (±1.000).
(ii) eine spezifische Aktivität gegen Thrombin (Faktor IIa) von ca. 2,0 bis ca. 5,0 Einheiten/mg bei einem Antifaktor-IIa-Assay,
(iii) eine spezifische Aktivität gegen den Faktor Xa von ca. 0,2 bis ca. 1,5 Einheiten/mg bei einem Antifaktor-Xa-Assay,
(iv) eine Löslichkeit in wässrigen Medien von ca. 150 bis ca. 1000 mg/ml und
(v) einen nativen Zucker (z.B. einen Uronsäurerest) als nichtreduzierende endständige Gruppe und einen 2,5-Anhydromannitolrest als nichtreduzierende endständige Gruppe.

19. Polyanionisches Kohlenhydrat, das dazu fähig ist, an ein Gerinnsel gebundenes Thrombin zugunsten von freiem Thrombin selektiv zu inaktivieren, das aus Heparin erhältlich ist, dessen nichtsulfatierter Uronsäurerest eine offene Ringform aufweist und das im Wesentlichen von Aldehydgruppen frei ist.

20. Kohlenhydrat nach Anspruch 19, das einen nativen Zucker (z.B. einen Uronsäurerest) als nichtreduzierende endständige Gruppe und einen 2,5-Anhydromannitolrest als nichtreduzierende endständige Gruppe aufweist und/oder bei dem 30% des Uronsäurerests in Form eines offenen Rings vorliegen.

21. Zubereitung nach Anspruch 18 oder Kohlenhydrat nach Anspruch 19 oder Anspruch 20, das des weiteren durch ein, zwei oder drei der kennzeichnenden Merkmale nach Anspruch 1 und/oder die in einem oder mehreren der Ansprüche 2 bis 9 aufgeführten spezifischen Merkmale **gekennzeichnet** ist.

22. Produkt, das dazu fähig ist, an Gerinnsel gebundenes Thrombin selektiv zu inhibieren, und wie folgt erhältlich ist:
(i) Depolymerisieren von unfraktioniertem Heparin mit salpetriger Säure,
(ii) Isolieren und Zusammengeben der depolymerisierten Fraktionen mit Molmassen im Bereich von 3.000 bis 8.000 (± 1000) unter Bereitstellung einer Fraktion niedriger Molmasse,
(iii) Spalten der Fraktion niedriger Molmasse mit Periodat,
(iv) Reduzieren der gespaltenen Fraktion mit Natriumborhydrid,
wobei gegebenenfalls eine Antithrombin III-Affinitätssäule zur Reduzierung der Affinität des depolymerisierten Heparins verwendet wird und die Fraktion niedriger Molmasse eine spezifische Aktivität von ca. 2 bis ca. 5 Antithrombin-Einheiten/mg und von weniger als ca. 1,5 Antifaktor Xa-Einheiten/mg aufweist.

23. Produkt, das wie folgt erhältlich ist:
(i) Depolymerisieren von unfraktioniertem Standard-Heparin durch Depolymerisation mit salpetriger Säure
(ii) Oxidieren des depolymerisierten Heparins mit Natriumperiodat in einem wässrigen Medium für 24 Stunden bei 4°C und Unterbrechen der Oxidationsreaktion durch Zusatz von Ethylenglykol im Überschuss, gefolgt von einer umfassenden Dialyse gegen destilliertes Wasser unter Zuhilfenahme einer Dialysenleitung mit einer Unterbrechung bei 500 MW,
(iii) Reduzieren des oxidierten Produkts durch Zusatz von Natriumborhydrid und-auf das Stehenlassen der Reaktionsmischung für 25 Stunden bei 23°C hin - Einstellen des pH-Werts der Reaktionsmischung mit HCl auf 3,0, um überschüssiges Borhydrid zu zerstören mit darauffolgendem schnellen Erhöhen des pH-Werts auf 7,0 durch Zusatz von NaOH,
(iv) umfassendes Dialysieren des dabei erhaltenen Produkts gegen destilliertes Wasser und
(v) Gewinnen des Produkts durch Lyophilisieren und gegebenenfalls
(vi) Leiten des Produkts über eine Antithrombin III-Affinitätssäule, wobei das dabei erhaltene Produkt folgende Eigenschaften aufweist:
• eine Molmasse von 3.000 bis 8000 (± 1000)
• eine spezifische Aktivität von ca. 2 bis ca. 5 Antifaktor IIa-Einheiten/mg
• eine spezifische Aktivität von weniger als ca. 1,5 Antithrombin IIa-Einheiten/mg.

24. Katalytisch wirkendes Mittel nach einem der Ansprüche 1 bis 10, Zubereitung nach Anspruch 18 oder Anspruch-21, Kohlenhydrat nach einem der Ansprüche 19 bis 21 oder Produkt nach Anspruch 22 oder Anspruch 23 für die Verwendung als pharmazeutisches Produkt.

25. Pharmazeutisches Produkt, das als Wirkstoff ein katalytisch wirkendes Mittel nach einem der Ansprüche 1 bis 10, eine Zubereitung nach Anspruch 18 oder Anspruch 21, ein Kohlenhydrat nach einem der Ansprüche 19 bis 21 oder ein Produkt nach Anspruch 22 oder Anspruch 23 und gegebenenfalls ein pharmazeutisch akzeptables Bindemittel, Verdünnungsmittel oder einen pharmazeutisch akzeptablen Träger umfasst, wobei das pharmazeutische Produkt gegebenenfalls des Weiteren einen Fluidphasenthrombin-Inhibitor enthält, zur gleichzeitigen, getrennten oder sequenziellen Verabreichung zusammen mit dem Wirkstoff.

26. Verfahren für die Zubereitung eines HCII-spezifischen katalytisch wirkenden Mittels, das einen nativen Zucker (z.B. einen Uronsäurerest) als nichtreduzierende endständige Gruppe und einen 2,5-Anhydromannitolrest als nichtreduzierende endständige Gruppe aufweist, wobei das Verfahren Folgendes umfasst:
(i) Depolymerisieren des unfraktionierten Heparins
(ii) Oxidieren des dabei erhaltenen Heparins niedriger Molmasse und
(iii) Reduzieren des oxidierten Heparins niedriger Molmasse,
wobei das Verfahren gegebenenfalls die zusätzliche Reinigung oder andere Verfahren zur Herstellung des HCII-spezifischen katalytisch wirkenden Mittels umfasst.

27. Verfahren nach Anspruch 26, bei dem das unfraktionierte Heparin mit salpetriger Säure depolymerisiert wird und/oder das dabei erhaltenen Heparin niedriger Molmasse mit Natriumperiodat oxidiert wird und/oder das oxidierte Heparin niedriger Molmasse mit Natriumborhydrid reduziert wird.

28. Verwendung eines katalytisch wirkendes Mittels nach einem der Ansprüche 1 bis 10, einer Zubereitung nach Anspruch 18 oder Anspruch 21, eines Kohlenhydrats nach einem der Ansprüche 19 bis 21 oder eines Produkts nach Anspruch 22 oder Anspruch 23 oder eines HCII-spezifischen katalytisch wirkenden Mittels, das unter Zuhilfenahme des Verfahrens nach Anspruch 26 oder Anspruch 27 erhältlich ist, für die Herstellung eines Medikaments für die Behandlung einer Herz-Kreislauferkrankung, wobei die Verwendung gegebenenfalls des Weiteren die Verwendung eines Fluidphasenthrombin-Inhibitor für die Herstellung des Medikaments umfasst.

29. Verwendung eines Heparinderivats, dessen nichsulfatierter Uronsäurerest in Form eines offenen Rings vorliegt und das im Wesentlichen von Aldehydguppen frei ist, für die Herstellung eines Medikaments für die Behandlung von Thrombose durch vorbeugende Behandlung oder Therapie.

30. Verwendung eines katalytisch wirkendes Mittel nach einem der Ansprüche 1 bis 10, einer Zubereitung nach Anspruch 18 oder Anspruch 21, eines Kohlenhydrats nach einem der Ansprüche 19 bis 21 oder eines Produkts nach Anspruch 22 oder Anspruch 23 oder eines HCII-spezifischen katalytisch wirkenden Mittels, das unter Zuhilfenahme des Verfahrens nach Anspruch 26 oder Anspruch 27 erhältlich ist, oder eines Heparinderivats, wie es in Anspruch 29 definiert ist, für die Herstellung eines Medikaments für
(i) das Erzeugen einer Antikoagulierwirkung, zu der sowohl ein durch HCII und ein durch AT III vermittelter Mechanismus sowie ein Mechanismus beiträgt, der sowohl von HCII als auch von AT III unabhängig ist, oder
(ii) das Unterbrechen der Bindungswirkung des Faktors Xa an die Plättchenoberfläche.

## Revendications

1. Un agent catalytique de cofacteur II spécifique d'héparine (CHII-spécifique) qui inactive la thrombine fixée par caillot, **caractérisé par** :
(i) une activité spécifique contre la thrombine (facteur IIa) d'environ 2,0 à 5,0 unités/mg dans un essai anti-facteur IIa ; et
(ii) une activité spécifique contre le facteur Xa d'environ 0,2 à 1,5 unités/mg dans un essai anti-facteur Xa ; et
(iii) une solubilité dans un milieu aqueux variant entre 150 et 1 000 mg/ml.

2. Un agent de la revendication 1 qui est **caractérisé par** une ou les deux particularités suivantes:
(i) il possède une affinité d'antithrombine III de moins de 3 % environ de celle de l'héparine non fractionnée ;
(ii) c'est un hydrate de carbone poly anionique de 10 à 28 unités de monosaccharide

3. Un agent de revendication 1 ou revendication 2, qui est une préparation d'héparine possédant un poids moléculaire de 3 000 à environ 8 000 daltons.

4. Un agent de revendication 3, dans lequel la préparation d'héparine:
(i) consiste essentiellement en la troisième plus basse fraction de poids moléculaire isolée de l'héparine non fractionnée ; ou
(ii) est produite de l'héparine non fractionnée en abaissant chimiquement la portée de poids moléculaire de 3 000 à environ 8 000 daltons.

5. Un agent de revendication 3 ou revendication 4, dans lequel la préparation d'héparine :
(i) possède un poids moléculaire moyen d'environ 8 000 daltons ;
(ii) possède un poids moléculaire moyen d'environ 5 000 daltons ; ou
(iii) possède un poids moléculaire moyen d'environ 3 000 daltons.

6. Un agent des revendications de 3 à 5, dans lequel la préparation d'héparine est produite à partir d'héparine non fractionnée en abaissant chimiquement la portée de poids moléculaire de entre 3 000 à 8 000 daltons et qui possède une activité d'antithrombine III réduite en traitant les groupes d'alcool vicinal présents dans la préparation d'héparine avec un agent oxydant suivi d'un réducteur et, en option, dans lequel l'agent oxydant est sélectionné de périodate de sodium, sulfoxide de diméthyle, d'anhydrates d'acide, de tétra acétate de plomb et d'acide ascorbique et le réducteur est sélectionné de borohydrure de sodium, d'hydrure d'alumine de lithium, d'hydrures de métal et d'hydrazine.

7. Un agent des revendications de 3 à 6, dans lequel la préparation d'héparine consiste essentiellement en matériau sans affinité pour ATIII, le dit matériau ayant été préparé par purification d'affinité de phase solide dans laquelle ATIII est immobilisé et l'effluent retenu.

8. Un agent de revendication 1, qui possède
(a) la formule : 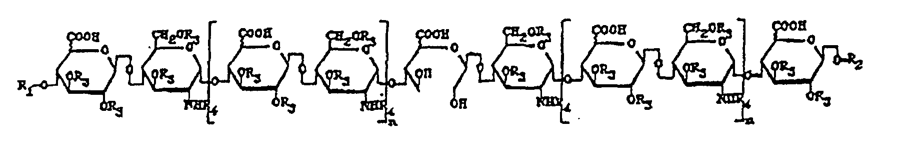 dans laquelle:
chaque n est indépendamment un entier de 0 à 14, à condition que le nombre total de résidus de monosaccharide soit entre 10 à 28;
R₁ est sélectionné du groupe consistant en H, de résidu d'acide de D-glucosamine, de résidu d'acide D-glucuronique, de résidu d'acide L-iduronique ; R₂ est un membre sélectionné du groupe consistant en H, de résidu d'acide de D-glucosamine, de résidu d'acide D-glucuronique, de résidu d'acide L-iduronique et d'anhydromannitol ;
R₃ est un membre sélectionné du groupe consistant en H et SO₃ ; et
R₄ est un membre sélectionné du groupe consistant en H et SO₃ et CH₃CO ;
dans lequel :
l'agent catalytique HCII-spécifique possède un poids moléculaire variant entre 3 000 à environ 8 000 daltons ; ou
(b) la formule: 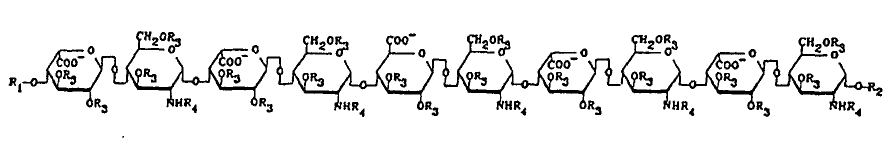
dans laquelle :
R₁ et R₂ sont des membres indépendamment sélectionnés du groupe consistant de H, de résidu d'acide de D-glucosamine, de résidu d'acide D-glucuronique, de résidu d'acide L-iduronique ;
R₃ est un membre sélectionné du groupe consistant de H et SO₃ ; et
R₄ est un membre sélectionné du groupe consistant de H et SO₃ et CH₃CO ;
dans lequel :
l'agent catalytique HCII-spécifique possède un poids moléculaire variant entre 3 000 à environ 8 000 daltons.

9. Un agent des revendications de 1 à 8, qui est **caractérisé par** une ou les deux particularités suivantes : (i) une activité spécifique contre la thrombine (facteur IIa) d'au moins environ de 3,0 à environ 4,0 unités/mg dans une activité anti-facteur IIa ; (ii) une activité spécifique d'environ 1,0 unité/mg dans un essai anti-facteur Xa.

10. Un agent des revendications de 1 à 9 dans lequel :
(i) l'agent est combiné avec un additif d'héparine ; ou
(ii) l'agent est combiné avec un additif d'héparine et le rapport de poids de l'agent catalytique HCII-spécifique à l'additif d'héparine est supérieur à 2 à 1, dans lequel, en option, l'additif d'héparine est de l'héparine non fractionnée ou est la troisième plus basse fraction de poids moléculaire isolée de l'héparine non fractionnée.

11. Une composition pharmaceutique pour inhiber la thrombogenèse chez un patient, la composition comprenant:
(i) d'environ 90 à environ 99,9 pour cent de poids d'un agent catalytique HCII-spécifique qui inactive la thrombine fixée par fibrine, l'agent catalytique HCII-spécifique ayant seulement une affinité minimale pour l'antithrombine III (ATIII) ;
(ii) de environ 0,1 à environ 10 pour cent de poids d'un agent catalytique ATIII qui inactive la thrombine de phase fluide,
dans laquelle :
l'activité catalytique HCII de la dite composition est d'environ 2 à environ 5 unités/mg.

12. Une composition de la revendication 11, dans laquelle l'agent catalytique HCII-spécifique est
(i) un hydrate de carbone poly anionique de 10 à 24 unités de monosaccharide ; ou
(ii) un hydrate de carbone poly anionique de 10 à 24 unités de monosaccharide et une préparation d'héparine ayant un poids moléculaire de entre 3 000 et 8 000 daltons environ.

13. Une composition de la revendication 12, dans laquelle la préparation d'héparine est définie en plus par les particularités spécifiques citées dans une ou plusieurs des revendications 4, 5, 6, 7, 8 et 9.

14. Une composition de la revendication 12 ou de la revendication 13, dans laquelle l'agent catalytique ATIII est de l'héparine non fractionnée, ou est la troisième plus basse fraction de poids moléculaire isolée de l'héparine non fractionnée.

15. Un produit comprenant:
(i) un agent qui inactive la thrombine fixée par caillot, le dit agent ayant une affinité minimale pour l'antithrombine III (ATIII) et une activité spécifique contre la thrombine (facteur IIa) d'environ 2,0 à environ 5,0 unités/mg dans un essai anti-facteur IIa; et
(ii) un agent catalytique ATIII qui inactive la thrombine de phase fluide, comme une préparation combinée pour une utilisation simultanée, séparée ou séquentielle pour inhiber la thrombine fixée par caillot et la thrombine de phase fluide chez un patient.

16. Un produit de la revendication 15, dans lequel l'agent d'inactivation de thrombine est
(i) un agent catalytique HCII-spécifique selon la définition d'une ou plusieurs des revendications de 1 à 8, ou
(ii) un hydrate de carbone poly anionique selon la définition des particularités spécifiques citées dans la revendication 12(i) ou (ii), et en plus ou par ailleurs possède une activité spécifique contre la thrombine (facteur IIa) d'au moins environ 3,0 à environ 4,0 unités/mg dans une activité anti-facteur IIa.

17. Un produit de la revendication 15 ou la revendication 16, dans lequel l'agent catalytique ATIII est de l'héparine non fractionnée, ou est la troisième plus basse fraction de poids isolée de l'héparine non fractionnée.

18. Une préparation d'héparine de poids moléculaire faible **caractérisée par** :
(i) un poids moléculaire d'entre 3 000 et 8 000 daltons environ (± 1 000);
(ii) une activité spécifique contre la thrombine (facteur IIa) d'environ 2,0 à environ 5,0 unités/mg dans un essai anti-facteur IIa;
(iii) une activité spécifique contre le facteur Xa d'environ 0,2 à 1,5 unités/mg dans un essai anti-facteur Xa;
(iv) une solubilité dans un milieu aqueux variant entre environ 150 à environ 1 000 mg/ml ; et
(v) un sucre natif (par ex. un résidu d'acide uronique comme terminal non réducteur et un résidu de 2,5-anhydromannitol comme terminal réducteur.

19. Un hydrate de carbone poly anionique capable d'inactiver sélectivement la thrombine fixée par caillot en faveur de la thrombine libre, qu'on obtient de l'héparine, ayant ses résidus d'acide uronique non sulfaté en forme de cercle ouvert et substantiellement libre de groupes d'aldéhyde.

20. Un hydrate de carbone de la revendication 19, qui possède un sucre natif (par ex. un résidu d'acide uronique comme terminal non réducteur et un résidu de 2,5-anhydromannitol comme terminal réducteur et/ou dans lequel 30 % des résidus d'acide uronique sont en forme de cercle ouvert.

21. Une préparation de la revendication 18 ou un hydrate de carbone de la revendication 19 ou la revendication 20, qui est **caractérisé en** plus par une, deux ou trois des particularités de la revendication 1 et/ou par les particularités spécifiques citées dans une ou plusieurs des revendications de 2 à 9.

22. Un produit capable d'inhiber sélectivement la thrombine fixée par caillot qu'on obtient par :
(i) la dépolymérisation de l'héparine non fractionnée en utilisant de l'acide nitreux ;
(ii) l'isolation et le groupage des fractions dépolymérisées ayant des poids moléculaires variant entre 3 000 et 8 000 (± 1 000) pour fournir une fraction de poids moléculaire faible ;
(iii) le clivage de la fraction de poids moléculaire faible en utilisant du périodate;
(iv) la réduction de la fraction clivée en utilisant du borohydride de sodium,
dans laquelle en option une colonne d'affinité antithrombine III est utilisée pour réduire l'affinité de l'héparine dépolymérisée, et la fraction de poids moléculaire faible possède une activité spécifique d'environ 2 à environ 5 unités/mg d'anti-thrombine et moins de 1,5 unités/mg d'anti-facteur Xa.

23. Un produit qu'on obtient par:
(i) la dépolymérisation de l'héparine non fractionnée normale par une dépolymérisation d'acide nitreux ;
(ii) l'oxydation de l'héparine dépolymérisée avec du périodate de sodium dans un milieu aqueux pendant 24 h à 4° C, et l'arrêt de la réaction d'oxydation par l'addition d'un surplus d'éthylène glycol suivie par une dialyse extensive contre de l'eau distillée en utilisant des tubes de dialyse avec un blocage de 500 MW ;
(iii) la réduction du produit oxydé par l'addition de borohydride de sodium et, lorsque le mélange de réaction a reposé pendant 25 h à 23° C, l'ajustement du pH du mélange de réaction à 3,0 avec HCI pour détruire le surplus de borohydride puis une augmentation rapide du pH à 7,0 par l'addition de NaOH ;
(iv) une dialyse extensive du produit résultant contre de l'eau distillée ; et
(v) la récupération du produit par lyophilisation ; et en option
(vi) le passage du produit sur une colonne d'affinité d'antithrombine III, le produit obtenu ayant les propriétés suivantes :
• un poids moléculaire d'entre 3 000 et 8 000 (± 1 000)
• une activité spécifique d'environ 2 à environ 5 unités/mg d'antifacteur IIa
• une activité spécifique de moins de 1,5 unités/mg d'anti-thrombine IIa

24. Un agent catalytique pour toutes les revendications de 1 à 10, une préparation de la revendication 18 ou la revendication 21, un hydrate de carbone de toutes les revendications de 19 à 21, ou un produit de la revendication 22 ou la revendication 23 pour une utilisation comme produit pharmaceutique.

25. Un produit pharmaceutique comprenant comme agent actif un agent catalytique de toutes les revendications de 1 à 10, une préparation de la revendication 18 ou la revendication 21, un hydrate de carbone de toutes les revendications de 19 à 21, ou un produit de la revendication 22 ou la revendication 23 et, en option, un excipient pharmaceutique acceptable, diluant ou porteur, le produit pharmaceutique comprenant en plus en option un inhibiteur de thrombine de phase fluide pour une administration simultanée, séparée ou séquentielle avec le dit agent actif.

26. Un procédé pour la préparation d'un agent catalytique HCII-spécifique ayant un sucre natif (par ex. un résidu d'acide uronique) comme terminal non réducteur et un résidu de 2,5-anhydromannitol comme terminal non réducteur, le dit procédé comprenant :
(i) une dépolymérisation de l'héparine non fractionnée ;
(ii) une oxydation de l'héparine de poids moléculaire faible résultante ; et
(iii) une réduction de l'héparine oxydée de poids moléculaire faible ;
dans lequel le dit procédé inclut en option une purification supplémentaire ou d'autres procédures pour obtenir le dit agent catalytique HCII-spécifique.

27. Un procédé de la revendication 26 dans lequel l'héparine non fractionnée est dépolymérisée en utilisant de l'acide nitreux et/ou l'héparine de poids moléculaire faible résultant est oxydée en utilisant du périodate de sodium et/ou l'héparine de poids moléculaire faible oxydée est réduite en utilisant du borohydride de sodium.

28. L'utilisation d'un agent catalytique de toutes les revendications de 1 à 10, une préparation de la revendication 18 ou la revendication 21, un hydrate de carbone de toutes les revendications de 19 à 21, ou un produit de la revendication 22 ou la revendication 23 ou un agent catalytique HCII-spécifique qu'on obtient en utilisant le procédé de la revendication 26 ou la revendication 27 pour la fabrication d'un médicament pour le traitement des maladies cardiovasculaires, l'utilisation en option incluant en plus l'utilisation d'un agent inhibiteur de thrombine de phase fluide pour la fabrication du médicament.

29. L'utilisation d'un dérivé d'héparine qui possède des résidus d'acide uronique non sulfaté en forme de cercle ouvert et qui est substantiellement libre de groupes d'aldéhyde pour la fabrication d'un médicament pour le traitement de la thrombose par prophylaxie ou thérapie.

30. L'utilisation d'un agent catalytique de toutes les revendications de 1 à 10, une préparation de la revendication 18 ou la revendication 21, un hydrate de carbone de toutes les revendications de 19 à 21, ou un produit de la revendication 22 ou la revendication 23 ou un agent catalytique HCII-spécifique qu'on obtient en utilisant le procédé de la revendication 26 ou la revendication 27 ou un dérivé d'héparine selon la définition de la revendication 29, pour la fabrication d'un médicament pour:
(i) la production d'un effet anticoagulant auquel contribuent les deux mécanismes de médiat HCII et ATIII et par un mécanisme indépendant des deux HCII et ATIII; ou
(ii) l'intervention avec l'effet de liaison du facteur Xa à la surface de la plaquette.
